# EUROPEAN PATENT APPLICATION

(11) **EP 4 184 392 A1**
(43) Date of publication of application: **24.05.2023**
(21) Application number: 21842420.8
(22) Date of filing: 09.07.2021
(51) Int. Cl.: G06N 3/04, G06N 3/10, G06F 17/10

(54) **NEURAL NETWORK PROCESSING DEVICE, INFORMATION PROCESSING DEVICE, INFORMATION PROCESSING SYSTEM, ELECTRONIC INSTRUMENT, NEURAL NETWORK PROCESSING METHOD, AND PROGRAM**

(30) Priority: 17.07.2020 JP 2020123312
(71) Applicant: Sony Group Corporation, Minato-Ku, Tokyo, 108-0075 (JP)
(72) Inventor: TAKAGI, Satoshi, Tokyo 108-0075 (JP)
(74) Representative: MFG Patentanwälte Meyer-Wildhagen Meggle-Freund Gerhard PartG mbB
(86) International application number: PCT/JP2021/025989
(87) International publication number: WO 2022/014500

(57) **Abstract**

A memory amount is reduced. A neural network processing apparatus includes: a decoding unit (41) that decodes a coefficient matrix encoded into a zero coefficient position table and a non-zero coefficient table, the zero coefficient position table indicating positions of first coefficients each having a zero value in the coefficient matrix by a first value and indicating positions of second coefficients each having a non-zero value in the coefficient matrix by a second value, the non-zero coefficient table holding the second coefficients in the coefficient matrix; and a product-sum circuit (116) that performs convolution processing on the coefficient matrix decoded by the decoding unit and a variable matrix. The decoding unit decodes the coefficient matrix by storing the second coefficients stored in the non-zero coefficient table at the positions on the zero coefficient position table indicated by the second value.

## Description

### Field

The present technology relates to a neural network processing apparatus, an information processing apparatus, an information processing system, an electronic device, a neural network processing method, and a program.

### Background

Conventionally, there have been known automatic discrimination techniques such as discrimination processing on audio data such as voice recognition, speaker discrimination, or environmental sound discrimination, and discrimination processing on image data such as image recognition.

As a method for performing such discrimination processing, a method using linear discrimination, a decision tree, a support vector machine, a neural network, or the like has been proposed (for example, see Non Patent Literature 1 and Non Patent Literature 2).

For example, in discrimination processing using a neural network, data is input to a discriminator having a neural network structure obtained in advance by learning, and the discriminator performs operations such as convolution processing, pooling processing, and register dual processing on the data. Then, an operation result is output from the discriminator as a discrimination result for the input data.

### Citation List

### Non Patent Literature

Non Patent Literature 1: Kevin P. Murphy, Machine Learning: A Probabilistic Perspective, The MIT Press, 2012
Non Patent Literature 2: I An Goodfellow, Yoshua Beng io, and Aaron Courville, Deep Learning, The MIT Press, 2016

### Summary

### Technical Problem

Meanwhile, in recent years, there has been a demand for mounting automatic discrimination-related functions on portable devices such as smartphones and headphones, and accordingly, there has also been a demand for reducing a memory amount required when discrimination processing using a neural network or the like is performed.

The present disclosure proposes a neural network processing apparatus, an information processing apparatus, an information processing system, an electronic device, a neural network processing method, and a program capable of reducing a memory amount.

### Solution to Problem

A neural network processing apparatus according to the present disclosure includes: a decoding unit that decodes a first coefficient matrix encoded into a first zero coefficient position table and a first non-zero coefficient table, the first zero coefficient position table indicating positions of first coefficients each having a zero value in the first coefficient matrix by a first value and indicating positions of second coefficients each having a non-zero value in the first coefficient matrix by a second value, the first non-zero coefficient table holding the second coefficients in the first coefficient matrix; and a product-sum circuit that performs convolution processing on the first coefficient matrix decoded by the decoding unit and a first variable matrix, wherein the decoding unit decodes the first coefficient matrix by storing the second coefficients stored in the first non-zero coefficient table at the positions on the first zero coefficient position table indicated by the second value.

### Brief Description of Drawings

FIG. 1 is a diagram for explaining a neural network.
FIG. 2 is a diagram for explaining convolution processing and pooling processing.
FIG. 3 is a diagram for explaining frame processing.
FIG. 4 is a diagram for explaining a discriminator having a neural network structure according to a first embodiment.
FIG. 5 is a diagram for explaining a discriminator having a neural network structure according to the first embodiment.
FIG. 6 is a diagram for explaining compression-encoding filter coefficients according to the first embodiment.
FIG. 7 is a diagram illustrating a configuration example of a neural network processing apparatus according to the first embodiment.
FIG. 8 is a flowchart for explaining discrimination processing according to the first embodiment.
FIG. 9 is a flowchart illustrating an example of processing for decoding sparsely represented coefficients according to the first embodiment.
FIG. 10 is a diagram for explaining a specific example of decoding processing executed by a decoding unit according to the first embodiment.
FIG. 11 is a diagram for explaining movements of a phase pointer and a non-zero coefficient queue pointer in the specific example illustrated in FIG. 10.
FIG. 12 is a flowchart illustrating an example of processing for decoding sparsely represented coefficients according to a second embodiment.
FIG. 13 is a diagram for explaining a specific example of decoding processing executed by a decoding unit according to the second embodiment.
FIG. 14 is a diagram for explaining a priority encoder according to a third embodiment.
FIG. 15 is a flowchart illustrating an example of processing for decoding sparsely represented coefficients according to the third embodiment.
FIG. 16 is a diagram for explaining a specific example of decoding processing executed by a decoding unit according to the third embodiment.
FIG. 17 is a diagram for explaining movements of a phase pointer, a non-zero coefficient queue pointer, and a variable queue pointer in the specific example illustrated in FIG. 16.
FIG. 18 is a flowchart illustrating an example of processing for decoding sparsely represented coefficients according to a fourth embodiment.
FIG. 19 is a diagram for explaining a specific example of decoding processing executed by a decoding unit according to the fourth embodiment.
FIG. 20 is a diagram for explaining movements of a phase pointer, a non-zero coefficient queue pointer, and a variable queue pointer in the specific example illustrated in FIG. 19 (part 1).
FIG. 21 is a diagram for explaining movements of a phase pointer, a non-zero coefficient queue pointer, and a variable queue pointer in the specific example illustrated in FIG. 19 (part 2).
FIG. 22 is a diagram for explaining writing a product-sum result into a memory according to a comparative example.
FIG. 23 is a circuit diagram illustrating a schematic configuration example of an encoding unit according to a fifth embodiment.
FIG. 24 is a circuit diagram illustrating a schematic configuration example of an encoding unit according to a sixth embodiment.
FIG. 25 is a diagram for explaining an operation example of the encoding unit illustrated in FIG. 24.
FIG. 26 is a schematic diagram for explaining a first modification according to the sixth embodiment.
FIG. 27 is a schematic diagram for explaining a third modification in which the first and second modifications are combined according to the sixth embodiment.
FIG. 28 is a diagram for explaining a first application example.
FIG. 29 is a diagram for explaining a modification of the first application example.
FIG. 30 is a block diagram illustrating a schematic configuration example of an information processing system according to a second application example.
FIG. 31 is a schematic diagram illustrating a schematic configuration example of an autonomous robot as one of electronic devices according to a third application example.
FIG. 32 is a schematic diagram illustrating a schematic configuration example of a television as one of electronic devices according to a fourth application example.
FIG. 33 is a diagram illustrating a configuration example of a computer according to the present technology.

Hereinafter, embodiments of the present disclosure will be described in detail with reference to the drawings. Note that, in the following embodiments, the same parts will be denoted by the same reference signs, and redundant description will be omitted.

In addition, the present disclosure will be described according to the following order of items.
0. About Present Technology
1. First Embodiment
1.1 Specific Example of Discrimination Processing by Discriminator Having Neural Network Structure
1.2 Specific Example of Regression Processing Using Predictor Having Neural Network Structure
1.3 Regarding Compression Encoding of Filter Coefficients
1.4 Regarding Reduction in Processing Amount through Data Compression
1.5 Regarding Learning Method
1.6 Configuration Example of Neural Network Processing Apparatus
1.7 Description of Discrimination Processing
1.8 Effect of Sparse Representation of Coefficient Matrix
1.9 Decoding Unit Suitable for Decoding Sparsely Represented Coefficients
1.9.1 Decoding Processing Executed by Decoding Unit
1.9.2 Specific Example of Decoding Processing
1.10 Action and Effect
2. Second Embodiment
2.1 Decoding Unit Suitable for Decoding Sparsely Represented Coefficients
2.1.1 Decoding Processing Executed by Decoding Unit
2.1.2 Specific Example of Decoding Processing
2.2 Action and Effect
3. Third Embodiment
3.1 Omission of Product-Sum Operation on Zero Coefficients
3.2 Decoding Unit Suitable for Decoding Sparsely Represented Coefficients
3.2.1 Decoding Processing Executed by Decoding Unit
3.2.2 Specific Example of Decoding Processing
3.3 Action and Effect
4. Fourth Embodiment
4.1 Decoding Unit Suitable for Decoding Sparsely Represented Coefficients
4.1.1 Decoding Processing Executed by Decoding Unit
4.1.2 Specific Example of Decoding Processing
4.2 Action and Effect
5. Fifth Embodiment
5.1 Comparative Example
5.2 Encoding Unit
5.3 Action and Effect
6. Sixth Embodiment
6.1 Encoding Unit
6.2 Operation Example
6.3 Action and Effect
6.4 Modifications
6.4.1 First Modification
6.4.2 Second Modification
6.4.3 Third Modification
7. Application Example of Present Technology
7.1 First Application Example
7.2 Second Application Example
7.3 Third Application Example
7.4 Fourth Application Example
8. Configuration Example of Computer

### 0. About Present Technology

According to the present technology, in a case where discrimination processing or regression processing is implemented using a neural network, when arithmetic processing such as convolution processing is performed on input data in units of frames, a memory amount can be reduced by making processing boundaries of arithmetic processing between a current frame and a past frame coincident with each other.

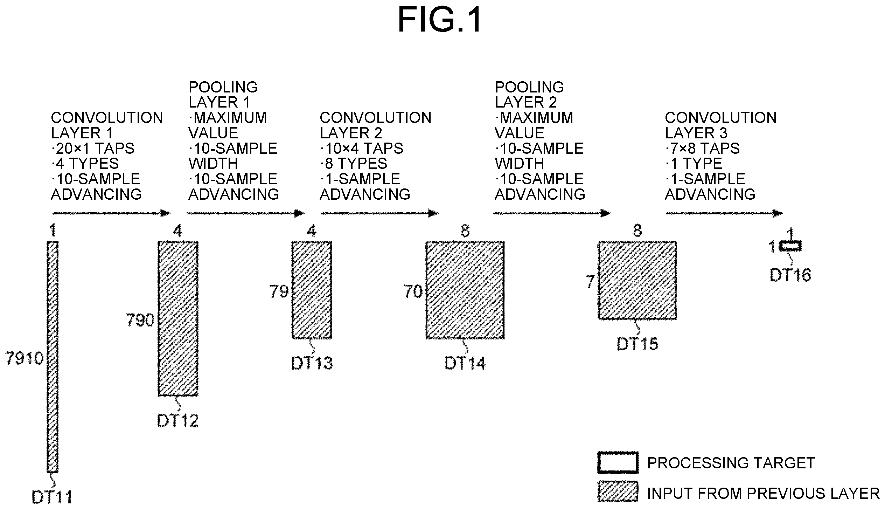

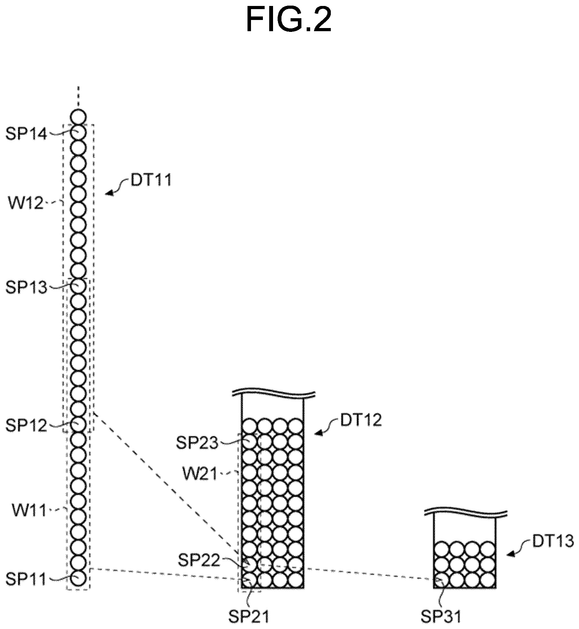

First, a discriminator performing discrimination processing on audio data for a certain time section input thereto using a neural network will be described with reference to FIGS. 1 and 2. Note that, in FIGS. 1 and 2, parts corresponding to each other are denoted by the same reference signs, and the description thereof will be appropriately omitted.

FIG. 1 illustrates a configuration of a discriminator having a neural network structure for performing discrimination processing on input audio data and outputting a discrimination result.

In FIG. 1, each quadrangle represents a shape of data. In particular, in each drawing for the data, the vertical direction indicates a time direction, and the horizontal direction indicates the number of dimensions. In FIG. 1, a horizontal arrow represents conversion of data. Here, each data shape is determined depending on the number of dimensions of data and the number of pieces of data (the number of data samples) in each dimension.

For example, in FIG. 1, input data DT11 in a leftmost quadrangle is audio data input to the discriminator having the neural network structure.

Here, in the drawing for the input data DT11, the vertical direction indicates a time direction, and the horizontal direction indicates the number of dimensions. In particular, in the drawing for the input data DT11, the downward direction is a direction indicating a latest time (a future direction).

The input data DT11 is audio data for one channel corresponding to a time section for 7910 samples. In other words, the input data DT11 is audio data for one channel including sample values of 7910 samples (time samples).

Therefore, here, the channel of the audio data corresponds to the number of dimensions of the input data DT11, and the shape of the input data DT11 is defined as 1 dimension × 7910 samples. In addition, in the drawing for the input data DT11, an upper sample is a further past sample.

In the discriminator illustrated in FIG. 1, data conversion is performed as arithmetic processing in each of five layers (levels) with the input data DT11 as an input, and discrimination result data DT16 in a rightmost quadrangle in FIG. 1 is obtained as an output. In other words, the discrimination result data DT16 is calculated from the input data DT11 by performing data conversion five times in total from a convolution layer 1 to a convolution layer 3.

The discrimination result data DT16 is 1×1 (1 dimension × 1 sample) data indicating a discrimination result obtained by the discriminator. More specifically, the discrimination result data DT16 is, for example, data indicating a probability that a voice based on the input data DT11 is a predetermined specific voice.

In the discriminator illustrated in FIG. 1, first, filtering processing is performed on the input data DT11 in the convolution layer 1 for each of four types of filters. In other words, for each of the four types of filters, convolution processing is performed on filter coefficients configuring the filter and the input data DT11.

Each of the filter used in the convolution processing performed in the convolution layer 1 is a 20×1 tap filter. In other words, the number of taps for each filter, that is, the number of filter coefficients, is 20×1. In addition, as the convolution processing in each filter, filtering processing is performed in a 10-sample advancing manner.

By performing such convolution processing in the convolution layer 1, the input data DT11 is converted into intermediate data DT12.

The intermediate data DT12 is data of 4 dimensions × 790 samples. That is, the intermediate data DT12 includes data of four dimensions arranged in the horizontal direction of the drawing therefor, and the data of each dimension includes 790 samples, in other words, 790 pieces of data arranged in the vertical direction in the drawing therefor.

Subsequently, in a pooling layer 1, which is a second layer, for the intermediate data DT12 obtained in the convolution layer 1, a data region having a 10-sample width is targeted, and processing of picking (extracting) a maximum value from the data region is performed in a 10-sample advancing manner.

In other words, in the pooling layer 1, pooling processing for extracting a maximum value for a data region having a 10-sample width is performed on the intermediate data DT12 in a 10-sample advancing manner.

By performing such pooling processing, the intermediate data DT12 is converted into intermediate data DT13. Here, the intermediate data DT13 is four-dimensional data, and the data of each dimension includes 79 samples (pieces of data).

Here, the convolution processing in the convolution layer 1 and the pooling processing in the pooling layer 1 will be described with reference to FIG. 2.

For example, as illustrated on the left side of FIG. 2, in the convolution processing performed by one filter in the convolution layer 1, 20 samples including a sample SP11, a sample SP12, and a sample SP13 in the input data DT11 and filter coefficients are convolved.

That is, convolution processing is performed to convolve the 20 samples from the sample SP11 to the sample SP13 arranged consecutively in the time direction in a data region W11 and filter coefficients configuring the filter, respectively. Then, a value obtained by the convolution processing for the data region W11 is set as a sample value of a sample SP21 on the lowermost and leftmost side in the drawing for the intermediate data DT12.

The data region W11 is a region of 1 dimension × 20 samples because the filter used for the convolution processing in the convolution layer 1 is a 20×1 tap filter.

In addition, since the sample advancing number of the convolution processing in the convolution layer 1 is 10, that is, since the convolution processing is performed in a 10-sample advancing manner, for convolution processing to be performed after the convolution processing for the data region W11, a data region W12 is set as a region to be processed.

The data region W12 is a region including 20 samples arranged consecutively with the sample SP12 as a head thereof, the sample SP12 being disposed 10 samples before the sample SP11, which is a head of the data region W11. That is, the data region W12 is a region shifting by 10 samples from the data region W11 in the past direction. Here, the data region W12 is a region from the sample SP12 to a sample SP14.

In the convolution processing for the data region W12, the 20 samples from the sample SP12 to the sample SP14 in the input data DT11 and filter coefficients are convolved, respectively, similarly to that for the data region W11. Then, a value obtained by the convolution processing for the data region W12 is set as a sample value of a sample SP22 on the second-lowermost and leftmost side in the drawing for the intermediate data DT12.

In the convolution layer 1, the intermediate data DT12 is generated by repeatedly perform convolution processing while shifting by 10 samples for a data region to be processed in each of the four filters. The data of the four dimensions in the intermediate data DT12 is data obtained through the convolution processing performed by the four filters, respectively, in the convolution layer 1.

In addition, in the pooling layer 1, processing of extracting a maximum value is performed for a data region W21 including 10 samples arranged consecutively in the vertical direction from the sample SP21 to a sample SP23 of the first dimension.

That is, the maximum value among sample values of the 10 samples in the data region W21 is set as a sample value of a sample SP31 on the lowermost and leftmost side in the drawing for the intermediate data DT13.

After the processing of extracting a maximum value is performed for the data region W21, a region including 10 samples arranged consecutively with a sample disposed 10 samples before the sample SP21, which is a head of the data region W21, as a head thereof is set as a next data region. That is, since the sample advancing number of the pooling processing in the pooling layer 1 is 10, a data region to be processed shifts by 10 samples.

Then, processing of extracting a maximum value for the new data region obtained in this manner is performed, and thereafter, similar processing is performed. As a result, the intermediate data DT12 is converted into intermediate data DT13.

Returning to the description of FIG. 1, when the intermediate data DT13 is obtained through the pooling processing in the pooling layer 1, in the convolution layer 2, which is a third layer, convolution processing similar to that in the convolution layer 1 is performed using eight types of filters.

That is, in the convolution layer 2, eight different filters each having 10×4 taps, that is, each being a 10×4 tap filter, are used, and convolution processing (filtering processing) is performed in a 1-sample advancing manner for each of the filters.

As a result, the intermediate data DT13 is converted into intermediate data DT14 of 8 dimensions × 70 samples. That is, the intermediate data DT14 is eight-dimensional data, and the data of each dimension includes 70 samples (pieces of data).

In the pooling layer 2, which is a fourth layer, pooling processing for extracting a maximum value for a data region having a 10-sample width is performed on the intermediate data DT14 in a 10-sample advancing manner. As a result, the intermediate data DT14 is converted into intermediate data DT15 of 8 dimensions × 7 samples.

Further, in the convolution layer 3, which is a fifth layer, convolution processing similar to that in the convolution layer 1 is performed using one type of filter.

That is, in the convolution layer 3, convolution processing (filtering processing) is performed in a 1-sample advancing manner using one 7×8 tap filter.

As a result, the intermediate data DT15 is converted into discrimination result data DT16 of 1 dimension × 1 sample as an output of the discriminator, and the discrimination result data DT16 obtained in this manner is output as a result of the discrimination processing on the input data DT11 (a discrimination result).

The arithmetic processing in the five layers from the convolution layer 1 to the convolution layer 3 as described above is performed by the discriminator having a neural network structure.

However, in the layers of the discriminator having such a neural network structure, it is necessary to perform arithmetic processing in a current layer for all the data obtained by arithmetic processing in an immediately preceding layer, and thus, a processing amount of the arithmetic processing and a memory amount of the memory required for the arithmetic processing increase.

Here, it is assumed that frame processing is applied to processing by the discriminator having the neural network structure illustrated in FIG. 1.

The frame processing refers to processing performed on input data in units of frames, that is, processing performed with a position of a head or a tail of a frame of the input data as a start position of the processing. The frame processing is mainly applied for the purpose of reducing a memory amount for arithmetic processing or adjusting an output calculating frequency of the neural network, for example, performing one output for 1024 samples of input data.

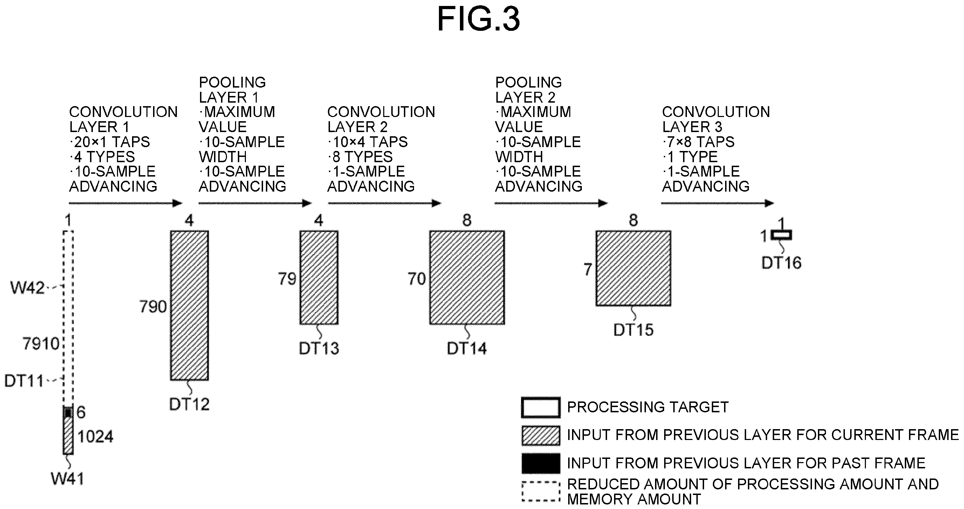

For example, as illustrated in FIG. 3, it is assumed that frame processing is applied to the processing performed by the discriminator with the same neural network configuration as that in FIG. 1. That is, it is assumed that frame processing for calculating discrimination result data DT16 is performed on 1024 samples, which correspond to one frame of input data DT11, at a frequency of one time. Note that parts in FIG. 3 corresponding to those in FIG. 1 are denoted by the same reference signs, and the description thereof will be appropriately omitted.

In FIG. 3, it is assumed that the temporally latest frame in the input data DT11 is a current frame. The current frame is set as a section including 1024 samples arranged consecutively on the lowest side in the drawing for the input data DT11, and, a portion corresponding to the current frame in the input data DT11 is hatched in FIG. 3.

When one piece of discrimination result data DT16 is to be calculated for the current frame of the input data DT11, a convolution layer 1 performs convolution processing for a data region W41 as a processing target.

The data region W41 is a section including a total of 1030 samples including 1024 samples constituting the current frame and last 6 samples in a temporally immediately preceding frame of the current frame (hereinafter also referred to as an immediately preceding frame).

At this point, if convolution for data (a section) in the input data DT11 other than data to be processed in the current frame can be performed in the past frames, arithmetic processing for a data region W42 drawn by a dotted line is unnecessary, thereby making it possible to reduce a memory amount as much as the arithmetic processing therefor.

However, in the configuration of the neural network illustrated in FIG. 3, it is not possible to reduce a processing amount and a memory amount. This is because a processing boundary of the current frame does not coincide with that of the immediately preceding frame.

Here, the processing boundary of the frame is, for example, a sample position of data at which the arithmetic processing for the frame is to be started, that is, a position of a head or a tail of the frame, or a sample position of data at which next arithmetic processing is to be started after the arithmetic processing for the frame is terminated.

For example, a processing boundary of the current frame is a sample position of the input data DT11 at which next arithmetic processing is to be started after arithmetic processing for the current frame is terminated. If this sample position does not coincide with a sample position of the input data DT11 where arithmetic processing for the immediately preceding frame adjacent to the current frame is to be started, that is, a tail (last) sample position of the immediately preceding frame that is a processing boundary of the immediately preceding frame, it is not possible to reduce an amount of arithmetic processing and a memory amount.

Specifically, for example, a sample located nth from the lowermost sample in the input data DT11 (first to nth samples) of FIG. 3 is defined as an nth sample. Therefore, for example, the lowermost sample in the drawing for the input data DT11, that is, the sample at the latest time, is a first sample.

In this case, in the convolution layer 1, first, convolution processing is performed by a 20×1 tap filter on first to 20th samples of the input data DT11 in the current frame.

In addition, since the advancing number (sample advancing number) in the convolution layer 1 is 10 samples, next, convolution processing is performed by the 20×1 tap filter on 11th to 30th samples.

Thereafter, similar convolution processing is repeatedly performed, and finally, convolution processing is performed by the 20×1 tap filter on 1011th to 1030th samples of the input data DT11 in the current frame.

Conventionally, a data region to be subjected to convolution processing is a data region W41 in the input data DT11, and in the current frame, the convolution processing is performed with the data region W41 as a processing target.

Further, when convolution processing is performed on 1011th to 1030th samples, 1021st to 1040th samples are to be subjected to next convolution processing. Thus, a processing boundary of the convolution processing in the current frame is the 1021st sample.

In this case, in the immediately preceding frame immediately before the current frame, convolution processing needs to be performed on the 1021st to 1040th samples.

However, such convolution processing is not actually performed. In a case where frame processing is performed, that is, in a case where processing is performed in units of frames, in the immediately preceding frame, convolution processing is performed from the 1025th sample that is a frame boundary of the current frame.

That is, a processing boundary of the immediately preceding frame is the 1025th sample, and the 1025th sample does not coincide with the 1021st sample that is a processing boundary of the current frame.

Therefore, convolution for data (a section) other than the data to be processed in the current frame described above, that is, convolution for from the 1021st sample here cannot be performed in the immediately preceding frame, and as a result, it is not possible to reduce a processing amount and a memory amount.

Moreover, in the example of FIG. 3, since the frame processing is applied, the convolution processing in the convolution layer 1 is different from that described with reference to FIG. 1. That is, convolution processing for a data region different from that in the example described with reference to FIG. 1 is performed.

In order to perform the same convolution processing as in the example described with reference to FIG. 1, it is eventually necessary to perform the processing described with reference to FIG. 1 on all the input data DT11 for every 1024 samples corresponding to one frame, and as a result, a large processing amount and a large memory amount are required.

Therefore, in the following embodiments, frame processing is applied to perform arithmetic processing on input data in units of frames, and a neural network is configured to have a structure in which processing boundaries of a current frame and a past frame coincide with each other in the frame processing, so that at least a memory amount can be reduced.

Specifically, a discriminator used in at least one layer, has a neural network structure in which a processing unit or a sample advancing number of arithmetic processing performed for a frame in the layer is a size or an advancing number determined based on a shape of input data.

In other words, in the discriminator having the neural network structure to which the following embodiments are applied, a processing unit, a sample advancing number, and a frame length (the number of samples for each frame) of arithmetic processing in each layer are determined so that processing boundaries of adjacent frames coincide with each other.

In addition, in a case where frame processing is performed by a discriminator having a neural network structure with a size (frame length) of each frame being determined in advance, a processing unit or a sample advancing number of the arithmetic processing performed in the layer may be determined in consideration of not only the shape of the input data but also the size (frame length) of each frame.

Here, the shape of data (data shape) is determined depending on the number of dimensions of data and the number of pieces of data (the number of data samples) in each dimension as described above.

For example, the input data DT11 illustrated in FIG. 1 is data including 7910 samples in one dimension, and thus, is data having a data shape of 1 dimension × 7910 samples. In addition, for example, the intermediate data DT12 illustrated in FIG. 1 is data of a data shape of 4 dimensions × 790 samples.

Note that the size of the processing unit of the arithmetic processing performed in the layer is a minimum unit of processing when the arithmetic processing for one frame is performed in the layer. That is, for example, the size of the processing unit is a size of each data region when the same processing is repeatedly performed multiple times while data regions to be processed in one layer are shifted from one another, that is, the number of samples included in each data region.

Specifically, as an example, in the convolution layer 1 described with reference to FIG. 1, the processing unit is a data region including 20 samples for which one-time convolution processing (filtering processing) is performed, and this data region is determined depending on the number of taps of the filter.

As another example, in the pooling layer 1 described with reference to FIG. 1, the processing unit is a data region including 10 samples from which a maximum value is to be extracted, and this data region is determined based on a sample width.

By performing discrimination processing using the discriminator having the neural network structure (configuration) in which the arithmetic processing is performed in the layer with the number of taps, the sample width (the size of the data region), and the sample advancing number determined with respect to the shape of the input data and the frame length as described above, processing boundaries of arithmetic processing in adjacent frames can be made coincident with each other. As a result, at least a memory amount of the memory temporarily required at the time of arithmetic processing can be reduced, thereby performing discrimination more efficiently.

According to the following embodiments, for example, either in a case where processing is sequentially performed in units of frames temporarily in the past direction from a current frame in a state where the input data DT11 including several frames has been input, or in a case where the input data DT11 is sequentially input in units of frames and processing is sequentially performed in units of frames temporarily in the future direction from a current frame, processing boundaries of the arithmetic processing in adjacent frames can be made coincident with each other. Furthermore, the start position of arithmetic processing for a frame may be a sample at a head of the frame or a sample at a tail of the frame.

Note that an example in which the number of taps, the sample width, and the sample advancing number are determined with respect to the shape of the input data and the frame length will be described here. However, the frame length of the data, that is, the number of samples (the number of pieces of data) constituting the frame may be determined with respect to the shape of the input data so that processing boundaries of arithmetic processing in adjacent frames coincide with each other. Even in such a case, processing boundaries of arithmetic processing in adjacent frames coincide with each other, thereby making it possible to perform discrimination more efficiently.

### 1. First Embodiment

Hereinafter, a first embodiment of the present technology will be described in detail with reference to the drawings.

### 1.1 Specific Example of Discrimination Processing by Discriminator Having Neural Network Structure

First, a specific example of discrimination processing performed by a discriminator having a neural network structure according to the present embodiment will be described.

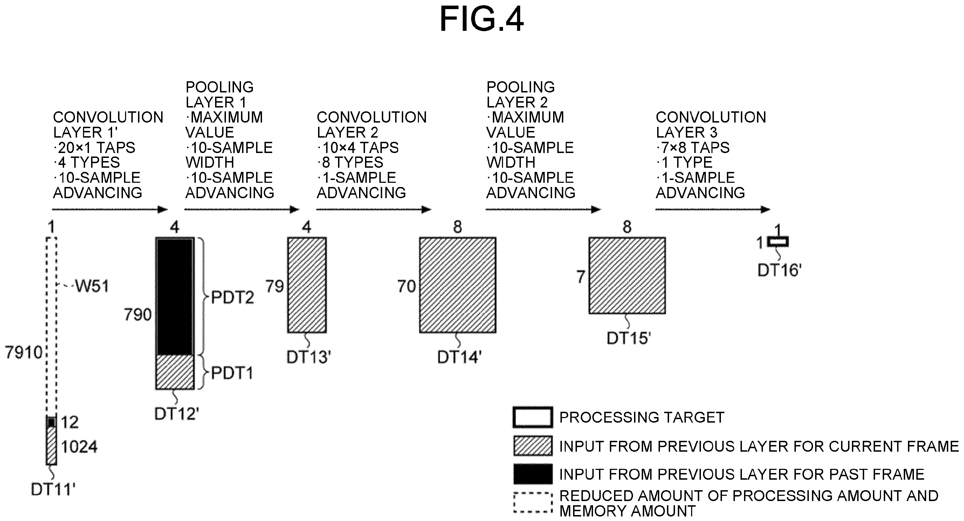

In the discriminator having the neural network structure according to the present embodiment, for example, processing is performed in each layer as illustrated in FIG. 4.

That is, in the example illustrated in FIG. 4, processing is performed in five layers sequentially as the discrimination processing by the discriminator, and discrimination result data DT16' is calculated as a final discrimination result from the one-dimensional (one-channel) input data DT11' that is audio data.

In particular, here, the processing is performed in the five layers sequentially in units of frames in the time direction from a past frame to a future frame, and the processing is frame processing to output discrimination result data DT16' for each of the frames. In this example, one frame includes 1024 samples. In processing for one frame, input data DT11' is input to the discriminator, and one piece of discrimination result data DT16' is output.

In FIG. 4, each quadrangle represents data. In addition, in each drawing for the data, the vertical direction indicates a time direction, and the horizontal direction indicates the number of dimensions. In particular, in each drawing for the data, the downward direction is a direction indicating a latest time (a future direction).

Further, in FIG. 4, a horizontal arrow represents conversion of data. Here, the first layer is a convolution layer 1', the second layer is a pooling layer 1, and the third layer is a convolution layer 2. In addition, the fourth layer is a pooling layer 2, and the fifth layer is a convolution layer 3.

Among these five layers, processing in each of the second pooling layer 1 to the fifth convolution layer 3 is the same as that in each of the second pooling layer 1 to the fifth convolution layer 3 described with reference to FIG. 1, and thus, the description thereof will be appropriately omitted.

In this example, the input data DT11' is data of a portion from a first sample to a 1036th sample which are samples at the latest time among the input data DT11 including 7910 samples illustrated in FIG. 1.

Here, if one frame includes 1024 samples, a section from the first sample to a 1024th sample in the input data DT11' corresponds to one frame, and this frame is assumed to be a current frame below.

In addition, each of the 1025th to 1036th samples in the input data DT11' is a sample in an immediately preceding frame temporally immediately before the current frame.

In the convolution layer 1', convolution processing is performed using the input data DT11' including data (samples) of the current frame and some of data of the immediately preceding frame as an input, and the input data DT11' is converted into intermediate data DT12'. More specifically, only data PDT1, which is some of the intermediate data DT12' of 4 dimensions × 790 samples, is obtained by the convolution processing in the convolution layer 1' for the current frame, and data PDT2, which is the other of the intermediate data DT12', is obtained by convolution processing for the past frames.

During the convolution processing in the convolution layer 1', four types of filters each having 20×1 taps, that is, each being a 20×1 tap filter, are used, and convolution processing (filtering processing) is performed on the input data DT11' in an 8-sample advancing manner for each of the filters.

In particular, in the convolution layer 1', frame processing is performed in units of frames. That is, as arithmetic processing for the frame in the convolution layer 1', convolution processing (filtering processing) is performed in the 8-sample advancing manner for each frame using filter coefficients of four types of 20×1 tap filters.

In this case, in the processing for the current frame, the convolution processing is performed for a data region including all samples of the current frame as a target region. Then, as arithmetic processing in the convolution layer 1' at a timing temporally before the convolution processing for the current frame, convolution processing is performed for a data region including all samples of the immediately preceding frame as a target region.

In addition, in the pooling layer 1, which is a second layer, pooling processing for extracting a maximum value for a data region having a 10-sample width is performed on the intermediate data DT12' in a 10-sample advancing manner. As a result, the intermediate data DT12' is converted into intermediate data DT13' of 4 dimensions × 79 samples.

In the convolution layer 2, which is a third layer, eight different filters each having 10×4 taps are used, and convolution processing (filtering processing) is performed in a 1-sample advancing manner for each of the filters. As a result, the intermediate data DT13' is converted into intermediate data DT14' of 8 dimensions × 70 samples.

In addition, in the pooling layer 2, which is a fourth layer, pooling processing for extracting a maximum value for a data region having a 10-sample width is performed on the intermediate data DT14' in a 10-sample advancing manner. As a result, the intermediate data DT14' is converted into intermediate data DT15' of 8 dimensions × 7 samples.

Lastly, in the convolution layer 3, which is a fifth layer, convolution processing is performed in a 1-sample advancing manner using one filter having 7×8 taps, and the intermediate data DT15' is converted into discrimination result data DT16' of 1 dimension × 1 sample. The discrimination result data DT16' obtained in this manner is output as a result of the discrimination processing on the input data DT11' (a discrimination result).

Here, when the convolution processing in the convolution layer 1' is compared with the convolution processing in the convolution layer 1 described with reference to FIG. 1, the sample advancing number is 10 in the convolution layer 1, whereas the sample advancing number is 8 in the convolution layer 1'.

When the sample advancing number is 8 in the current frame as described above, convolution processing is performed for a data region of first to 20th samples, and subsequently, convolution processing is performed for a data region of ninth to 28th samples.

Thereafter, convolution processing is performed while each data region is shifted by eight samples, and lastly, convolution processing is performed for a data region of 1017th to 1036th samples.

In this case, since a head of the data region for which the last convolution processing is performed is the 1017th sample, the 1025th sample, which is eight samples preceding the 1017th sample in the time direction, is a processing boundary in the current frame.

Here, one frame includes 1024 samples, and the 1025th sample is a tail (last) sample of an immediately preceding frame. Thus, the 1025th sample is a processing boundary in the immediately preceding frame. Therefore, in the example of FIG. 4, the processing boundaries in the current frame and the immediately preceding frame adjacent to each other coincide with each other. In particular, in this example, a position of the processing boundary of the frame is a boundary position of the frame. As a result, convolution for data (a section) other than data to be processed in the current frame is performed in the past frames.

More specifically, since the frame processing is performed in this example, one piece of discrimination result data DT16' is calculated for 1024 samples of the input data DT11 as an input.

In this case, in the current frame, convolution processing of the convolution layer 1' is performed with a portion of the input data DT11 corresponding to the input data DT11' being a data region to be processed.

Therefore, in the current frame, it is not necessary to perform convolution processing for a portion of the input data DT11 corresponding to a data region W51 drawn by a dotted line. Accordingly, it is possible to reduce a processing amount of convolution processing and a memory amount of the memory for holding data and the like for the convolution processing as much as the portion of the input data DT11 corresponding to the data region W51.

In this case, during the convolution processing in the convolution layer 1' for the current frame, only the data PDT1, which is some of the intermediate data DT12' corresponding to 4 dimensions × 128 samples on the lower side in FIG. 4, is obtained, while the data PDT2, which is the other of the intermediate data DT12', is not obtained.

However, since the data PDT2 has already been obtained by convolution processing in the convolution layer 1' for a plurality of frames that are temporally preceding the current frame, the data PDT2 obtained by the convolution processing may be held. Then, the intermediate data DT12' can be obtained at a time point when the convolution processing in the convolution layer 1' for the current frame is terminated, and thus, processing in the pooling layer 1 can be started immediately thereafter.

In addition, in FIG. 4, there has been described a case in which only the convolution layer 1' uses a discriminator having a neural network structure in which processing boundaries in adjacent frames coincide with each other. However, in the layers after the convolution layer 1', processing boundaries in adjacent frames may coincide with each other.

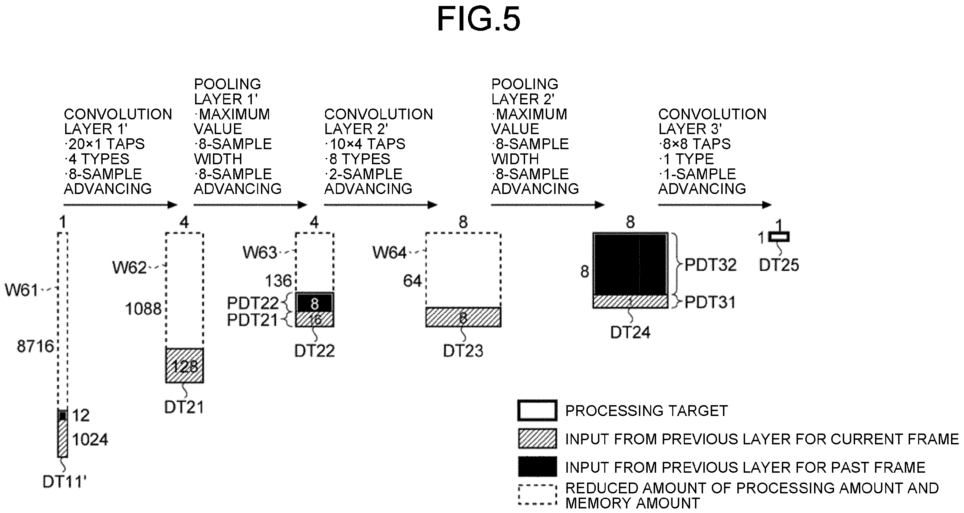

In such a case, in the discriminator having the neural network structure according to the present embodiment, for example, processing is performed in each layer as illustrated in FIG. 5. Note that parts in FIG. 5 corresponding to those in FIG. 4 are denoted by the same reference signs, and the description thereof will be appropriately omitted.

In the example illustrated in FIG. 5, processing is performed in five layers sequentially as the discrimination processing by the discriminator, and discrimination result data DT25 is calculated as a final discrimination result from the one-dimensional (one-channel) input data DT11' that is audio data.

In particular, here, the processing is performed in the five layers sequentially in units of frames in the time direction from a past frame to a future frame, and the processing is frame processing to output discrimination result data DT25 for each of the frames.

In FIG. 5, each quadrangle represents data. In addition, in each drawing for the data, the vertical direction indicates a time direction, and the horizontal direction indicates the number of dimensions. In particular, in each drawing for the data, the downward direction is a direction indicating a latest time (a future direction).

Further, in FIG. 5, a horizontal arrow represents conversion of data. Here, the first layer is a convolution layer 1', the second layer is a pooling layer 1', and the third layer is a convolution layer 2'. In addition, the fourth layer is a pooling layer 2', and the fifth layer is a convolution layer 3'.

In the convolution layer 1', which is a first layer among the five layers, the exactly same processing is performed as that in the convolution layer 1' described with reference to FIG. 4, and thus, the description thereof will be appropriately omitted.

In the neural network structure illustrated in FIG. 5, by slightly changing the sample advancing number or the number of taps in each layer in the neural network structure illustrated in FIG. 1, processing boundaries in adjacent frames in each layer coincide with each other.

Since the neural network structure illustrated in FIG. 5 is obtained merely by slightly changing the neural network structure illustrated in FIG. 1 as described above, such a change in neural network structure has little influence on discrimination performance.

In this example, in the convolution layer 1', frame processing is performed with input data DT11' being an input, similarly to that described with reference to FIG. 4.

That is, as processing in the convolution layer 1' for a current frame, convolution processing (filtering processing) is performed on the input data DT11' using four types of filters, each having 20×1 taps, in an 8-sample advancing manner for each of the filters. As a result, the input data DT11' is converted into intermediate data DT21 of 4 dimensions × 128 samples. The intermediate data DT21 is the same as the data PDT1 illustrated in FIG. 4.

In such convolution processing in the convolution layer 1', similarly to that in FIG. 4, a processing amount and a memory amount can be reduced as much as a data region W61 as compared with those in a case where frame processing is not applied.

In addition, in the pooling layer 1', which is a second layer, pooling processing for extracting a maximum value for a data region having an 8-sample width is performed on the intermediate data DT21 in an 8-sample advancing manner. As a result, the intermediate data DT21 is converted into intermediate data PDT21 of 4 dimensions × 16 samples.

Here, the sample width and the sample advancing number in the pooling layer 1' are determined with respect to the data shape and the frame length of the input data DT11', and the processing in the convolution layer 1', that is, the configuration (structure) of the convolution layer 1'. Therefore, in the pooling layer 1', processing boundaries of adjacent frames in the intermediate data DT21 can be made coincident with each other, and as a result, a processing amount and a memory amount can be reduced as much as a data region W62 in the pooling layer 1' as compared with those in a case where frame processing is not applied.

In the convolution layer 2', which is a third layer, eight different filters each having 10×4 taps are used, and convolution processing is performed in a 2-sample advancing manner for each of the filters.

Therefore, in the convolution layer 2', a shape of input data, in other words, a data region to be processed, corresponds to 4 dimensions × 24 samples, while the intermediate data PDT21 obtained through the processing in the pooling layer 1' for the current frame is data of 4 dimensions × 16 samples.

However, if intermediate data PDT22 of 4 dimensions × 8 samples, which is half of intermediate data obtained in the pooling layer 1' in an immediately preceding frame that is temporally one frame before the current frame, is held, intermediate data DT22 of 4 dimensions × 24 samples can be obtained from the intermediate data PDT21 and the intermediate data PDT22.

In the convolution layer 2', convolution processing is performed on the intermediate data DT22 using eight different filters, each having 10×4 taps, in a 2-sample advancing manner for each of the filters. As a result, the intermediate data DT22 is converted into intermediate data DT23 of 8 dimensions × 8 samples.

The number of taps and the sample advance number in the convolution layer 2' are determined with respect to the data shape and the frame length of the input data DT11' and the configuration (structure) of each of the layers preceding the convolution layer 2'. Therefore, in the convolution layer 2', processing boundaries of adjacent frames in the intermediate data DT22 can be made coincident with each other, and as a result, a processing amount and a memory amount can be reduced as much as a data region W63 in the convolution layer 2' as compared with those in a case where frame processing is not applied.

In the pooling layer 2', which is a fourth layer, pooling processing for extracting a maximum value for a data region having an 8-sample width is performed on the intermediate data DT23 in an 8-sample advancing manner. As a result, the intermediate data DT23 is converted into intermediate data PDT31 of 8 dimensions × 1 sample.

Here, the sample width and the sample advancing number in the pooling layer 2' are determined with respect to the data shape and the frame length of the input data DT11' and the configuration (structure) of each of the layers preceding the pooling layer 2'. Therefore, in the pooling layer 2', processing boundaries of adjacent frames in the intermediate data DT23 can be made coincident with each other, and as a result, a processing amount and a memory amount can be reduced as much as a data region W64 in the pooling layer 2' as compared with those in a case where frame processing is not applied.

In the convolution layer 3', which is a fifth layer, convolution processing is performed using one filter having 8×8 taps in a 1-sample advancing manner.

Therefore, in the convolution layer 3', a shape of input data, in other words, a data region to be processed, corresponds to 8 dimensions × 8 samples, while the intermediate data PDT31 obtained through the processing in the pooling layer 2' for the current frame is data of 8 dimensions × 1 sample.

However, if intermediate data PDT32 of 8 dimensions × 7 samples, including intermediate data obtained in the pooling layer 2' in the seven past frames that are temporally preceding the current frame, is held, intermediate data DT24 of 8 dimensions × 8 samples can be obtained from the intermediate data PDT31 and the intermediate data PDT32.

In the convolution layer 3', convolution processing is performed on the intermediate data DT24 using a filter having 8×8 taps in a 1-sample advancing manner. As a result, the intermediate data DT24 is converted into discrimination result data DT25 of 1 dimension × 1 sample. The discrimination result data DT25 obtained in this manner is output as a result of the discrimination processing on the input data DT11' (a discrimination result).

The number of taps and the sample advance number in the convolution layer 3' are determined with respect to the data shape and the frame length of the input data DT11' and the configuration (structure) of each of the layers preceding the convolution layer 3'. Therefore, in the convolution layer 3', processing boundaries of adjacent frames in the intermediate data DT24 can be made coincident with each other.

As described above, when discrimination processing is performed using the discriminator having the neural network structure described with reference to FIG. 5, the processing amount and the memory amount can be reduced as much as about 1/6 of those in FIG. 1, with substantially equal performance.

Note that, although there has been described as an example in FIG. 5 a case in which one piece of discrimination result data DT25 is output for 1024 samples (one frame), the discrimination result data DT25 may be output at a frequency of once every several frames or the like in the discriminator having the neural network structure illustrated in FIG. 5. In this case as well, the processing amount and the memory amount can be reduced as much as the data region W61 to the data region W64.

Furthermore, in each of FIGS. 4 and 5, in order to simplify the description, there have been described as an example a case where a relatively simple and small-scale neural network is used. However, the neural network may have any scale, that is, any number of layers and the like. In the present embodiment, the processing amount and the memory amount are reduced at a higher rate as the neural network becomes more complicated with larger scale.

Furthermore, the convolution processing and the pooling processing have been described as examples of the processing performed in the layers of the neural network, but any arithmetic processing such as residual processing may be performed. The residual processing is data conversion processing in which an output of a current layer is obtained by adding an output of a layer preceding the current layer to input data of the current layer.

In addition, the present embodiment can be applied not only to technologies for automatically discriminating audio data such as voice recognition, speaker discrimination, and environmental sound discrimination, but also to various technologies each using a neural network.

### 1.2 Specific Example of Regression Processing Using Predictor Having Neural Network Structure

For example, although there has been described above an example in which the present embodiment is applied to discrimination processing using a discriminator having a neural network structure, the present embodiment can also be applied to prediction processing using a predictor having a neural network structure, that is, regression processing.

In such a case, an output of the predictor is a probability indicating a result of prediction through the regression processing. In each layer of the predictor, processing is performed in a similar manner to that in each layer of the discriminator.

As a specific example, the present embodiment can be applied to a band extension technology for generating a high-frequency signal of an audio signal (audio data) on the basis of a low-frequency signal of the audio signal using a neural network.

As an example of a band extension technology, WO 2015/79946 A (hereinafter referred to as the reference patent literature) discloses that a high-frequency signal, which is a high-frequency component of an audio signal, is generated from low-frequency sub-band powers of a plurality of low-frequency sub-bands obtained from the audio signal.

That is, in the reference patent literature, the low-frequency sub-band power of the audio signal is obtained for each of the plurality of low-frequency sub-bands, and estimated values of high-frequency sub-band powers of a plurality of high-frequency sub-bands on the high-frequency side of the audio signal are obtained as pseudo high-frequency sub-band powers on the basis of the plurality of low-frequency sub-band powers. Then, a high-frequency signal is generated on the basis of the pseudo high-frequency sub-band powers.

Here, in the reference patent literature, the pseudo high-frequency sub-band powers are calculated using coefficients obtained in advance by regression analysis using a least square technique, with a plurality of low-frequency sub-band powers as explanatory variables and a plurality of high-frequency sub-band powers as explained variables, as shown in Formula (2) of the reference patent literature.

On the other hand, when the present embodiment is applied to the calculation of the pseudo high-frequency sub-band powers, the pseudo high-frequency sub-band powers can be calculated with higher accuracy by using the neural network.

In such a case, the plurality of low-frequency sub-band powers or the like for each of the plurality of frames of the audio signal are input to the predictor having the neural network structure. Furthermore, the high-frequency sub-band powers (pseudo high-frequency sub-band powers) or the like of the plurality of high-frequency sub-bands in the audio signal for one frame are output from the predictor having the neural network structure.

More specifically, for example, low-frequency sub-band powers or the like of four low-frequency sub-bands for each of 16 frames are input to the predictor having the neural network structure, and high-frequency sub-band powers or the like of eight high-frequency sub-bands for one frame is output from the predictor.

In this case, a matrix of 16 rows and 4 columns, that is, input data of 4 dimensions × 16 samples, is input to the predictor, each sample of the input data indicating a low-frequency sub-band power in one low-frequency sub-band. In addition, a matrix of 1 row and 8 columns, that is, discrimination result data of 8 dimensions × 1 sample, is output from the predictor, each sample of the discrimination result data indicating a high-frequency sub-band power in one high-frequency sub-band.

In this manner, the present embodiment can also be applied to a band extension technology using a neural network. Similarly, the present embodiment can also be applied to a technology for recognizing an image or a video using a neural network, a technology for extracting an object region, and the like.

### 1.3 Regarding Compression Encoding of Filter Coefficients

Meanwhile, in a case where the processing in the convolution layer of the discriminator having the neural network structure is performed, predetermined filter coefficients for a filter are used, and thus, a memory for holding the filter coefficients is required.

Specifically, in the convolution layer, it is necessary to hold filter coefficients as many as the number of taps × the number of filter types. That is, it is necessary to hold filter coefficients as many as the number of taps for one filter or for each of a plurality of filters with which convolution is to be performed.

Therefore, when the number of convolution layers or the number of filters used in the convolution layers increases, a memory amount for holding filter coefficients increases accordingly.

At this point, in the present embodiment, a memory amount of the memory for holding filter coefficients is reduced by compression-encoding the filter coefficients.

In the present embodiment, the compression of the data amount for the filter coefficients is realized by holding two tables including a zero coefficient position table indicating positions of filter coefficients each having a value of 0, that is, zero coefficients, and a non-zero coefficient table indicating values of filter coefficients other than the zero coefficients.

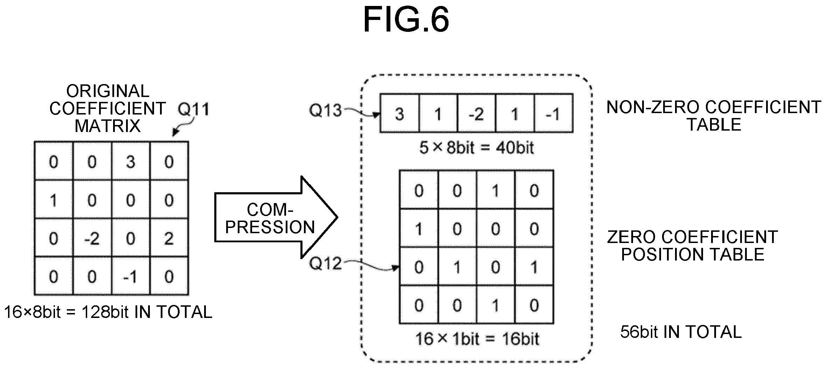

Specifically, for example, as indicated by an arrow Q11 in FIG. 6, it is assumed that there is a coefficient matrix including filter coefficients of 4×4 taps. In this example, a square in the coefficient matrix indicated by the arrow Q11 represents a filter coefficient, and a numerical value in the square indicates a value of the filter coefficient.

In the present embodiment, such a coefficient matrix is compression-encoded and converted into a zero coefficient position table indicated by an arrow Q12 and a non-zero coefficient table indicated by an arrow Q13.

The zero coefficient position table indicated by the arrow Q12 is a 4×4 table with the number of taps being the same as that in the original coefficient matrix, and a numerical value in a square in the zero coefficient position table indicates whether or not a value of a filter coefficient in the coefficient matrix having the same positional relationship as the square is 0 (zero).

That is, when a numerical value in a square in the zero coefficient position table is 0, this indicates that a value of a filter coefficient in the coefficient matrix having the same positional relationship as the square is 0. Therefore, for example, in the drawing for the zero coefficient position table, the value "0" in the uppermost and leftmost square indicates that a value of a filter coefficient in the uppermost and leftmost box having the same positional relationship among boxes in the coefficient matrix is "0".

On the other hand, when a numerical value in a square in the zero coefficient position table is 1, this indicates that a value of a filter coefficient in the coefficient matrix having the same positional relationship as the square is not 0. Therefore, for example, in the drawing for the zero coefficient position table, the value "1" in the second-uppermost and leftmost square indicates that a value of the second-uppermost and leftmost filter coefficient having the same positional relationship in the drawing for the coefficient matrix is not "0".

In addition, the non-zero coefficient table indicated by the arrow Q13 is a table indicating values of filter coefficients that are not zero coefficients in the original coefficient matrix, and a value in one square in the non-zero coefficient table indicates a value of one filter coefficient that is not a zero coefficient in the coefficient matrix.

In this example, in the non-zero coefficient table, values of filter coefficients that are not zero coefficients, that is, values of filter coefficients that are indicated as "1" in the zero coefficient position table, are arranged in a raster scanning order starting from the uppermost and leftmost filter coefficient among boxes in the coefficient matrix.

For example, in the drawing for the non-zero coefficient table, a numerical value "3" in the leftmost square indicates that a value of the uppermost and third-leftmost filter coefficient in the coefficient matrix is "3".

By holding the zero coefficient position table and the non-zero coefficient table obtained by compression-encoding the coefficient matrix as described above, rather than holding the coefficient matrix itself, a memory amount of the memory for holding information for obtaining filter coefficients can be reduced. Note that, in the following description, "the compression-encoding of the coefficient matrix (filter coefficients) for generating the zero coefficient position table and the non-zero coefficient table" will also referred to as "the sparse representation of the coefficient matrix (filter coefficients)", and "the zero coefficient position table and the non-zero coefficient table obtained by the compression encoding" will also be referred to as "the sparsely represented coefficient matrix (filter coefficients)". In addition, "the zero coefficient position table" will also be referred to as "the sparse matrix", and "the non-zero coefficient table" will also be referred to as "the non-zero data queue".

For example, in the example illustrated in FIG. 6, if one filter coefficient is 8 bits, since the coefficient matrix includes 16 filter coefficients, a data amount of the coefficient matrix is 128 (=16×8) bits.

On the other hand, in the zero coefficient position table, if a value indicating whether or not one filter coefficient is a zero coefficient is 1 bit, a data amount of the zero coefficient position table is 16 (=16×1) bits.

In addition, in the non-zero coefficient table, if a value of one filter coefficient is 8 bits, since the number of filter coefficients that are not zero coefficients is 5 here, a data amount of the non-zero coefficient table is 40 (=5×8) bits.

Then, since the sum of the data amount of the zero coefficient position table and the data amount of the non-zero coefficient table is 56 (=40+16) bits, it can be seen that the data amount, that is, a memory amount, is compressed to about 1/2 as compared with the data amount of the original coefficient matrix, i.e., 128 bits. The coefficient matrix including filter coefficients is compressed at a higher rate as the number of zero coefficients increases.

### 1.4 Regarding Reduction in Processing Amount through Data Compression

Furthermore, in the present embodiment, by compression-encoding a coefficient matrix, a processing amount can also be reduced when processing is performed in a convolution layer.

For example, in the convolution processing using the coefficient matrix, matrix operations are performed using the coefficient matrix. Therefore, regardless of whether or not the filter coefficient is a zero coefficient, products (multiplication processing) of filter coefficients and data to be convolved and a sum (addition processing) of the products are calculated for all the filter coefficients.

On the other hand, in a case where the coefficient matrix is compression-encoded, first, decoding processing is performed based on a zero coefficient position table and a non-zero coefficient table, and convolution processing is performed using filter coefficients obtained as a result.

At this time, in the decoding processing, it is only required to load filter coefficients from the non-zero coefficient table only for positions where values are not 0 in the zero coefficient position table, and thus, a processing amount for decoding is small as compared with those in other compression methods such as Huffman encoding.

Furthermore, also in the convolution processing after the decoding processing, it is only required to calculate products (multiplication processing) of only the loaded filter coefficients and data to be convoluted and a sum (addition processing) of the products, and thus, a processing amount of the convolution processing itself can be reduced.

As a result, when the number of zero coefficients is large, a total processing amount of the decoding processing and the operations for the convolution processing is smaller than a processing amount of convolution processing in a case where the coefficient matrix is used as it is. Also, the larger the number of zero coefficients, the higher the reduction rate of the processing amount.

### 1.5 Regarding Learning Method

Note that the number of zero coefficients in the coefficient matrix can be increased, for example, by L1 regularization, L2 regularization, or a regularization method equivalent thereto for the neural network to learn coefficient. Therefore, when a discriminator having neural network structure learns, if the number of zero coefficients is appropriately adjusted by regularization, a processing amount and a memory amount can be reduced by compression-encoding filter coefficients.

Note that regularization for the neural network to learn coefficients is described in detail, for example, in "Ian Goodfellow, Yoshua Bengio, and Aaron Courville, Deep Learning, The MIT Press, 2016".

### 1.6 Configuration Example of Neural Network Processing Apparatus

Next, a neural network processing apparatus according to the present embodiment described above will be described.

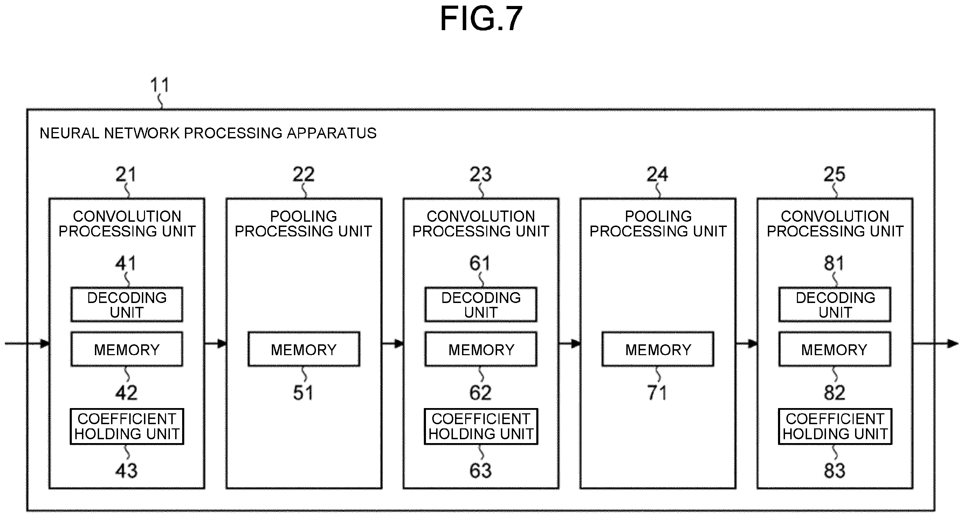

FIG. 7 is a diagram illustrating a configuration example of an aspect of a neural network processing apparatus according to the present embodiment.

A neural network processing apparatus 11 illustrated in FIG. 7 is an information processing apparatus including a discriminator having a neural network structure in which arithmetic processing is performed in layers with the number of taps, a sample width, and a sample advancing number determined with respect to a shape of input data and a frame length.

The neural network processing apparatus 11 performs discrimination processing on the input data and outputs discrimination result data indicating a discrimination result by performing arithmetic processing in each of the layers of the neural network on the basis of the supplied input data.

Note that an example in which the neural network processing apparatus 11 is the discriminator having the neural network structure described with reference to FIG. 5 will be described here.

The neural network processing apparatus 11 includes a convolution processing unit 21, a pooling processing unit 22, a convolution processing unit 23, a pooling processing unit 24, and a convolution processing unit 25.

In this case, the convolution processing unit 21 to the convolution processing unit 25 constitute the discriminator having the neural network structure described with reference to FIG. 5. In other words, the convolution processing unit 21 to the convolution processing unit 25 constitute the neural network.

The convolution processing unit 21 performs processing on the supplied input data in the convolution layer 1' and supplies intermediate data obtained as a result to the pooling processing unit 22.

The convolution processing unit 21 includes a decoding unit 41, a memory 42, and a coefficient holding unit 43.

For example, the coefficient holding unit 43 includes a nonvolatile memory. The coefficient holding unit 43 holds a zero coefficient position table and a non-zero coefficient table obtained by compression-encoding filter coefficients for each of four different types of filters each having 20×1 taps, the filter coefficients being obtained in advance by learning.

The decoding unit 41 performs decoding processing on the filter coefficients on the basis of the zero coefficient position table and the non-zero coefficient table for each filter to obtain filter coefficients that are not zero coefficients for each filter. The memory 42 includes, for example, a volatile memory to temporarily holds the supplied input data and data that is being operated.

The pooling processing unit 22 performs processing on the intermediate data supplied from the convolution processing unit 21 in the pooling layer 1', and supplies intermediate data obtained as a result to the convolution processing unit 23. The pooling processing unit 22 includes a memory 51. The memory 51 includes, for example, a volatile memory to temporarily hold the intermediate data supplied from the convolution processing unit 21 and data that is being operated.

The convolution processing unit 23 performs processing on the intermediate data supplied from the pooling processing unit 22 in the convolution layer 2', and supplies intermediate data obtained as a result to the pooling processing unit 24.

The convolution processing unit 23 includes a decoding unit 61, a memory 62, and a coefficient holding unit 63.

For example, the coefficient holding unit 63 includes a nonvolatile memory. The coefficient holding unit 63 holds a zero coefficient position table and a non-zero coefficient table obtained by compression-encoding filter coefficients for each of eight different types of filters each having 10×4 taps, the filter coefficients being obtained in advance by learning.

The decoding unit 61 performs decoding processing on the filter coefficients on the basis of the zero coefficient position table and the non-zero coefficient table for each filter to obtain filter coefficients that are not zero coefficients for each filter. The memory 62 includes, for example, a volatile memory to temporarily hold the intermediate data supplied from the pooling processing unit 22 and data that is being operated.

The pooling processing unit 24 performs processing on the intermediate data supplied from the convolution processing unit 23 in the pooling layer 2', and supplies intermediate data obtained as a result to the convolution processing unit 25. The pooling processing unit 24 includes a memory 71. The memory 71 includes, for example, a volatile memory to temporarily hold the intermediate data supplied from the convolution processing unit 23 and data that is being operated.

The convolution processing unit 25 performs processing on the intermediate data supplied from the pooling processing unit 24 in the convolution layer 3', and outputs discrimination result data obtained as a result.

The convolution processing unit 25 includes a decoding unit 81, a memory 82, and a coefficient holding unit 83.

For example, the coefficient holding unit 83 includes a nonvolatile memory. The coefficient holding unit 83 holds a zero coefficient position table and a non-zero coefficient table obtained by compression-encoding filter coefficients for a filter having 8×8 taps, the filter coefficients being obtained in advance by learning.

The decoding unit 81 performs decoding processing on the filter coefficients on the basis of the zero coefficient position table and the non-zero coefficient table for the filter to obtain filter coefficients that are not zero coefficients for the filter. The memory 82 includes, for example, a volatile memory to temporarily hold the intermediate data supplied from the pooling processing unit 24 and data that is being operated.

Note that the example in which the neural network processing apparatus 11 is constituted by the discriminator having the neural network structure described with reference to Box. 5 has been described here. However, the neural network processing apparatus 11 may be constituted by the discriminator having the neural network structure described with reference to FIG. 4.

In such a case, the processing in the convolution layer 1' is performed by the convolution processing unit 21, the processing in the pooling layer 1 is performed by the pooling processing unit 22, the processing in the convolution layer 2 is performed by the convolution processing unit 23, the processing in the pooling layer 2 is performed by the pooling processing unit 24, and the processing in the convolution layer 3 is performed by the convolution processing unit 25.

### 1.7 Description of Discrimination Processing

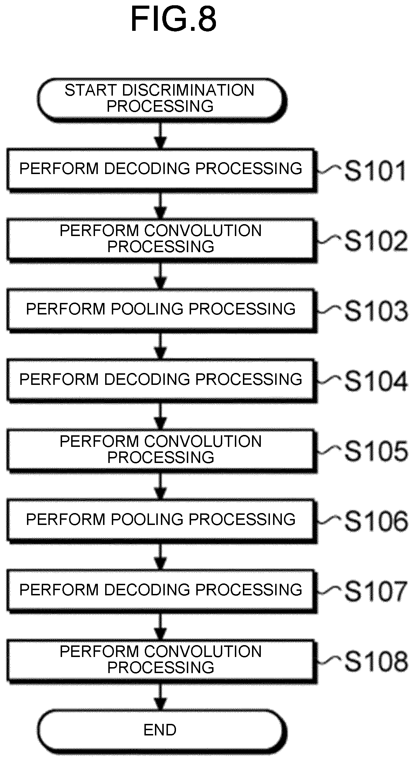

Next, operations of the neural network processing apparatus 11 will be described. That is, discrimination processing performed by the neural network processing apparatus 11 will be described below with reference to a flowchart of FIG. 8. Note that this discrimination processing is performed for each frame of the input data.

In Step S11, the decoding unit 41 of the convolution processing unit 21 reads a zero coefficient position table and a non-zero coefficient table from the coefficient holding unit 43, and performs decoding processing on filter coefficients on the basis of the zero coefficient position table and the non-zero coefficient table. In addition, the memory 42 of the convolution processing unit 21 temporarily records supplied input data.

In Step S12, the convolution processing unit 21 performs convolution processing on the input data recorded in the memory 42, on the basis of the filter coefficients for four filters obtained by the processing in Step S11, in an 8-sample advancing manner for each of the filters. For example, in Step S12, the convolution processing is performed only using filter coefficients that are not zero coefficients.

The convolution processing unit 21 supplies intermediate data obtained by the convolution processing to the memory 51 of the pooling processing unit 22 to temporarily record the intermediate data.

This convolution processing makes it possible to reduce a processing amount of the convolution processing and a memory amount of the memory 42 as much as the data region W61 in FIG. 5. Furthermore, a processing amount of the arithmetic processing can be reduced as much as the number of zero coefficients.

In Step S13, the pooling processing unit 22 performs pooling processing on the intermediate data recorded in the memory 51 to extract a maximum value for a data region having an 8-sample width in an 8-sample advancing manner. The pooling processing unit 22 supplies intermediate data obtained by the pooling processing to the memory 62 of the convolution processing unit 23 to temporarily record the intermediate data.

This pooling processing makes it possible to reduce a processing amount of the pooling processing and a memory amount of the memory 51 as much as the data region W62 in FIG. 5.

In Step S14, the decoding unit 61 of the convolution processing unit 23 reads a zero coefficient position table and a non-zero coefficient table from the coefficient holding unit 63, and performs decoding processing on filter coefficients on the basis of the zero coefficient position table and the non-zero coefficient table.

In Step S15, the convolution processing unit 23 performs convolution processing on the intermediate data recorded in the memory 62, on the basis of the filter coefficients for eight filters obtained by the processing in Step S14, in a 2-sample advancing manner for each of the filters. For example, in Step S15, the convolution processing is performed only using filter coefficients that are not zero coefficients.

The convolution processing unit 23 supplies intermediate data obtained by the convolution processing to the memory 71 of the pooling processing unit 24 to temporarily record the intermediate data.

This convolution processing makes it possible to reduce a processing amount of the convolution processing and a memory amount of the memory 62 as much as the data region W63 in FIG. 5. Furthermore, a processing amount of the arithmetic processing can be reduced as much as the number of zero coefficients.

In Step S16, the pooling processing unit 24 performs pooling processing on the intermediate data recorded in the memory 71 to extract a maximum value for a data region having an 8-sample width in an 8-sample advancing manner. The pooling processing unit 24 supplies intermediate data obtained by the pooling processing to the memory 82 of the convolution processing unit 25 to temporarily record the intermediate data.

This pooling processing makes it possible to reduce a processing amount of the pooling processing and a memory amount of the memory 71 as much as the data region W64 in FIG. 5.

In Step S17, the decoding unit 81 of the convolution processing unit 25 reads a zero coefficient position table and a non-zero coefficient table from the coefficient holding unit 83, and performs decoding processing on filter coefficients on the basis of the zero coefficient position table and the non-zero coefficient table.

In Step S18, the convolution processing unit 25 performs convolution processing on the intermediate data recorded in the memory 82, on the basis of the filter coefficients for one filter obtained by the processing in Step S17, in a 1-sample advancing manner for the filter. For example, in Step S18, the convolution processing is performed only using filter coefficients that are not zero coefficients. This convolution processing makes it possible to reduce a processing amount of the arithmetic processing as much as the number of zero coefficients.

The convolution processing unit 25 outputs discrimination result data obtained by the convolution processing, and the discrimination processing ends.

As described above, the neural network processing apparatus 11 generates discrimination result data by performing arithmetic processing in each of the layers with the number of taps, the sample width, and the sample advancing number determined with respect to the shape of the input data and the frame length. By doing so, a processing amount and a memory amount can be reduced, thereby performing discrimination more efficiently.

Furthermore, the neural network processing apparatus 11 performs decoding processing on the basis of the zero coefficient position table and the non-zero coefficient table held in advance, and performs convolution processing using filter coefficients obtained as a result. By doing so, a memory amount of the memory for holding filter coefficients can be reduced, and a processing amount of the convolution processing can also be reduced because a product-sum operation for zero coefficients is omitted.

Note that the neural network processing apparatus 11 may be a predictor that predicts high-frequency sub-band powers (pseudo high-frequency sub-band powers) for the above-described band extension.

In such a case, low-frequency sub-band powers are input to the convolution processing unit 21 as input data, and convolution processing results (operation results) are output from the convolution processing unit 25 as prediction results of high-frequency sub-band powers. However, in this case, processing is performed in each of the layers in a different manner from the processing described with reference to FIG. 5.

### 1.8 Effect of Sparse Representation of Coefficient Matrix

In the above description, the learning method (1.5 Regarding Learning Method) for generating a coefficient matrix including many zeros in the learning process of the neural network, the method of compression-encoding the coefficient matrix (1.3 Regarding Compression Encoding of Filter Coefficients), and the method for reducing a processing amount through the data compression (1.4 Regarding Reduction in Processing Amount through Data Compression) have been described.

Here, in the present embodiment, the compression encoding of the coefficient matrix is implemented by dividing the coefficient matrix into a zero coefficient position table and a non-zero coefficient table and storing the zero coefficient position table and the non-zero coefficient table, that is, by sparsely representing the coefficient matrix. When this method is applied to an inference task using an actual neural network, it can be confirmed that the network including many zero coefficients in a coefficient matrix is formed, and a memory amount for the coefficient matrix is reduced to 1/4 or less in the inference processing.

Such a result suggests that a memory amount can be reduced while maintaining an accuracy and a speed, and the size of the neural network can be increased several times while suppressing an increase in memory amount. For example, concerning a network in which real-time processing such as external sound recognition is required, by applying the present embodiment to a neural network that is not conventionally capable of ensuring real-time processing if its size is not limited, it is possible to expand the size of the neural network twice to four times while suppressing an increase in memory amount. In addition, by applying the present embodiment to an embedded system having a fixed memory amount, it is possible to additionally implement an inference task by a neural network without changing the physical configuration of the system. Accordingly, it is possible to update the system so that more complicated recognition processing can be performed.

As described above, by incorporating the regularization method into the learning of the neural network, it is possible to generate a learning model that generates many zero coefficients as a whole. Then, by using a sparse representation method in which a zero coefficient position table and a non-zero coefficient table are recorded by dividing a coefficient matrix generated in this manner, it is possible to compress the coefficient matrix and reduce a memory amount.

### 1.9 Decoding Unit Suitable for Decoding Sparsely Represented Coefficients

The sparsely represented coefficient matrix can be expanded by software, but can also be expanded by hardware. In the following description, the decoding unit implemented as a hardware configuration will be described with a specific example.

### 1.9.1 Decoding Processing Executed by Decoding Unit

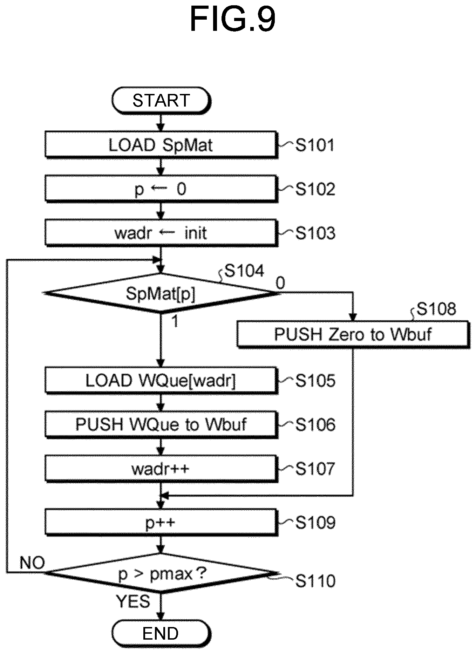

FIG. 9 is a flowchart illustrating an example of a series of operations executed by the decoding unit according to the present embodiment, that is, processing for decoding sparsely represented coefficients. In FIG. 9, the decoding processing executed by the decoding unit is described as a flowchart for the sake of clarity, but actually, a decoding algorithm according to FIG. 9 may be implemented as a hardware configuration in the decoding units 41, 61, and 81 of the neural network processing apparatus 11 illustrated in FIG. 7. Note that, in the following description, for the sake of simplicity, a reference sign "101" is used when the decoding units 41, 61, and 81 are not distinguished from each other, a reference sign "102" is used when the memories 42, 62, and 82 are not distinguished from each other, and a reference sign "103" is used when the coefficient holding units 43, 63, and 83 are not distinguished from each other.

As illustrated in FIG. 9, the decoding unit 101 first reads a zero coefficient position table (SpMat) Q12 and a non-zero coefficient table Q13 from the coefficient holding unit 103 (LOAD SpMat) (Step S101). The read zero coefficient position table Q12 and non-zero coefficient table Q13 are stored, for example, at known addresses in the memory 102 of the decoding unit 101.

Next, the decoding unit 101 initializes a phase pointer p indicating a position of a coefficient W in the zero coefficient position table Q12 (p +- 0) (Step S102).

Further, the decoding unit 101 sets an address for pointing a coefficient W (a non-zero coefficient) positioned at a head of the non-zero coefficient table Q13 in the memory 102 (hereinafter referred to as a head address) in a non-zero coefficient queue pointer wadr indicating a position in the non-zero coefficient table Q13 (wadr←init) (Step S103).

Next, the decoding unit 101 determines whether a value pointed to by the phase pointer p with respect to the zero coefficient position table Q12 in the memory 102 is "0" or "1" (SpMat[p]) (Step S104). Note that "0" can correspond to a first value, for example, in the claims, and "1" can correspond to a second value, for example, in the claims.

When the value pointed to by the phase pointer p is "1" ("1" in Step S104), the decoding unit 101 reads a non-zero coefficient WQue[wadr] pointed to by the non-zero coefficient queue pointer wadr from the non-zero coefficient table Q13 in the memory 102 (LOAD WQue[wadr]) (Step S105), and stores the read non-zero coefficient WQue[wadr] at a predetermined position in a coefficient buffer (Wbuf) 114 (PUSH WQue to Wbuf) (Step S106). Note that the coefficient buffer 114 is a buffer in which coefficients in the coefficient matrix Q11 are sequentially assembled in the decoding processing, and the predetermined position may be a position corresponding to the position pointed to by the phase pointer p in the coefficient matrix Q11.

Thereafter, the decoding unit 101 increments the non-zero coefficient queue pointer wadr, that is, sets an address at which a next non-zero coefficient is stored in the non-zero coefficient queue pointer wadr (wadr++) (Step S107), and proceeds to Step S109.

On the other hand, in Step S104, when the value pointed to by the phase pointer p is "0" ("0" in Step S104), the decoding unit 101 stores the zero value at a predetermined position in the coefficient buffer 114 (PUSH Zero to Wbuf) (Step S108), and proceeds to Step S109.

In Step S109, the decoding unit 101 increments the phase pointer p by 1, that is, sets a position of a next coefficient W to the phase pointer p (p++).

Thereafter, the decoding unit 101 determines whether or not the incremented phase pointer p exceeds a maximum value pmax of the phase pointer p indicating a tail of the zero coefficient position table Q12 (p>pmax?) (Step S110). When the incremented phase pointer p exceeds the maximum value pmax (YES in Step S110), the decoding unit 101 ends this operation. On the other hand, When the incremented phase pointer p does not exceed the maximum value pmax (NO in Step S110), the decoding unit 101 returns to Step S104 and executes the subsequent steps.

By operating the decoding unit 101 as described above, the coefficient matrix Q11 is restored in the coefficient buffer 114.

### 1.9.2 Specific Example of Decoding Processing

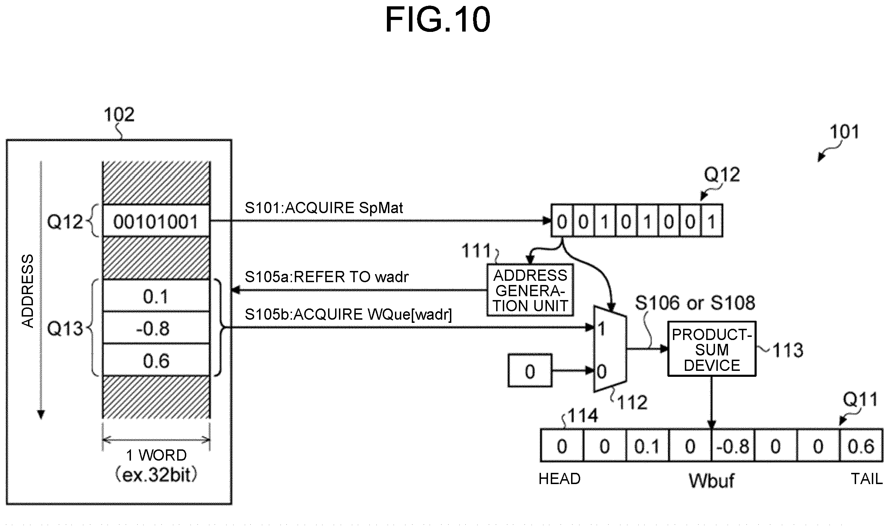

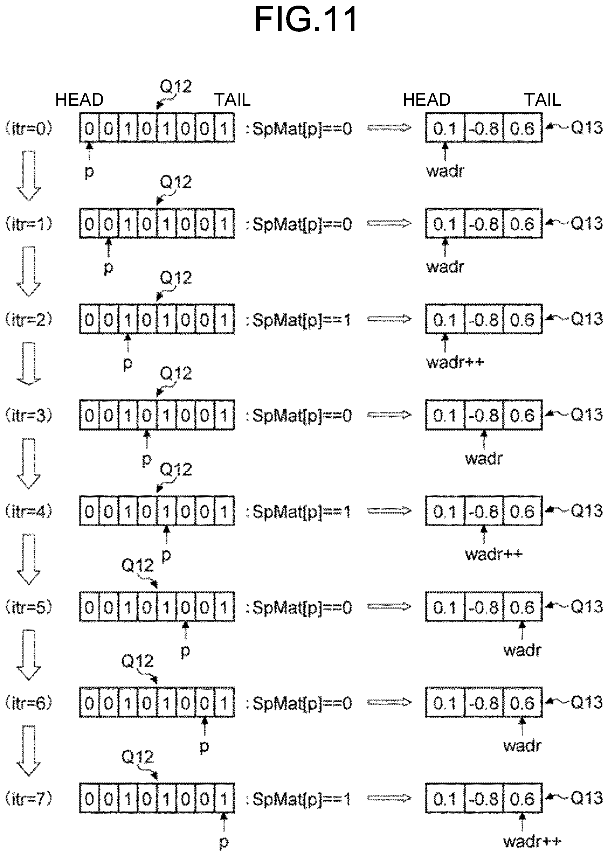

Subsequently, a specific example of decoding processing executed by the decoding unit 101 according to the present embodiment will be described in accordance with the flowchart illustrated in FIG. 9 with reference to FIGS. 10 and 11. FIG. 10 is a diagram for explaining a specific example of decoding processing executed by the decoding unit according to the present embodiment. FIG. 11 is a diagram for explaining movements of the phase pointer and the non-zero coefficient queue pointer in the specific example illustrated in FIG. 10. Note that FIGS. 10 and 11 illustrate a case where the coefficient matrix Q11 has a configuration of 1 row and 8 columns, and non-zero coefficients are stored in the third, fifth, and eighth columns. In addition, it is assumed that the non-zero coefficient in the third column is 0.1, the non-zero coefficient in the fifth column is -0.8, and the non-zero coefficient in the eighth column is 0.6.

As illustrated in FIG. 10, the decoding unit 101 includes an address generation unit 111 that generates and manages a non-zero coefficient queue pointer wadr, a selector 112 that outputs either a "non-zero coefficient WQue[wadr]" or "0" according to a value pointed to by the phase pointer p, a product-sum device 113 that restores a coefficient matrix Q11 in a coefficient buffer 114 by sequentially storing the values output from the selector 112 in the coefficient buffer 114, and the coefficient buffer 114 that stores the restored coefficient matrix Q11.

In the configuration illustrated in FIG. 10, the decoding unit 101 first acquires a zero coefficient position table Q12 (="00101001") and a non-zero coefficient table Q13 (="0.1", "-0.8", "0.6") from the coefficient holding unit 103 (corresponding to Step S101 in FIG. 9). In addition, at a first repetition (itr=0), the decoding unit 101 initializes the phase pointer p to 0, and sets a head address in the non-zero coefficient queue pointer wadr managed by the address generation unit 111 (corresponding to Steps S102 and S103 in FIG. 9). As a result, as illustrated in FIG. 11, the phase pointer p points to "0" which is a leftmost (head) value in the zero coefficient position table Q12, and the non-zero coefficient queue pointer wadr points to "0.1" which is a head value in the non-zero coefficient table Q13.

Next, the decoding unit 101 determines whether a value currently pointed to by the phase pointer p is "0" or "1" (corresponding to Step S104 in FIG. 9). As described above, at itr=0, the phase pointer p points to "0". Therefore, "0" is input to a control terminal of the selector 112. In this case (corresponding to "0" in Step S104 in FIG. 9), the value "0" is input from the selector 112 to the product-sum device 113 without the decoding unit 101 bringing out a value from the non-zero coefficient table Q13. Meanwhile, the product-sum device 113 stores the input value "0" as a head coefficient W in the coefficient buffer 114 (corresponding to Step S108 in FIG. 9).

Thereafter, the decoding unit 101 increments the phase pointer p by 1 (corresponding to Step S109 in FIG. 9) and shifts to a next repetition (itr=1) (corresponding to NO in Step S110 in FIG. 9).

As illustrated in FIG. 11, at itr=1, similarly to itr=0, a value pointed to by the phase pointer p is "0" (corresponding to "0" in Step S104 in FIG. 9). Therefore, the value "0" is input from the selector 112 to the product-sum device 113 without the decoding unit 101 bringing out a value from the non-zero coefficient table Q13, and this value "0" is stored as a second coefficient W in the coefficient buffer 114 (corresponding to Step S108 in FIG. 9). Then, the phase pointer p is incremented by 1 (corresponding to Step S109 in FIG. 9), and a next repetition (itr=2) is executed (corresponding to NO in Step S110 in FIG. 9).

As illustrated in FIG. 11, at itr=2, a value pointed to by the phase pointer p is "1". Therefore, "1" is input to the control terminal of the selector 112. In this case (corresponding to "1" in Step S104 in FIG. 9), referring to the non-zero coefficient table Q13 on the basis of the current non-zero coefficient queue pointer wadr (corresponding to a part of Step S105 in FIG. 9 and Step S105a in FIG. 10), the decoding unit 101 brings out a value (non-zero coefficient) WQue[wadr] (=0.1) pointed to by the non-zero coefficient queue pointer wadr from the non-zero coefficient table Q13, and inputs the value to the selector 112 (corresponding to a part of Step S105 in FIG. 9 and Step S105b in FIG. 10). Meanwhile, since the value input to the control terminal is "1", the selector 112 inputs the input non-zero coefficient WQue[wadr] (=0.1) to the product-sum device 113. Then, the product-sum device 113 stores the input non-zero coefficient WQue[wadr] (=0.1) as a third coefficient W in the coefficient buffer 114 (corresponding to Step S106 in FIG. 9).

Thereafter, the non-zero coefficient queue pointer wadr is incremented to an address for pointing to a next non-zero coefficient W by the address generation unit 111 (corresponding to Step S107 in FIG. 9), and the phase pointer p is incremented by 1 (corresponding to Step S109 in FIG. 9). Then, a next repetition (itr=3) is executed (corresponding to NO in Step S110 in FIG. 9).

As illustrated in FIG. 11, at itr=3, similarly to itr=0, a value pointed to by the phase pointer p is "0" (corresponding to "0" in Step S104 in FIG. 9). Therefore, the value "0" is input from the selector 112 to the product-sum device 113 without the decoding unit 101 bringing out a value from the non-zero coefficient table Q13, and this value "0" is stored as a fourth coefficient W in the coefficient buffer 114 (corresponding to Step S108 in FIG. 9). Then, the phase pointer p is incremented by 1 (corresponding to Step S109 in FIG. 9), and a next repetition (itr=4) is executed (corresponding to NO in Step S110 in FIG. 9).

As illustrated in FIG. 11, at itr=4, a value pointed to by the phase pointer p is "1" (corresponding to "1" in Step S104 in FIG. 9). Therefore, referring to the non-zero coefficient table Q13 on the basis of the current non-zero coefficient queue pointer wadr (corresponding to a part of Step S105 in FIG. 9 and Step S105a in FIG. 10), the decoding unit 101 brings out a non-zero coefficient WQue[wadr] (=-0.8) pointed to by the non-zero coefficient queue pointer wadr, and inputs the non-zero coefficient to the selector 112 (corresponding to a part of Step S105 in FIG. 9 and Step S105b in FIG. 10). Then, the brought-out non-zero coefficient WQue[wadr] (=-0.8) is input to the product-sum device 113 via the selector 112, and is stored as a fifth coefficient W in the coefficient buffer 114 (corresponding to Step S106 in FIG. 9). Thereafter, the non-zero coefficient queue pointer wadr and the phase pointer p are incremented by 1 (corresponding to Steps S107 and S109 in FIG. 9), and a next repetition (each of itr=5 and itr=6) is executed (corresponding to NO in Step S110 in FIG. 9).

As illustrated in FIG. 11, at each of itr=5 and itr=6, similarly to itr=0, a value pointed to by the phase pointer p is "0" (corresponding to "0" in Step S104 in FIG. 9). Therefore, at each of itr=5 and itr=6, the value "0" is input from the selector 112 to the product-sum device 113 without the decoding unit 101 bringing out a value from the non-zero coefficient table Q13, and this value "0" is stored as each of sixth and seventh coefficients W in the coefficient buffer 114 (corresponding to Step S108 in FIG. 9). Then, the phase pointer p is incremented by 1 (corresponding to Step S109 in FIG. 9), and a next repetition (itr=7) is executed (corresponding to NO in Step S110 in FIG. 9).

As illustrated in FIG. 11, at itr=7, a value pointed to by the phase pointer p is "1" (corresponding to "1" in Step S104 in FIG. 9). Therefore, referring to the non-zero coefficient table Q13 on the basis of the current non-zero coefficient queue pointer wadr (corresponding to a part of Step S105 in FIG. 9 and Step S105a in FIG. 10), the decoding unit 101 brings out a non-zero coefficient WQue[wadr] (=0.6) pointed to by the non-zero coefficient queue pointer wadr, and inputs the non-zero coefficient to the selector 112 (corresponding to a part of Step S105 in FIG. 9 and Step S105b in FIG. 10). Then, the brought-out non-zero coefficient WQue[wadr] (=0.6) is input to the product-sum device 113 via the selector 112, and is stored as an eighth coefficient W in the coefficient buffer 114 (corresponding to Step S106 in FIG. 9).

Thereafter, the non-zero coefficient queue pointer wadr and the phase pointer p are incremented by 1 (corresponding to Steps S107 and S109 in FIG. 9), but the incremented phase pointer p exceeds the maximum value pmax (YES in Step S110 in FIG. 9). Therefore, the decoding unit 101 ends this operation without shifting to a next repetition.

By operating the decoding unit 101 as described above, the coefficient matrix Q11 including "0", "0", "0.1", "0", "-0.8", "0", "0", and "0.6" is restored in the coefficient buffer 114 after the processing is completed. Note that the coefficient matrix Q11 restored in the coefficient buffer 114 may be appropriately read from the coefficient buffer 114 for use in convolution processing executed by the decoding unit 101.

The decoding algorithm described above can be implemented in hardware in the decoding unit 101 as described above. In a case where an order circuit is configured in such a manner that the number of clocks required for the processing until the phase pointer p is incremented by 1 is 1 clock (CLK), 1 CLK is required to read the zero coefficient position table Q12, and 8 CLK is required to obtain decoding values "0", "0", "0.1", "0", "-0.8", "0", "0", and "0.6". Therefore, the coefficient matrix Q11 can be decoded with a total of 9 CLK.

### 1.10 Action and Effect

As described above, according to the present embodiment, since the coefficient matrix Q11 is compression-encoded by sparse representation and the sparsely represented coefficient matrix is stored in the memory 102, a necessary memory amount can be reduced. Furthermore, the decoding unit 101 capable of reducing the memory amount can be implemented by hardware.

### 2. Second Embodiment

In the convolution processing according to the first embodiment described above, it is necessary to perform a convolution operation while maintaining a correspondence relationship between a variable X to be operated and a coefficient W. Therefore, in a case where the decoding unit 101 is implemented in the hardware configuration, it is necessary to input, to a product-sum circuit that performs a product-sum operation, a variable matrix and the coefficient matrix Q11 to be convolved in such a manner that positions of variables X in the variable matrix are aligned with positions of coefficients W in the coefficient matrix Q11.

Here, in the first embodiment, the coefficient W is stored in the memory 102 (and the coefficient holding unit 103) in a sparsely represented state, whereas the variable X is stored in the memory 102 in a normally represented state, that is, in an uncompressed state. Therefore, it is necessary to decode the coefficient matrix Q11 and read the variable X while considering synchronization between the variable X and the coefficient W. Therefore, in the present embodiment, a decoding unit that enables synchronization between the variable X and the coefficient W will be described with an example.

Note that a neural network processing apparatus according to the present embodiment may have a configuration similar to that of the neural network processing apparatus 11 described with reference to FIG. 7, etc. according to the first embodiment, and thus, the detailed description thereof will be omitted here. Furthermore, in the following description, it is assumed that a variable matrix Q14 to be convolved has the same data length and the same data structure as the coefficient matrix Q11 to be used for convolution processing.

### 2.1 Decoding Unit Suitable for Decoding Sparsely Represented Coefficients

The decoding unit that decodes a coefficient matrix while synchronizing the coefficient matrix with variables X can be implemented as software, or can be implemented as hardware. In the following description, the decoding unit implemented as a hardware configuration will be described with a specific example.

### 2.1.1 Decoding Processing Executed by Decoding Unit

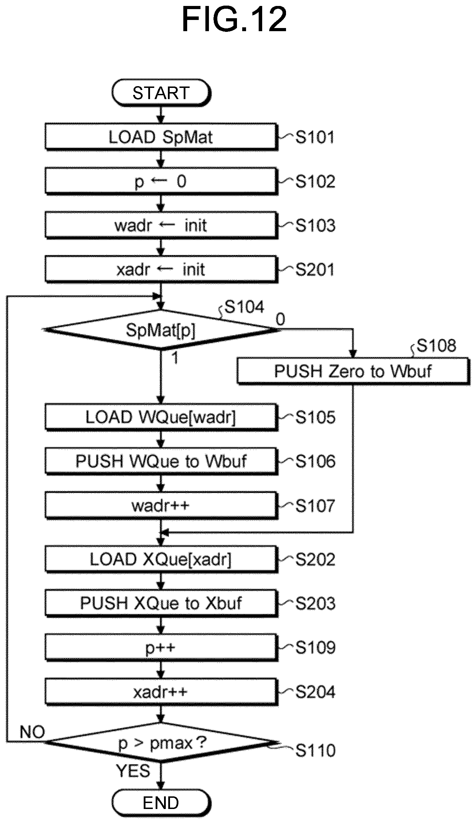

FIG. 12 is a flowchart illustrating an example of a series of operations executed by the decoding unit according to the present embodiment, that is, processing for decoding sparsely represented coefficients. In FIG. 12, the decoding processing executed by the decoding unit is described as a flowchart for the sake of clarity, but actually, a decoding algorithm according to FIG. 12 may be implemented as a hardware configuration in the decoding units 41, 61, and 81 of the neural network processing apparatus 11 illustrated in FIG. 7. In addition, concerning an operation in FIG. 12 that is the same as the operation illustrated in FIG. 9, the same will be cited, and the detailed description thereof will be omitted.

As illustrated in FIG. 12, the decoding unit 101 first reads a zero coefficient position table (SpMat) Q12 and a non-zero coefficient table Q13 from the coefficient holding unit 103, initializes the phase pointer p, and sets a head address in the non-zero coefficient queue pointer wadr, by executing the operations in Steps S101 to S103 in FIG. 9.

Furthermore, in the present embodiment, the decoding unit 101 sets a head address for pointing at a variable X positioned at a head of the variable matrix Q14 in the memory 102, in a variable queue pointer xadr indicating a position at which the variable X to be processed is arranged in the variable matrix Q14 (xadr←init) (Step S201) .

Next, the decoding unit 101 determines whether a value pointed to by the phase pointer p with respect to the zero coefficient position table Q12 in the memory 102 is "0" or "1", similarly to Step S104 in FIG. 9. When the value pointed to by the phase pointer p is "1", the decoding unit 101 reads a non-zero coefficient WQue[wadr] from the non-zero coefficient table Q13 in the memory 102, stores the non-zero coefficient at a predetermined position in the coefficient buffer Wbuf, and increments the non-zero coefficient queue pointer wadr, similarly to Steps S105 to S107 in FIG. 9. When the value pointed to by the phase pointer p is "0", the decoding unit 101 stores the zero value at a predetermined position in the coefficient buffer Wbuf, similarly to Step S108 in FIG. 9.

Next, the decoding unit 101 reads a variable XQue[xadr] pointed to by the variable queue pointer xadr from the variable matrix Q14 in the memory 102 (LOAD XQue[xadr]) (Step S202), and stores the read variable XQue[xadr] at a predetermined position in a variable buffer (Xbuf) 115 (PUSH XQue to Xbuf) (Step S203). Note that the variable buffer 115 is a buffer in which the variable matrix Q14 is read in synchronization with the restoration of the coefficient matrix Q11 during the decoding processing, and the predetermined position may be a position corresponding to the position pointed to by the variable queue pointer xadr in the variable matrix Q14.

Thereafter, the decoding unit 101 increments the variable queue pointer xadr, that is, sets an address at which a next variable X is stored in the variable queue pointer xadr (xadr++) (Step S204), and proceeds to Step S110.

In Step S110, similarly to Step S110 in FIG. 9, the decoding unit 101 determines whether or not the incremented phase pointer p exceeds a maximum value pmax of the phase pointer p indicating a tail of the zero coefficient position table Q12. When the incremented phase pointer p exceeds the maximum value pmax (YES in Step S110), the decoding unit 101 ends this operation. On the other hand, When the incremented phase pointer p does not exceed the maximum value pmax (NO in Step S110), the decoding unit 101 returns to Step S104 and executes the subsequent steps.

By operating the decoding unit 101 as described above, the coefficient matrix Q11 is restored in the coefficient buffer 114, and the variable matrix Q14 to be processed is read into the variable buffer 115.

### 2.1.2 Specific Example of Decoding Processing

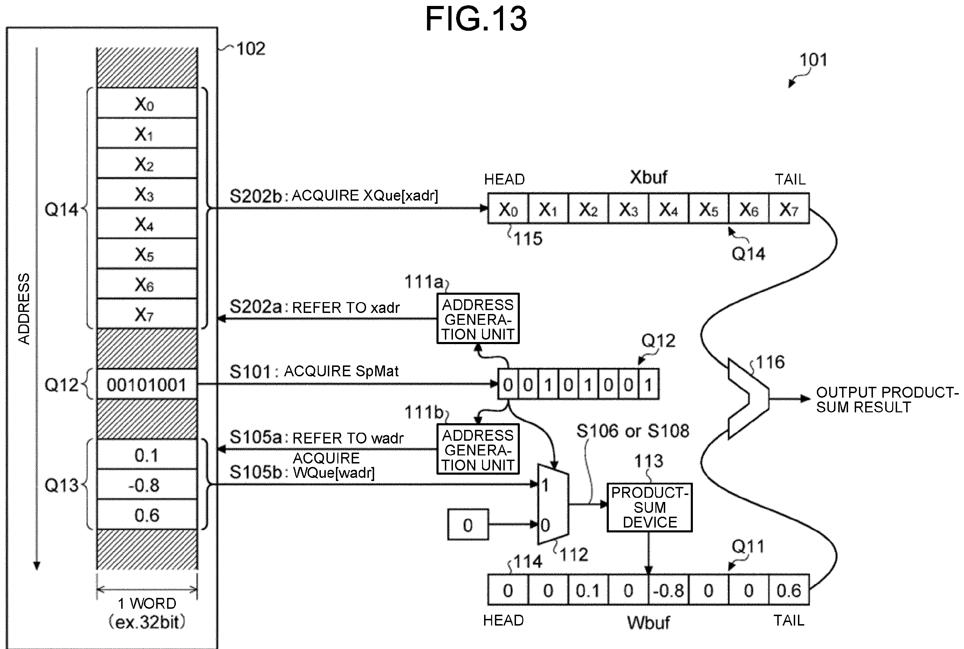

Subsequently, a specific example of decoding processing executed by the decoding unit 101 according to the present embodiment will be described in accordance with the flowchart illustrated in FIG. 12 with reference to FIGS. 13 and 11. FIG. 13 is a diagram for explaining a specific example of decoding processing executed by the decoding unit according to the present embodiment. Note that, similarly to FIGS. 10 and 11, FIG. 13 illustrates a case where the coefficient matrix Q11 has a configuration of 1 row and 8 columns, and non-zero coefficients are stored in the third, fifth, and eighth columns. In addition, it is assumed that the non-zero coefficient in the third column is 0.1, the non-zero coefficient in the fifth column is -0.8, and the non-zero coefficient in the eighth column is 0.6. Further, in FIG. 13, it is assumed that the variable matrix Q14 has a configuration in which eight coefficients X including coefficients X₀ to X₇ are arranged in 1 row and 8 columns.

As illustrated in FIG. 13, the decoding unit 101 includes an address generation unit 111a that generates and manages a non-zero coefficient queue pointer wadr, an address generation unit 111b that generates and manages a variable queue pointer xadr, a selector 112 that outputs either a "non-zero coefficient WQue[wadr]" or "0" according to a value pointed to by the phase pointer p, a product-sum device 113 that restores a coefficient matrix Q11 in a coefficient buffer 114 by sequentially storing the values output from the selector 112 in the coefficient buffer 114, the coefficient buffer 114 that stores the restored coefficient matrix Q11, and a variable buffer 115 that holds a variable matrix Q14 by sequentially storing variables X read from the memory 102.

In the configuration illustrated in FIG. 13, the decoding unit 101 first acquires a zero coefficient position table Q12 (="00101001") and a non-zero coefficient table Q13 (="0.1", "-0.8", "0.6") from the coefficient holding unit 103 (corresponding to Step S101 in FIG. 12). In addition, at a first repetition (itr=0), the decoding unit 101 initializes the phase pointer p to 0, and sets a head address in the non-zero coefficient queue pointer wadr managed by the address generation unit 111a (corresponding to Steps S102 and S103 in FIG. 12). As a result, as illustrated in FIG. 11, the phase pointer p points to "0" which is a leftmost (head) value in the zero coefficient position table Q12, and the non-zero coefficient queue pointer wadr points to "0.1" which is a head value in the non-zero coefficient table Q13.

Furthermore, in the first repetition (itr=0), the decoding unit 101 sets a head address in the variable queue pointer xadr managed by the address generation unit 111b (corresponding to Step S201 in FIG. 12). As a result, the variable queue pointer xadr points to the first value X₀ in the variable matrix Q14.

Next, the decoding unit 101 determines whether the value currently pointed to by the phase pointer p is "0" or "1" (corresponding to Step S104 in FIG. 12). As described above, at itr=0, the phase pointer p points to "0". Therefore, "0" is input to a control terminal of the selector 112. In this case (corresponding to "0" in Step S104 in FIG. 12), the value "0" is input from the selector 112 to the product-sum device 113 without the decoding unit 101 bringing out a value from the non-zero coefficient table Q13. Meanwhile, the product-sum device 113 stores the input value "0" as a head coefficient W in the coefficient buffer 114 (corresponding to Step S108 in FIG. 12).

In addition, referring to the variable matrix Q14 in the memory 102 on the basis of the current variable queue pointer xadr (corresponding to a part of Step S202 in FIG. 12 and Step S202a in FIG. 13), the decoding unit 101 brings out a value XQue[xadr] (=X₀) indicated by the variable queue pointer xadr from the variable matrix Q14, and stores the value in the variable buffer 115 (corresponding to Step S203 in FIG. 12).

Thereafter, the decoding unit 101 increments the phase pointer p by 1 (corresponding to Step S109 in FIG. 12) and shifts to a next repetition (itr=1) (corresponding to NO in Step S110 in FIG. 12).

As illustrated in FIG. 11, at itr=1, similarly to itr=0, a value pointed to by the phase pointer p is "0" (corresponding to "0" in Step S104 in FIG. 12). Therefore, the value "0" is input from the selector 112 to the product-sum device 113 without the decoding unit 101 bringing out a value from the non-zero coefficient table Q13, and this value "0" is stored as a second coefficient W in the coefficient buffer 114 (corresponding to Step S108 in FIG. 12). In addition, the variable matrix Q14 in the memory 102 is referred to on the basis of the current variable queue pointer xadr, and a variable XQue[xadr] (=X₁) acquired thereby is stored in the variable buffer 115 (corresponding to Steps S202 and S203 in FIG. 12). Then, the phase pointer p is incremented by 1 (corresponding to Step S109 in FIG. 12), the variable queue pointer xadr is incremented to an address for pointing to a next variable X₂ by the address generation unit 111b (corresponding to Step S204 in FIG. 12), and a next repetition (itr=2) is executed (corresponding to NO in Step S110 in FIG. 12).

As illustrated in FIG. 11, at itr=2, a value pointed to by the phase pointer p is "1". Therefore, "1" is input to the control terminal of the selector 112. In this case (corresponding to "1" in Step S104 in FIG. 12), referring to the non-zero coefficient table Q13 on the basis of the current non-zero coefficient queue pointer wadr (corresponding to a part of Step S105 in FIG. 12 and Step S105a in FIG. 13), the decoding unit 101 brings out a value (non-zero coefficient) WQue[wadr] (=0.1) pointed to by the non-zero coefficient queue pointer wadr from the non-zero coefficient table Q13, and inputs the value to the selector 112 (corresponding to a part of Step S105 in FIG. 12 and Step S105b in FIG. 13). Meanwhile, since the value input to the control terminal is "1", the selector 112 inputs the input non-zero coefficient WQue[wadr] (=0.1) to the product-sum device 113. Then, the product-sum device 113 stores the input non-zero coefficient WQue[wadr] (=0.1) as a third coefficient W in the coefficient buffer 114 (corresponding to Step S106 in FIG. 12). In addition, the variable matrix Q14 in the memory 102 is referred to on the basis of the current variable queue pointer xadr, and a variable XQue[xadr] (=X₂) acquired thereby is stored in the variable buffer 115 (corresponding to Steps S202 and S203 in FIG. 12).

Thereafter, the non-zero coefficient queue pointer wadr is incremented to an address for pointing to a next non-zero coefficient W by the address generation unit 111a (corresponding to Step S107 in FIG. 12), the phase pointer p is incremented by 1 (corresponding to Step S109 in FIG. 12), and the variable queue pointer xadr is incremented to an address for pointing to a next variable X₃ by the address generation unit 111b (corresponding to Step S204 in FIG. 12). Then, a next repetition (itr=3) is executed (corresponding to NO in Step S110 in FIG. 12).

As illustrated in FIG. 11, at itr=3, similarly to itr=0, a value pointed to by the phase pointer p is "0" (corresponding to "0" in Step S104 in FIG. 12). Therefore, the value "0" is input from the selector 112 to the product-sum device 113 without the decoding unit 101 bringing out a value from the non-zero coefficient table Q13, and this value "0" is stored as a fourth coefficient W in the coefficient buffer 114 (corresponding to Step S108 in FIG. 12). In addition, the variable matrix Q14 in the memory 102 is referred to on the basis of the current variable queue pointer xadr, and a variable XQue[xadr] (=X₃) acquired thereby is stored in the variable buffer 115 (corresponding to Steps S202 and S203 in FIG. 12). Then, the phase pointer p is incremented by 1 (corresponding to Step S109 in FIG. 12), the variable queue pointer xadr is incremented to an address for pointing to a next variable X₄ by the address generation unit 111b (corresponding to Step S204 in FIG. 12), and a next repetition (itr=4) is executed (corresponding to NO in Step S110 in FIG. 12).

As illustrated in FIG. 11, at itr=4, a value pointed to by the phase pointer p is "1" (corresponding to "1" in Step S104 in FIG. 12). Therefore, referring to the non-zero coefficient table Q13 on the basis of the current non-zero coefficient queue pointer wadr (corresponding to a part of Step S105 in FIG. 12 and Step S105a in FIG. 13), the decoding unit 101 brings out a non-zero coefficient WQue[wadr] (=-0.8) pointed to by the non-zero coefficient queue pointer wadr, and inputs the non-zero coefficient to the selector 112 (corresponding to a part of Step S105 in FIG. 12 and Step S105b in FIG. 12). Then, the brought-out non-zero coefficient WQue[wadr] (=-0.8) is input to the product-sum device 113 via the selector 112, and is stored as a fifth coefficient W in the coefficient buffer 114 (corresponding to Step S106 in FIG. 12). In addition, the variable matrix Q14 in the memory 102 is referred to on the basis of the current variable queue pointer xadr, and a variable XQue[xadr] (=X₄) acquired thereby is stored in the variable buffer 115 (corresponding to Steps S202 and S203 in FIG. 12). Thereafter, the non-zero coefficient queue pointer wadr, the phase pointer p, and the variable queue pointer xadr are incremented (corresponding to Steps S107, S109, and S204 in FIG. 12), and next repetitions (itr=5 and itr=6) are executed (corresponding to NO in Step S110 in FIG. 9).

As illustrated in FIG. 11, at each of itr=5 and itr=6, similarly to itr=0, a value pointed to by the phase pointer p is "0" (corresponding to "0" in Step S104 in FIG. 12). Therefore, at each of itr=5 and itr=6, the value "0" is input from the selector 112 to the product-sum device 113 without the decoding unit 101 bringing out a value from the non-zero coefficient table Q13, and this value "0" is stored as each of sixth and seventh coefficients W in the coefficient buffer 114 (corresponding to Step S108 in FIG. 12). In addition, the variable matrix Q14 in the memory 102 is referred to on the basis of the current variable queue pointer xadr, and a variable XQue[xadr] (=X₅, X₆) acquired thereby is stored in the variable buffer 115 (corresponding to Steps S202 and S203 in FIG. 12). Then, the phase pointer p is incremented by 1 (corresponding to Step S109 in FIG. 12), the variable queue pointer xadr is incremented to an address for pointing to a next variable X₇ by the address generation unit 111b (corresponding to Step S204 in FIG. 12), and a next repetition (itr=7) is executed (corresponding to NO in Step S110 in FIG. 12).

As illustrated in FIG. 11, at itr=7, a value pointed to by the phase pointer p is "1" (corresponding to "1" in Step S104 in FIG. 12). Therefore, referring to the non-zero coefficient table Q13 on the basis of the current non-zero coefficient queue pointer wadr (corresponding to a part of Step S105 in FIG. 12 and Step S105a in FIG. 13), the decoding unit 101 brings out a non-zero coefficient WQue[wadr] (=0.6) pointed to by the non-zero coefficient queue pointer wadr, and inputs the non-zero coefficient to the selector 112 (corresponding to a part of Step S105 in FIG. 12 and Step S105b in FIG. 13). Then, the brought-out non-zero coefficient WQue[wadr] (=0.6) is input to the product-sum device 113 via the selector 112, and is stored as an eighth coefficient W in the coefficient buffer 114 (corresponding to Step S106 in FIG. 12). In addition, the variable matrix Q14 in the memory 102 is referred to on the basis of the current variable queue pointer xadr, and a variable XQue[xadr] (=X₇) acquired thereby is stored in the variable buffer 115 (corresponding to Steps S202 and S203 in FIG. 12).

Thereafter, the non-zero coefficient queue pointer wadr, the phase pointer p, and the variable queue pointer xadr are incremented (corresponding to Steps S107, S109, and S204 in FIG. 12), but the incremented phase pointer p exceeds the maximum value pmax (YES in Step S110 in FIG. 12). Therefore, the decoding unit 101 ends this operation without shifting to a next repetition.

By operating the decoding unit 101 as described above, after the processing is completed, the coefficient matrix Q11 including "0", "0", "0.1", "0", "-0.8", "0", "0", and "0.6" is restored in the coefficient buffer 114, and the variable matrix Q14 including "X₀", "X₁", "X₂", "X₃", "X₄", "X₅", "X₆", and "X₇" is arranged in the variable buffer 115. Note that the coefficients of the coefficient matrix Q11 restored in the coefficient buffer 114 and the variables of the variable matrix Q14 arranged in the variable buffer 115 are sequentially read from the respective heads and input to a product-sum circuit 116, whereby convolution processing is executed based on a product-sum operation.

The decoding algorithm described above can be implemented in hardware in the decoding unit 101. In a case where an order circuit is configured in such a manner that the number of clocks required for the processing until the phase pointer p is incremented by 1 is 1 clock (CLK), 1 CLK is required to read the zero coefficient position table Q12, and 8 CLK is required to obtain decoding values "0", "0", "0.1", "0", "-0.8", "0", "0", and "0.6". Therefore, the coefficient matrix Q11 can be decoded with a total of 9 CLK.

### 2.2 Action and Effect

By incrementing the variable queue pointer xadr at the timing of incrementing the phase pointer p by 1 as described above, a position on the variable matrix Q14 pointed to by the variable queue pointer xadr can be synchronized with a position on the coefficient matrix Q11 pointed to by the non-zero coefficient queue pointer wadr. As a result, the coefficients W in the coefficient buffer 114 and the variables X in the variable buffer 115 can be arranged in an operation order, thereby making it easy to input the coefficients W and the variables X to the product-sum circuit 116. At this time, by configuring the coefficient buffer 114 and the variable buffer 115 as first-in first-out (FIFO) buffers, the coefficients W and the variables X can be sequentially input to the product-sum circuit 116 before all of the coefficients W and the variables X are completely stored in the coefficient buffer 114 and the variable buffer 115, thereby making it possible to further shorten a time required from the start of the decoding of the coefficient matrix Q11 to the completion of the convolution processing.

Other configurations, operations, and effects may be similar to those of the above-described embodiment, and thus, the detailed description thereof will be omitted here.

### 3. Third Embodiment

In the convolution processing according to the above-described embodiment, regardless of whether the coefficient W is a zero coefficient or a non-zero coefficient, a product-sum operation is performed on variables X for all the coefficients W. However, a zero coefficient multiplied by a variable X results in zero, regardless of what value the variable X has. Therefore, in the present embodiment, a case where arithmetic processing on zero coefficients is omitted, to improve an overall throughput and further shorten a time required from the start of the decoding of the coefficient matrix Q11 to the completion of the convolution processing, will be described with an example.

Note that a neural network processing apparatus according to the present embodiment may have a configuration similar to that of the neural network processing apparatus 11 described with reference to FIG. 7, etc. according to the first embodiment, and thus, the detailed description thereof will be omitted here. Furthermore, in the following description, it is assumed that a variable matrix Q14 to be convolved has the same data length and the same data structure as the coefficient matrix Q11 to be used for convolution processing.

### 3.1 Omission of Product-Sum Operation on Zero Coefficients

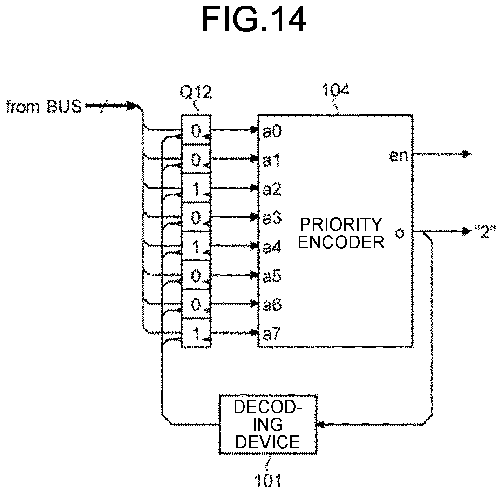

As a configuration for performing operations on non-zero coefficients while omitting operations on zero coefficients in a product-sum operation, for example, a priority encoder can be used. FIG. 14 is a diagram for explaining a priority encoder according to the present embodiment.

A general priority encoder is a circuit that outputs a value corresponding to an input to which "1" is input. In the present embodiment, a priority encoder needs to be configured to output one value even in a case where "1" is input to a plurality of inputs. Therefore, in the present embodiment, priorities are set for a plurality of inputs of a priority encoder 104.

As illustrated in FIG. 14, in the present embodiment, the number of active inputs of the priority encoder 104 is the same as the number of times "0" and "1" are included in the zero coefficient position table Q12, that is, the number of coefficients W constituting the coefficient matrix Q11 (eight in FIG. 14). The value "0" or "1" is input to each of the inputs as arranged in the zero coefficient position table Q12. Therefore, in the present embodiment, priorities are set for the respective inputs of the priority encoder 104 in accordance with the arrangement of values in the zero coefficient position table Q12.

In the example illustrated in FIG. 14, the priority encoder 104 includes eight inputs "a0" to "a7", while a lower priority is set as a number attached to "a" is larger, with the highest priority being set to the input "a0" to which the head value in the zero coefficient position table Q12 is input, and the lowest priority being set to the input "a7" to which the tail value in the zero coefficient position table Q12 is input. Note that, in the present description, it is assumed that a value q corresponding to a number attached to each "a" is set to each of the inputs "a0" to "a7".

An enable terminal en in the priority encoder 104 may be a terminal that outputs whether "1" has been input to at least one of the inputs "a0" to "a7". For example, in a case where "0" is input to all the inputs "a0" to "a7", the priority encoder 104 may output "1" as an enable signal. In this case, "0" may be output from the product-sum circuit 116 as a product-sum operation result. On the other hand, in a case where "1" is input to at least one of the inputs "a0" to "a7", the priority encoder 104 may output, for example, "0" as an enable signal. In this case, a value obtained by performing a product-sum operation on the coefficients W stored in the coefficient buffer 114 and the variables X stored in the variable buffer 115 may be output from the product-sum circuit 116.

For example, when the zero coefficient position table Q12 of "00101001" is input to the priority encoder 104, "0" is input to the inputs "a0", "a1", "a3", "a5", and "a6", and "1" is input to the inputs "a2", "s5", and "a8", among the eight inputs "a0" to "a7" of the priority encoder 104. In this case, since the input having the highest priority among the inputs "a2", "s5", and "a8" is the input "a2", the value q=2 set to the input "a2" is output from the output o of the priority encoder 104.

The value q output from the priority encoder 104 is used, for example, to set a phase pointer q indicating a position of a variable X read from the variable matrix Q14. For example, in a case where the value output from the priority encoder 104 is "2", "2" is set to the phase pointer q so that the phase pointer q points to a third variable X₂ when counted from the head of the variable matrix Q14. Similarly, in a case where the value output from the priority encoder 104 is "4", "4" is set to the phase pointer q so that the phase pointer q points to a fifth variable X₄ when counted from the head of the variable matrix Q14.

Note that, after the value of the phase pointer q is set according to the output of the priority encoder 104, the value on the zero coefficient position table Q12 corresponding to the input used as an output o is rewritten, for example, from "1" to "0" by the decoding unit 101. For example, at itr=0 where the phase pointer q is set as "2" set to the input "a2" is output from the priority encoder 104 with the zero coefficient position table Q12 of "00101001" being input, the zero coefficient position table Q12 is rewritten to "00001001" by the decoding unit 101. As a result, values input to the inputs "a0" to "a7" of the priority encoder 104 become "00001001", and a value output from the priority encoder 104 next becomes "4" set to the input "a4". As a result, at itr=1, the phase pointer q is updated so that the phase pointer q points to a fifth variable X₄ when counted from the head of the variable matrix Q14.

### 3.2 Decoding Unit Suitable for Decoding Sparsely Represented Coefficients

Similarly to the decoding unit 101 according to the above-described embodiment, the decoding unit 101 according to the present embodiment can be implemented as software, or can be implemented as hardware. In the following description, the decoding unit implemented as a hardware configuration will be described with a specific example.

### 3.2.1 Decoding Processing Executed by Decoding Unit

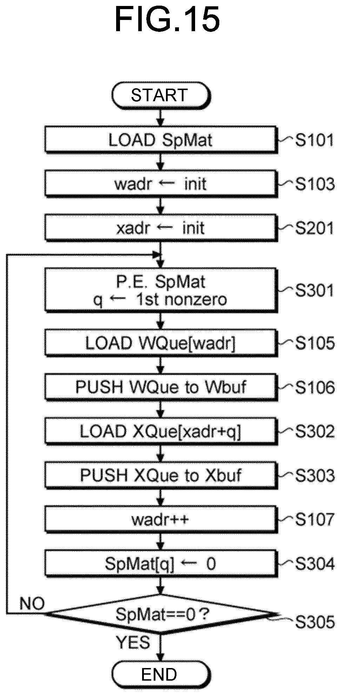

FIG. 15 is a flowchart illustrating an example of a series of operations executed by the decoding unit according to the present embodiment, that is, processing for decoding sparsely represented coefficients. In FIG. 15, the decoding processing executed by the decoding unit is described as a flowchart for the sake of clarity, but actually, a decoding algorithm according to FIG. 15 may be implemented as a hardware configuration in the decoding units 41, 61, and 81 of the neural network processing apparatus 11 illustrated in FIG. 7. In addition, concerning an operation in FIG. 15 that is the same as the operation illustrated in FIG. 9 or 12, the same will be cited, and the detailed description thereof will be omitted.

As illustrated in FIG. 15, the decoding unit 101 first reads a zero coefficient position table (SpMat) Q12 and a non-zero coefficient table Q13 from the coefficient holding unit 103, and sets a head address in the non-zero coefficient queue pointer wadr, similarly to Steps S101 and S103 in FIG. 9. In addition, the decoding unit 101 sets a head address to the variable queue pointer xadr, similarly to Step S201 in FIG. 12.

Next, the zero coefficient position table Q12 read by the decoding unit 101 is input to the priority encoder 104 for evaluation, such that an input having the highest priority among inputs to which "1" is input (that is, an input corresponding to the first "1" in the zero coefficient position table Q12) is specified (P.E. SpMat), and a value set to the specified input is set to the phase pointer q (q←1st nonzero) (Step S301).

Next, similarly to Steps S105 and S106 in FIG. 9, the decoding unit 101 reads a non-zero coefficient WQue[wadr] from the non-zero coefficient table Q13 in the memory 102, and stores the non-zero coefficient WQue[wadr] at a predetermined position in the coefficient buffer Wbuf.

Next, the decoding unit 101 reads a variable XQue[xadr+q] stored at an address (xadr+q) to which the variable queue pointer xadr has shifted as much as the value of the phase pointer q (from the initial address) in the variable matrix Q14 in the memory 102 (LOAD XQue[xadr+q]) (Step S302), and stores the read variable XQue[xadr+q] at a predetermined position in the variable buffer (Xbuf) 115 (PUSH XQue to Xbuf) (Step S303).

Next, the decoding unit 101 increments the non-zero coefficient queue pointer wadr, similarly to Step S107 in FIG. 9.

Next, the decoding unit 101 rewrites a value in the zero coefficient position table Q12 corresponding to the input specified in Step S301 to "0" (SpMat[q]) (Step S304).

Thereafter, the decoding unit 101 determines whether or not all values in the zero coefficient position table Q12 after being updated in Step S304 are "0" (SpMat==0?) (Step S305). When all the values in the updated zero coefficient position table Q12 are "0" (YES in Step S305), the decoding unit 101 ends this operation. On the other hand, when the zero coefficient position table Q12 includes "1" (NO in Step S305), the decoding unit 101 returns to Step S301 and executes the subsequent operations.

By operating the decoding unit 101 as described above, the non-zero coefficients W extracted from the coefficient matrix Q11 are stored in the coefficient buffer 114, and the variables X corresponding to the non-zero coefficients W stored in the coefficient buffer 114 are stored in the variable buffer 115. As a result, the number of times of multiplication of the coefficients W and the variables X executed by the product-sum circuit 116 can be greatly reduced, thereby greatly reducing a time required from the start of the decoding of the coefficient matrix to the completion of the convolution processing.

### 3.2.2 Specific Example of Decoding Processing

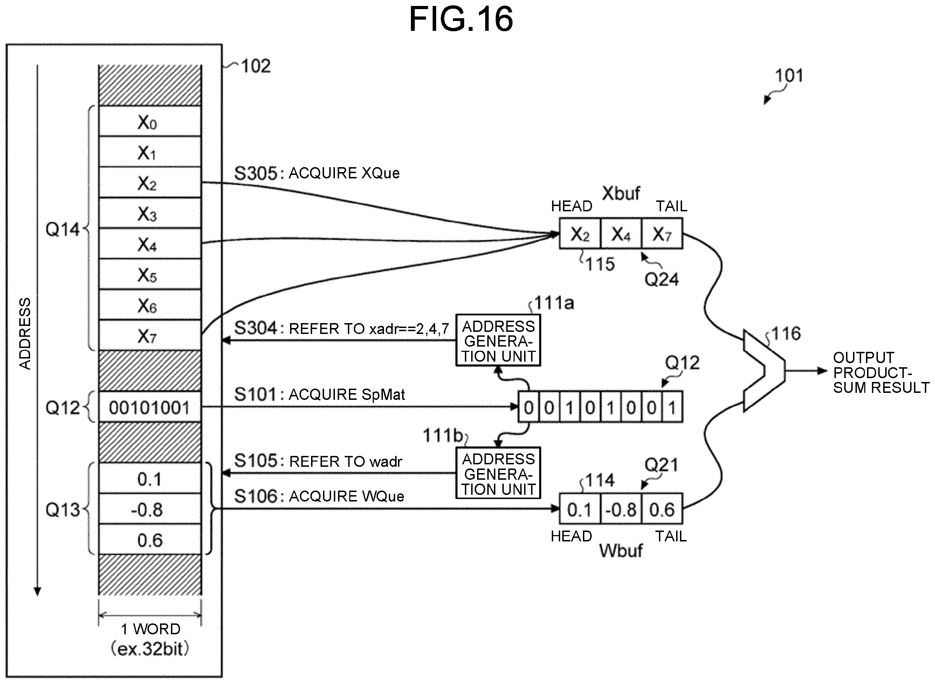

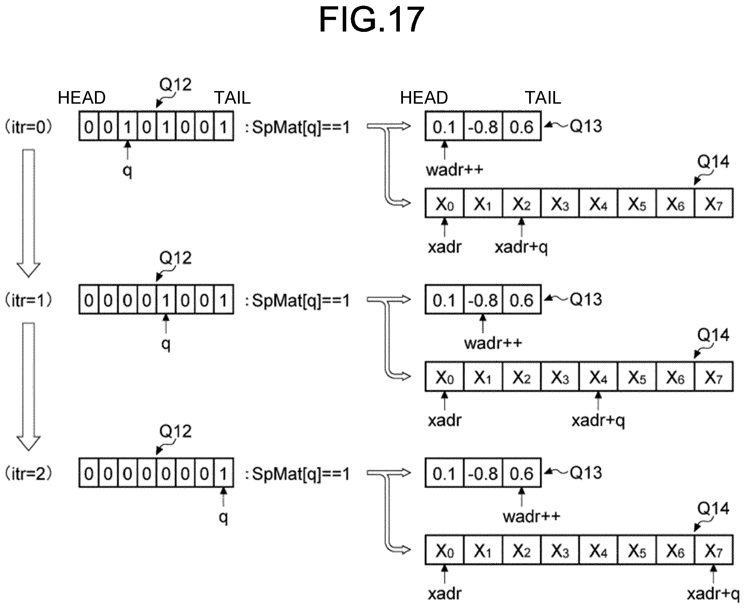

Subsequently, a specific example of decoding processing executed by the decoding unit 101 according to the present embodiment will be described in accordance with the flowchart illustrated in FIG. 15 with reference to FIGS. 16 and 17. FIG. 16 is a diagram for explaining a specific example of decoding processing executed by the decoding unit according to the present embodiment. FIG. 17 is a diagram for explaining movements of the phase pointer, the non-zero coefficient queue pointer, and the variable queue pointer in the specific example illustrated in FIG. 16. Note that, similarly to FIGS. 10 and 11, FIG. 16 and 17 illustrate a case where the coefficient matrix Q11 has a configuration of 1 row and 8 columns, and non-zero coefficients are stored in the third, fifth, and eighth columns. In addition, it is assumed that the non-zero coefficient in the third column is 0.1, the non-zero coefficient in the fifth column is -0.8, and the non-zero coefficient in the eighth column is 0.6. Further, in FIGS. 16 and 17, similarly to FIG. 13, it is assumed that the variable matrix Q14 has a configuration in which eight coefficients X including coefficients Xo to X₇ are arranged in 1 row and 8 columns.

As illustrated in FIG. 16, the decoding unit 101 includes an address generation unit 111a that generates and manages a non-zero coefficient queue pointer wadr, an address generation unit 111b that generates and manages a variable queue pointer xadr, a coefficient buffer 114 that holds a coefficient matrix Q21 including non-zero coefficients W by sequentially storing the coefficients W read from the memory 102, and a variable buffer 115 that holds a variable matrix Q24 including variables X to be multiplied by non-zero coefficients W by sequentially storing the variables X read from the memory 102.

In the configuration illustrated in FIG. 16, the decoding unit 101 first acquires a zero coefficient position table Q12 (="00101001") and a non-zero coefficient table Q13 (="0.1", "-0.8", "0.6") from the coefficient holding unit 103 (corresponding to Step S101 in FIG. 15). In addition, at a first repetition (itr=0), the decoding unit 101 sets a head address to the non-zero coefficient queue pointer wadr managed by the address generation unit 111a and a head address to the variable queue pointer xadr managed by the address generation unit 111b (corresponding to Steps S103 and S201 in FIG. 15). As a result, as illustrated in FIG. 17, the non-zero coefficient queue pointer wadr points to a head value "0.1" in the non-zero coefficient table Q13, and the variable queue pointer xadr points to a head variable X₀ in the variable matrix Q14.

Next, the decoding unit 101 inputs the read zero coefficient position table Q12 to the priority encoder 104, and specifies a head of positions of "1", that is, a position of a head non-zero coefficient W in the coefficient matrix Q11. As described above, at itr=0, since the zero coefficient position table Q12 is a matrix of "00101001", the priority encoder 104 outputs the value p=2 set to the input a2 as an output o. Meanwhile, the decoding unit 101 sets the value q=2 output from the priority encoder 104 to the phase pointer q (corresponding to Step S301 in FIG. 15).

Next, referring to the non-zero coefficient table Q13 on the basis of the current non-zero coefficient queue pointer wadr (corresponding to Step S105 in FIGS. 15 and 16), the decoding unit 101 brings out a value (non-zero coefficient) WQue[wadr] (=0.1) pointed to by the non-zero coefficient queue pointer wadr from the non-zero coefficient table Q13, and stores the value in the coefficient buffer 114 (corresponding to Step S106 in FIGS. 15 and 16).

In addition, referring to the variable matrix Q14 on the basis of the current variable queue pointer xadr and the phase pointer q (corresponding to Step S302 in FIGS. 15 and 16), the decoding unit 101 brings out, from the variable matrix Q14, a variable XQue[wadr+q] (=X₂) stored at an address to which the variable queue pointer xadr has shifted toward the tail of the variable matrix Q14 as much as the value of the phase pointer q, and stores the variable XQue[wadr+q] in the variable buffer 115 (corresponding to Step S303 in FIGS. 15 and 16) .

Thereafter, the non-zero coefficient queue pointer wadr is incremented to an address for pointing to a next non-zero coefficient W by the address generation unit 111a (corresponding to Step S107 in FIG. 15), and the value "1" in the zero coefficient position table Q12 currently pointed to by the phase pointer q is updated to "0" (corresponding to Step S304 in FIG. 15). Subsequently, the decoding unit 101 determines whether or not all values in the zero coefficient position table Q12 are "0" (corresponding to Step S305 in FIG. 15), and a next repetition (itr=1) is executed (corresponding to NO in Step S305 in FIG. 15).

As illustrated in FIG. 17, at itr=1, since the zero coefficient position table Q12 is a matrix of "00001001", the priority encoder 104 outputs the value p=4 set to the input a4 as an output o. Meanwhile, the decoding unit 101 sets the value q=4 output from the priority encoder 104 to the phase pointer q (corresponding to Step S301 in FIG. 15).

Next, referring to the non-zero coefficient table Q13 on the basis of the current non-zero coefficient queue pointer wadr (corresponding to Step S105 in FIGS. 15 and 16), the decoding unit 101 brings out a value (non-zero coefficient) WQue[wadr] (=-0.8) pointed to by the non-zero coefficient queue pointer wadr from the non-zero coefficient table Q13, and stores the value in the coefficient buffer 114 (corresponding to Step S106 in FIGS. 15 and 16).

In addition, referring to the variable matrix Q14 on the basis of the current variable queue pointer xadr and the phase pointer q (corresponding to Step S302 in FIGS. 15 and 16), the decoding unit 101 brings out, from the variable matrix Q14, a variable XQue[wadr+q] (=X₄) stored at an address to which the variable queue pointer xadr has shifted toward the tail of the variable matrix Q14 as much as the value of the phase pointer q, and stores the variable XQue[wadr+q] in the variable buffer 115 (corresponding to Step S303 in FIGS. 15 and 16) .

Thereafter, the non-zero coefficient queue pointer wadr is incremented to an address for pointing to a next non-zero coefficient W by the address generation unit 111a (corresponding to Step S107 in FIG. 15), and the value "1" in the zero coefficient position table Q12 currently pointed to by the phase pointer q is updated to "0" (corresponding to Step S304 in FIG. 15). Subsequently, the decoding unit 101 determines whether or not all values in the zero coefficient position table Q12 are "0" (corresponding to Step S305 in FIG. 15), and a next repetition (itr=2) is executed (corresponding to NO in Step S305 in FIG. 15).

As illustrated in FIG. 17, at itr=2, since the zero coefficient position table Q12 is a matrix of "00000001", the priority encoder 104 outputs the value p=7 set to the input a7 as an output o. Meanwhile, the decoding unit 101 sets the value q=7 output from the priority encoder 104 to the phase pointer q (corresponding to Step S301 in FIG. 15).

Next, referring to the non-zero coefficient table Q13 on the basis of the current non-zero coefficient queue pointer wadr (corresponding to Step S105 in FIGS. 15 and 16), the decoding unit 101 brings out a value (non-zero coefficient) WQue[wadr] (=0.6) pointed to by the non-zero coefficient queue pointer wadr from the non-zero coefficient table Q13, and stores the value in the coefficient buffer 114 (corresponding to Step S106 in FIGS. 15 and 16).

In addition, referring to the variable matrix Q14 on the basis of the current variable queue pointer xadr and the phase pointer q (corresponding to Step S302 in FIGS. 15 and 16), the decoding unit 101 brings out, from the variable matrix Q14, a variable XQue[wadr+q] (=X₇) stored at an address to which the variable queue pointer xadr has shifted toward the tail of the variable matrix Q14 as much as the value of the phase pointer q, and stores the variable XQue[wadr+q] in the variable buffer 115 (corresponding to Step S303 in FIGS. 15 and 16) .

Thereafter, the non-zero coefficient queue pointer wadr is incremented to an address for pointing to a next non-zero coefficient W by the address generation unit 111a (corresponding to Step S107 in FIG. 15), and the value "1" in the zero coefficient position table Q12 currently pointed to by the phase pointer q is updated to "0" (corresponding to Step S304 in FIG. 15). However, since all the values of the zero coefficient position table Q12 become "0" by this update (YES in Step S305 in FIG. 15), the decoding unit 101 ends the present operation without executing a next repetition.

### 3.3 Action and Effect

By operating the decoding unit 101 as described above, after the processing is completed, the coefficient matrix Q21 including non-zero coefficients W is restored in the coefficient buffer 114, and the variable matrix Q24 including variables X corresponding to the non-zero coefficients W is arranged in the variable buffer 115. This makes it possible to reduce the number of clocks (e.g., 3 clocks) required to create the coefficient matrix Q21 to be smaller than the number of clocks (e.g., 8 clocks) required to restore the coefficient matrix Q11. In addition, it is also possible to omit processing of multiplying the zero coefficients W and the variables X in the product-sum operation. As a result, an overall throughput is improved, thereby making it possible to greatly shorten a time required from the start of the decoding of the coefficient matrix Q11 to the completion of the convolution processing. Note that the coefficients of the coefficient matrix Q21 restored in the coefficient buffer 114 and the variables of the variable matrix Q24 arranged in the variable buffer 115 are sequentially read from the respective heads and input to the product-sum circuit 116, whereby convolution processing is executed based on a product-sum operation.

In addition, since the coefficients W and the variables X necessary for the product-sum operation can be selectively read from the memory 102, it is also possible to reduce the bus traffic and reduce the scales of the internal buffers (the coefficient buffer 114, the variable buffer 115, and the like).

Furthermore, similarly to the second embodiment, by configuring the coefficient buffer 114 and the variable buffer 115 as FIFO buffers, the coefficients W and the variables X can be sequentially input to the product-sum circuit 116 before all of the coefficients W and the variables X are completely stored in the coefficient buffer 114 and the variable buffer 115, thereby making it possible to further shorten a time required from the start of the decoding of the coefficient matrix Q11 to the completion of the convolution processing. However, in the third embodiment, the number of times the coefficients W and the variables X are multiplied varies depending on the number of times "1" is included in the zero coefficient position table Q12. Therefore, in the present embodiment, a configuration for causing the product-sum circuit 116 to execute operations in the same number of times as the number of times "1" is included in the zero coefficient position table Q12, a configuration for notifying the product-sum circuit 116 of the end of data in the FIFO control, or the like may be added.

Other configurations, operations, and effects may be similar to those of the above-described embodiment, and thus, the detailed description thereof will be omitted here.

### 4. Fourth Embodiment

In the above-described embodiment, the case where the variable matrix Q14 is not compression-encoded has been exemplified. However, the variable matrix Q14 can be compression-encoded to further reduce the memory amount. Furthermore, in a case where both the coefficient matrix Q11 and the variable matrix Q14 are compression-encoded by sparse representation, it is possible to omit operations of portions other than the portions where both the coefficients W and the variables X are assorted, and thus, it is also possible to reduce a processing amount, shorten a processing time, and the like. Therefore, in the fourth embodiment, a case where the variable matrix Q14 is also compression-encoded by sparse representation in addition to the coefficient matrix Q11 will be described with an example.

Note that a neural network processing apparatus according to the present embodiment may have a configuration similar to that of the neural network processing apparatus 11 described with reference to FIG. 7, etc. in the third embodiment, and thus, the detailed description thereof will be omitted here. Furthermore, in the following description, it is assumed that a variable matrix Q14 to be convolved has the same data length and the same data structure as the coefficient matrix Q11 to be used for convolution processing.

Furthermore, in the present embodiment, it is assumed that, similarly to the coefficient matrix Q11, the variable matrix Q14 is compression-encoded into a zero variable position table Q32 and a non-zero variable table Q33 as illustrated in FIG. 6. Note that the zero variable position table Q32 is a table having the same number of taps as the original variable matrix Q14, and a numerical value in each tap of the zero variable position table Q32 may indicate whether or not a value of a variable X at a position of the variable matrix Q14 corresponding to the tap of the zero variable position table Q32 is 0 (zero). In addition, the non-zero variable table Q33 is a table indicating a value of a variable X that is not a zero variable in the original variable matrix Q14, and a value in each tap of the non-zero variable table Q33 may be a value of one variable X that is not a zero variable in the variable matrix Q14.

### 4.1 Decoding Unit Suitable for Decoding Sparsely Represented Coefficients

Similarly to the decoding unit 101 according to the above-described embodiment, the decoding unit 101 according to the present embodiment can be implemented as software, or can be implemented as hardware. In the following description, the decoding unit implemented as a hardware configuration will be described with a specific example.

### 4.1.1 Decoding Processing Executed by Decoding Unit

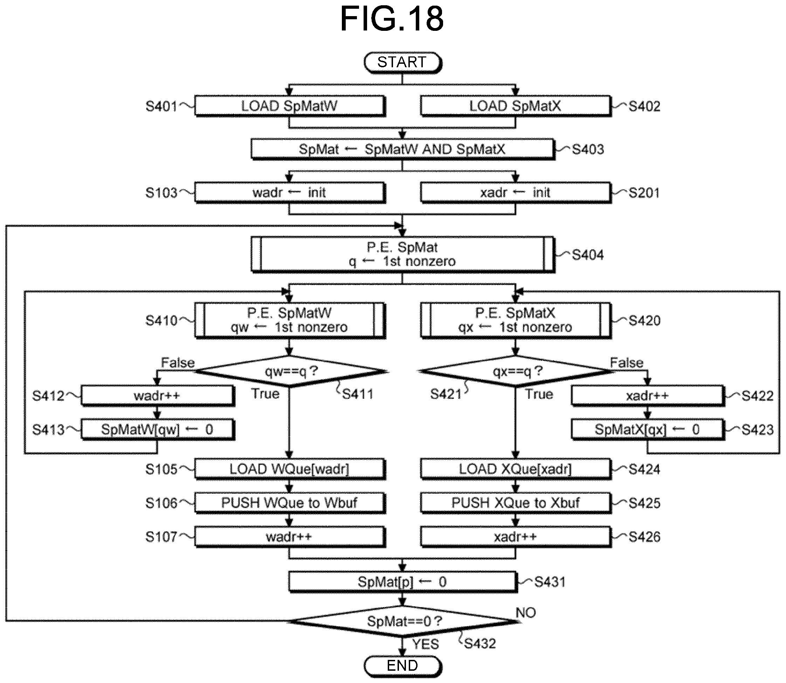

FIG. 18 is a flowchart illustrating an example of a series of operations executed by the decoding unit according to the present embodiment, that is, processing for decoding sparsely represented coefficients. In FIG. 18, the decoding processing executed by the decoding unit is described as a flowchart for the sake of clarity, but actually, a decoding algorithm according to FIG. 18 may be implemented as a hardware configuration in the decoding units 41, 61, and 81 of the neural network processing apparatus 11 illustrated in FIG. 7. In addition, concerning an operation in FIG. 18 that is the same as the operation illustrated in FIG. 9, 12, or 15, the same will be cited, and the detailed description thereof will be omitted.

As illustrated in FIG. 18, the decoding unit 101 first reads a zero coefficient position table (SpMatW) Q12 and a non-zero coefficient table Q13 from the coefficient holding unit 103 (Step S401), and reads a sparsely represented variable matrix (SpMatX) stored in a predetermined memory region, that is, a zero variable position table (SpMatX) 32 and a non-zero variable table Q33 (Step S402). The read zero coefficient position table Q12 and non-zero coefficient table Q13, and the read zero variable position table Q32 and non-zero variable table Q33 are stored, for example, at known addresses in the memory 102 of the decoding unit 101.

Next, the decoding unit 101 calculates logical products (AND) of corresponding values between the zero coefficient position table Q12 and the zero variable position table Q32 to generate a non-zero position table (SpMat) Q40 indicating positions of taps where non-zero values exist in both the coefficient matrix Q11 and the variable matrix Q14 (Step S403).

Next, the decoding unit 101 sets a head address to the non-zero coefficient queue pointer wadr similarly to Step S103 in FIG. 9, and sets a head address to the variable queue pointer xadr similarly to Step S201 in FIG. 12.

Next, the decoding unit 101 inputs the non-zero position table Q40 generated in Step S403 to the priority encoder 104 for evaluation, such that an input having the highest priority among inputs to which "1" is input (that is, an input corresponding to the first "1" in the non-zero position table Q40) is specified (P.E. SpMat), and a value set to the specified input is set to the phase pointer q (q←1st nonzero) (Step S404).

Subsequently, the decoding unit 101 executes operations of Steps S410 to S107 and operations of Steps S420 to S426 illustrated in FIG. 18. These operations may be executed in parallel on hardware, and thus, these operations are illustrated in parallel in the flowchart of FIG. 18.

In the operations of Steps S410 to S107, the decoding unit 101 first inputs the zero coefficient position table (SpMatW) Q12 read in Step S401 to the priority encoder 104 for evaluation, such that an input having the highest priority among inputs to which "1" is input (that is, an input corresponding to the first "1" in the zero coefficient position table Q12) is specified (P.E. SpMatW), and a value set to the specified input is set to a phase pointer qw (qw←1st nonzero) (Step S410).

Next, the decoding unit 101 determines whether or not the phase pointer q for the non-zero position table Q40 set in Step S404 and the phase pointer qw for the zero coefficient position table Q12 set in Step S410 have the same value (qw==q?) (Step S411). When the phase pointer qw and the phase pointer q do not have the same value (False in Step S411), the decoding unit 101 increments the non-zero coefficient queue pointer wadr (wadr++) (Step S412), rewrites a value in the zero coefficient position table Q12 pointed to by the phase pointer qw from "1" to "0" (SpMatW[qw]←0) (Step S413), and returns to Step S410. On the other hand, when the phase pointer qw and the phase pointer q have the same value (True in Step S411), the decoding unit 101 reads a non-zero coefficient WQue[wadr] from the non-zero coefficient table Q13 in the memory 102, stores the non-zero coefficient WQue[wadr] at a predetermined position in the coefficient buffer Wbuf, and increments the non-zero coefficient queue pointer wadr, similarly to Steps S105 to S107 in FIG. 9. Then, the decoding unit 101 shifts to Step S431.

Meanwhile, in the operations of Steps S420 to S426 executed in parallel to Steps S410 to S107, the decoding unit 101 first inputs the zero variable position table (SpMatX) Q32 read in Step S402 to the priority encoder 104 for evaluation, such that an input having the highest priority among inputs to which "1" is input (that is, an input corresponding to the first "1" in the zero variable position table Q32) is specified (P.E. SpMatX), and a value set to the specified input is set to a phase pointer qx (qx←1st nonzero) (Step S420).

Next, the decoding unit 101 determines whether or not the phase pointer q for the non-zero position table Q40 set in Step S404 and the phase pointer qx for the zero variable position table Q32 set in Step S420 have the same value (qx==q?) (Step S421). When the phase pointer qx and the phase pointer q do not have the same value (False in Step S421), the decoding unit 101 increments the variable queue pointer xadr (xadr++) (Step S422), rewrites a value in the zero variable position table Q32 pointed to by the phase pointer qx from "1" to "0" (SpMatX[qx]<-0) (Step S423), and returns to Step S420. On the other hand, when the phase pointer qx and the phase pointer q have the same value (True in Step S421), the decoding unit 101 reads a non-zero variable XQue[xadr] from the non-zero variable table Q33 in the memory 102 (Step S424), stores the read non-zero variable XQue[xadr] at a predetermined position in the variable buffer Xbuf (Step S425), and increments the non-zero variable queue pointer xadr (Step S426). Then, the decoding unit 101 shifts to Step S431.

By executing the operations of Steps S410 to S107 and the operations of Steps S420 to S426 in parallel as described above, both the coefficients W and the variables X can be stored in the coefficient buffer 114 and the variable buffer 115, respectively, in an assorted manner.

In Step S431, the decoding unit 101 rewrites a value in the non-zero position table Q40 corresponding to the input specified in Step S404 to "0" (SpMat[q]). Then, the decoding unit 101 determines whether or not all values in the non-zero position table Q40 after being updated in Step S431 are "0" (SpMat==0?) (Step S432). When all the values in the non-zero position table Q40 are "0" (YES in Step S432), the decoding unit 101 ends this operation. On the other hand, when the non-zero position table Q40 includes "1" (NO in Step S432), the decoding unit 101 returns to Step S404 and executes the subsequent operations.

By operating the decoding unit 101 as described above, both the coefficients W and the variables X are assorted into the coefficient buffer 114 and the variable buffer 115, respectively, that is, non-zero coefficients W and non-zero variables X are stored in the coefficient buffer 114 and the variable buffer 115, respectively. Therefore, a memory amount can be reduced. Furthermore, it is possible to omit operations of portions other than the portions into which both the coefficients W and the variables X are assorted, and thus, it is also possible to reduce a processing amount, shorten a processing time, and the like. As a result, the number of times of multiplication of the coefficients W and the variables X executed by the product-sum circuit 116 can be greatly reduced, thereby greatly reducing a time required from the start of the decoding of the coefficient matrix to the completion of the convolution processing.

### 4.1.2 Specific Example of Decoding Processing

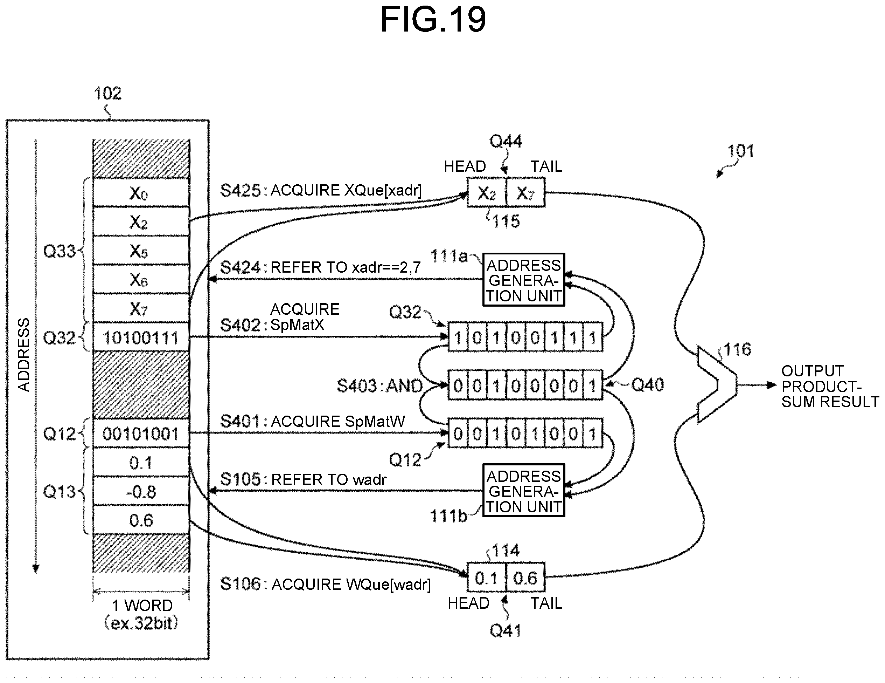

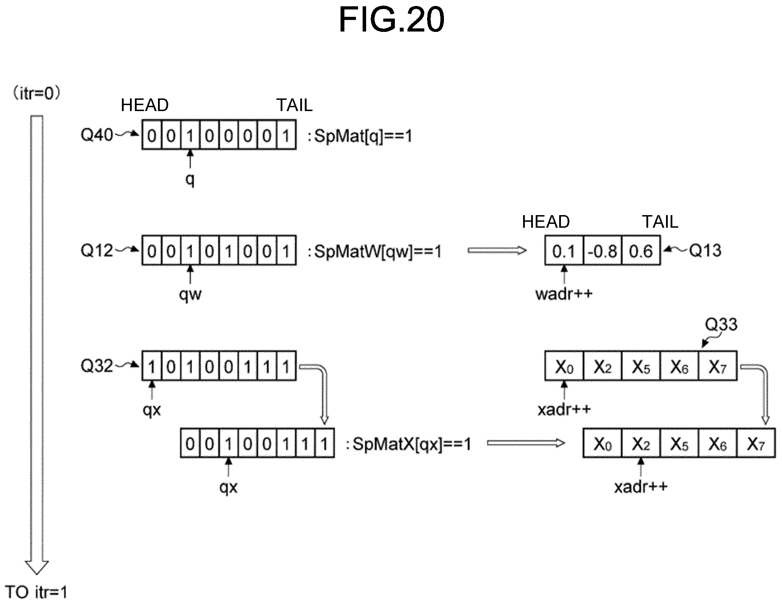

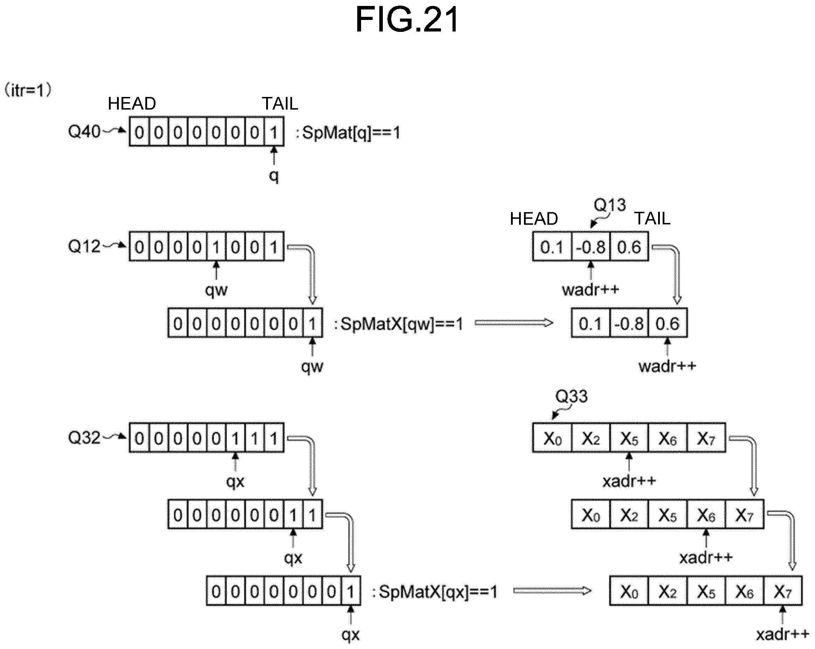

Subsequently, a specific example of decoding processing executed by the decoding unit 101 according to the present embodiment will be described in accordance with the flowchart illustrated in FIG. 18 with reference to FIGS. 19, 20, and 21. FIG. 19 is a diagram for explaining a specific example of decoding processing executed by the decoding unit according to the present embodiment. FIGS. 20 and 21 are diagrams for explaining movements of the phase pointer, the non-zero coefficient queue pointer, and the variable queue pointer in the specific example illustrated in FIG. 19. Note that, similarly to FIGS. 10 and 11, FIGS. 19 to 21 illustrates a case where the coefficient matrix Q11 has a configuration of 1 row and 8 columns, and non-zero coefficients are stored in the third, fifth, and eighth columns. In addition, it is assumed that the non-zero coefficient in the third column is 0.1, the non-zero coefficient in the fifth column is -0.8, and the non-zero coefficient in the eighth column is 0.6. Further, in FIGS. 19 to 21, similarly to FIG. 13, it is assumed that the variable matrix Q14 has a configuration in which eight coefficients X including coefficients X₀ to X₇ are arranged in 1 row and 8 columns.

As illustrated in FIG. 19, the decoding unit 101 includes an address generation unit 111a that generates and manages a non-zero coefficient queue pointer wadr, an address generation unit 111b that generates and manages a variable queue pointer xadr, a coefficient buffer 114 that holds a coefficient matrix Q21 including non-zero coefficients W by sequentially storing the coefficients W read from the memory 102, and a variable buffer 115 that holds a variable matrix Q24 including variables X to be multiplied by non-zero coefficients W by sequentially storing the variables X read from the memory 102.

In the configuration illustrated in FIG. 19, the decoding unit 101 first acquires a zero coefficient position table ((SpMatW) Q12 (="00101001") and a non-zero coefficient table Q13 (="0.1", "-0.8", "0.6") from the coefficient holding unit 103 (corresponding to Step S401 in FIG. 18), and acquires a zero variable position table (SpMatX) Q32 and a non-zero variable table Q33 from a predetermined memory region (corresponding to Step S402 in FIG. 18). Then, the decoding unit 101 calculates the logical products of the zero coefficient position table Q12 and the zero variable position table Q32 to generate a non-zero position table (SpMat) Q40 indicating positions into which both the coefficients W and the variables X are assorted (corresponding to Step S403 in FIG. 18).

In addition, at a first repetition (itr=0), the decoding unit 101 sets a head address to the non-zero coefficient queue pointer wadr managed by the address generation unit 111a and a head address to the variable queue pointer xadr managed by the address generation unit 111b (corresponding to Steps S103 and S201 in FIG. 18). As a result, as illustrated in FIG. 20, the non-zero coefficient queue pointer wadr points to a head value "0.1" in the non-zero coefficient table Q13, and the variable queue pointer xadr points to a head variable Xo in the non-zero variable table Q33.

Next, the decoding unit 101 inputs the read non-zero position table Q40 to the priority encoder 104, and specifies a head of positions of "1", that is, a head of positions at which both the coefficients W and the variables X are assorted. As described above, at itr=0, since the non-zero position table Q40 is a matrix of "00100001", the priority encoder 104 outputs the value p=2 set to the input a2 as an output o. Meanwhile, the decoding unit 101 sets the value q=2 output from the priority encoder 104 to the phase pointer q (corresponding to Step S404 in FIG. 18).

Next, the decoding unit 101 executes the operations in Steps S410 to S107 and the operations in Steps S420 to S426 in FIG. 18 in parallel.

In the operations of Steps S410 to S107 in FIG. 18, the decoding unit 101 inputs the zero coefficient position table Q12 read in Step S401 to the priority encoder 104, and specifies a head of positions of "1", that is, a position of a head non-zero coefficient W in the coefficient matrix Q11. As illustrated in FIG. 20, at itr=0, since the zero coefficient position table Q12 is a matrix of "00101001", the priority encoder 104 outputs the value pw=2 set to the input a2 as an output o. Meanwhile, the decoding unit 101 sets the value qw=2 output from the priority encoder 104 to the phase pointer qw (corresponding to Step S410 in FIG. 18).

Subsequently, the decoding unit 101 compares the phase pointer qw=2 with the phase pointer q=2 (corresponding to Step S411 in FIG. 18). Since the phase pointer qw and the phase pointer q coincide with each other (corresponding to True in Step S411 in FIG. 18), the decoding unit 101 refers to the non-zero coefficient table Q13 on the basis of the current non-zero coefficient queue pointer wadr (corresponding to Step S105 in FIGS. 18 and 19), brings out a value (non-zero coefficient) WQue[wadr] (=0.1) pointed to by the non-zero coefficient queue pointer wadr from the non-zero coefficient table Q13, and stores the value in the coefficient buffer 114 (corresponding to Step S106 in FIGS. 18 and 19). Then, the decoding unit 101 increments the non-zero coefficient queue pointer wadr managed by the address generation unit 111a (corresponding to Step S107 in FIG. 18).

Meanwhile, in the operations of Steps S420 to S426 in FIG. 18, the decoding unit 101 inputs the zero variable position table Q32 read in Step S402 to the priority encoder 104, and specifies a head of positions of "1", that is, a position of a head non-zero variable X in the variable matrix Q14. As illustrated in FIG. 20, at itr=0, since the zero variable position table Q32 is a matrix of "10100111", the priority encoder 104 outputs the value qx=0 set to the input a0 as an output o. Meanwhile, the decoding unit 101 sets the value qx=0 output from the priority encoder 104 to the phase pointer qx (corresponding to Step S420 in FIG. 18).

Subsequently, the decoding unit 101 compares the phase pointer qx=0 with the phase pointer q=2 (corresponding to Step S421 in FIG. 18). Since the phase pointer qx and the phase pointer q do not coincide with each other (corresponding to False in Step S421 in FIG. 18), the decoding unit 101 increments the non-zero variable queue pointer xadr (corresponding to Step S422 in FIG. 18), rewrites a value in the zero variable position table Q32 currently pointed to by the phase pointer qx to "0" (corresponding to Step S423 in FIG. 18), and input the rewritten zero variable position table Q32 to the priority encoder 104 again (corresponding to Step S420 in FIG. 18), as illustrated in FIG. 20.

As illustrated in FIG. 20, since the rewritten zero coefficient position table Q12 is a matrix of "00100111", the value qx=2 is output as an output o from the priority encoder 104. Meanwhile, since the phase pointer qx and the phase pointer q coincide with each other (corresponding to True in Step S421 in FIG. 18), the decoding unit 101 refers to the non-zero variable table Q33 on the basis of the current non-zero variable queue pointer xadr (corresponding to Step S424 in FIGS. 18 and 19), brings out a value (non-zero variable) XQue[xadr] (=X₂) pointed to by the non-zero variable queue pointer xadr from the non-zero variable table Q33, and stores the value in the variable buffer 115 (corresponding to Step S425 in FIGS. 18 and 19). Then, the decoding unit 101 increments the non-zero variable queue pointer xadr managed by the address generation unit 111b (corresponding to Step S426 in FIG. 18).

Thereafter, the decoding unit 101 updates the value "1" in the non-zero position table Q40 currently pointed to by the current phase pointer q is updated to "0" (corresponding to Step S431 in FIG. 18). Subsequently, the decoding unit 101 determines whether or not all values of the non-zero position table Q40 are "0" (corresponding to Step S432 in FIG. 18), and a next repetition (itr=1) is executed (corresponding to NO in Step S432 in FIG. 18).

As illustrated in FIG. 21, at itr=1, since the non-zero position table Q40 is a matrix of "00000001", the priority encoder 104 outputs the value p=7 set to the input a7 as an output o. Meanwhile, the decoding unit 101 sets the value q=7 output from the priority encoder 104 to the phase pointer q (corresponding to Step S404 in FIG. 18) .

Next, in the operations of Steps S410 to S107 in FIG. 18, the decoding unit 101 inputs the zero coefficient position table Q12 read in Step S401 to the priority encoder 104, and specifies a head of positions of "1". As illustrated in FIG. 21, at itr=1, since the zero coefficient position table Q12 is a matrix of "00001001", the priority encoder 104 outputs the value pw=4 set to the input a4 as an output o. Meanwhile, the decoding unit 101 sets the value qw=4 output from the priority encoder 104 to the phase pointer qw (corresponding to Step S410 in FIG. 18).

Subsequently, the decoding unit 101 compares the phase pointer qw=4 with the phase pointer q=7 (corresponding to Step S411 in FIG. 18). Since the phase pointer qw and the phase pointer q do not coincide with each other (corresponding to False in Step S411 in FIG. 18), the decoding unit 101 increments the non-zero coefficient queue pointer wadr (corresponding to Step S412 in FIG. 18), rewrites a value in the zero coefficient position table Q12 currently pointed to by the phase pointer qw to "0" (corresponding to Step S413 in FIG. 18), and inputs the rewritten zero coefficient position table Q12 to the priority encoder 104 again (corresponding to Step S410 in FIG. 18), as illustrated in FIG. 21.

As illustrated in FIG. 21, since the rewritten zero coefficient position table Q12 is a matrix of "00000001", the value qx=7 is output as an output o from the priority encoder 104. Meanwhile, since the phase pointer qw and the phase pointer q coincide with each other (corresponding to True in Step S411 in FIG. 18), the decoding unit 101 refers to the non-zero coefficient table Q13 on the basis of the current non-zero coefficient queue pointer wadr (corresponding to Step S105 in FIGS. 18 and 19), brings out a value (non-zero coefficient) WQue[wadr] (=0.6) pointed to by the non-zero coefficient queue pointer wadr from the non-zero coefficient table Q13, and stores the value in the coefficient buffer 114 (corresponding to Step S106 in FIGS. 18 and 19). Then, the decoding unit 101 increments the non-zero coefficient queue pointer wadr managed by the address generation unit 111a (corresponding to Step S107 in FIG. 18).

Meanwhile, in the operations of Steps S420 to S426 in FIG. 18, the decoding unit 101 inputs the zero variable position table Q32 read in Step S402 to the priority encoder 104, and specifies a head of positions of "1". As illustrated in FIG. 21, at itr=1, since the zero variable position table Q32 is a matrix of "00000111", the priority encoder 104 outputs the value qx=5 set to the input a5 as an output o. Meanwhile, the decoding unit 101 sets the value qx=5 output from the priority encoder 104 to the phase pointer qx (corresponding to Step S420 in FIG. 18).

Subsequently, the decoding unit 101 compares the phase pointer qx=5 with the phase pointer q=2 (corresponding to Step S421 in FIG. 18). Since the phase pointer qx and the phase pointer q do not coincide with each other (corresponding to False in Step S421 in FIG. 18), the decoding unit 101 increments the non-zero variable queue pointer xadr (corresponding to Step S422 in FIG. 18), rewrites a value in the zero variable position table Q32 currently pointed to by the phase pointer qx to "0" (corresponding to Step S423 in FIG. 18), and input the rewritten zero variable position table Q32 to the priority encoder 104 again (corresponding to Step S420 in FIG. 18), as illustrated in FIG. 21.

As illustrated in FIG. 21, since the rewritten zero coefficient position table Q12 is a matrix of "00000011", the priority encoder 104 outputs the value qx=6 set to the input a6 as an output o. Meanwhile, the decoding unit 101 sets the value qx=6 output from the priority encoder 104 to the phase pointer qx (corresponding to Step S420 in FIG. 18).

Subsequently, the decoding unit 101 compares the phase pointer qx=6 with the phase pointer q=2 (corresponding to Step S421 in FIG. 18). Since the phase pointer qx and the phase pointer q do not coincide with each other (corresponding to False in Step S421 in FIG. 18), the decoding unit 101 increments the non-zero variable queue pointer xadr (corresponding to Step S422 in FIG. 18), rewrites a value in the zero variable position table Q32 currently pointed to by the phase pointer qx to "0" (corresponding to Step S423 in FIG. 18), and input the rewritten zero variable position table Q32 to the priority encoder 104 again (corresponding to Step S420 in FIG. 18), as illustrated in FIG. 21.

As illustrated in FIG. 21, since the rewritten zero coefficient position table Q12 is a matrix of "00000001", the value qx=7 is output as an output o from the priority encoder 104. Meanwhile, since the phase pointer qx and the phase pointer q coincide with each other (corresponding to True in Step S421 in FIG. 18), the decoding unit 101 refers to the non-zero variable table Q33 on the basis of the current non-zero variable queue pointer xadr (corresponding to Step S424 in FIGS. 18 and 19), brings out a value (non-zero variable) XQue[xadr] (=X₇) pointed to by the non-zero variable queue pointer xadr from the non-zero variable table Q33, and stores the value in the variable buffer 115 (corresponding to Step S425 in FIGS. 18 and 19). Then, the decoding unit 101 increments the non-zero variable queue pointer xadr managed by the address generation unit 111b (corresponding to Step S426 in FIG. 18).

Thereafter, the value "1" in the non-zero position table Q40 currently pointed to by the phase pointer q is updated to "0" (corresponding to Step S431 in FIG. 18). However, since all the values of the non-zero position table Q40 become "0" by this update (YES in Step S432 in FIG. 18), the decoding unit 101 ends the present operation without executing a next repetition.

### 4.2 Action and Effect

By operating the decoding unit 101 as described above, after the processing is completed, both the coefficients W and the variables X are stored in an assorted state in the coefficient buffer 114 and the variable buffer 115, respectively. As a result, coefficients W and variables X that do not substantially contribute to a product-sum operation are not stored in the coefficient buffer 114 and the variable buffer 115, thereby making it possible to further reduce the memory amount. Furthermore, it is possible to omit operations of portions other than the portions into which both the coefficients W and the variables X are assorted, and thus, it is also possible to reduce a processing amount, shorten a processing time, and the like.

Other configurations, operations, and effects may be similar to those of the above-described embodiment, and thus, the detailed description thereof will be omitted here.

### 5. Fifth Embodiment

In the above-described embodiment, the case where the coefficient matrix (and the variable matrix) compression-encoded by sparse representation is decoded has been exemplified. In contrast, in the fifth embodiment, a case where a product-sum result obtained as a result of convolution processing, that is, a variable matrix, is compression-encoded by sparse representation and written into the memory will be described with an example.

Note that a neural network processing apparatus according to the present embodiment may have a configuration similar to that of the neural network processing apparatus 11 described with reference to FIG. 7 according to the first embodiment, and thus, the detailed description thereof will be omitted here. Furthermore, in the following description, it is assumed that a variable matrix Q14 to be convolved has the same data length and the same data structure as the coefficient matrix Q11 to be used for convolution processing.

### 5.1 Comparative Example

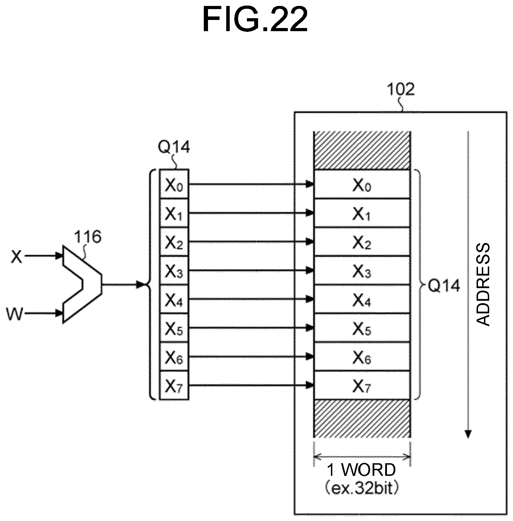

FIG. 22 is a diagram for explaining writing a product-sum result into the memory according to a comparative example. As illustrated in FIG. 22, in the comparative example, variables Xo to X₇, which are product-sum operation results output for each unit of product-sum operation from the product-sum circuit 116 of the convolution processing unit 21/23/25, are sequentially written into the memory 51/71 of the pooling processing unit 22/24 at the next stage, regardless of the values of the variables Xo to X₇. Here, for example, in a case where the variables X₁, X₃, and X₄ are zero as in the variable matrix Q14 exemplified in the above-described embodiment, it is possible to reduce the amount of data on the memory 51/71 by compression-encoding the variable matrix Q14 by sparse representation and then writing the compression-encoded variable matrix Q14 into the memory 51/71.

### 5.2 Encoding Unit

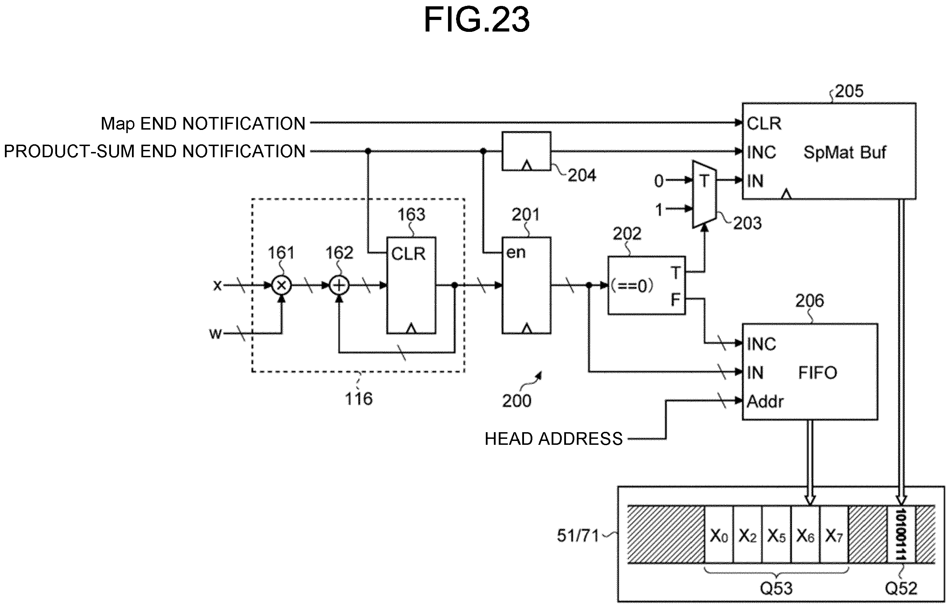

FIG. 23 is a circuit diagram illustrating a schematic configuration example of an encoding unit according to the present embodiment. Note that an encoding unit 200 illustrated in FIG. 23 may be arranged, for example, at an output stage of a product-sum result in each convolution processing unit 21/23/25 of the neural network processing apparatus 11 illustrated in FIG. 7.

As illustrated in FIG. 23, the encoding unit 200 according to the present embodiment includes, for example, a buffer circuit 201, a determination circuit 202, a selector 203, a delay circuit 204, a sparse matrix buffer (SpMat Buf) (first buffer) 205, and a write buffer (second buffer) 206.

Note that the product-sum circuit 116 may be similar to that in the above-described embodiment, and includes, for example, a multiplier 161 that multiplies a variable X and a coefficient W, an adder 162 that adds up multiplication results, and an accumulator 13 that holds an addition result for each unit of product-sum operation.

Every time one product-sum operation is completed, its result is input from an accumulator 163 to the buffer circuit 201 of the encoding unit 200. Furthermore, every time one product-sum operation is completed, a product-sum end notification is input to an enable terminal en of the buffer circuit 201, for example, from the product-sum circuit 116 or the decoding unit 101. When the product-sum end notification is input to the buffer circuit 201, the buffer circuit 201 outputs the product-sum operation result held therein, that is, variables X, to the determination circuit 202 and the write buffer 206.

The determination circuit 202 determines whether a value of each of the input variables X is zero or non-zero. When the value of the variable X is zero (T:True), the determination circuit 202 outputs a control signal indicating that the variable X is zero to the selector 203. On the other hand, when the value of the variable X is non-zero (F:False), the determination circuit 202 outputs a control signal indicating that the variable X is non-zero to the write buffer 206.

The selector 203 inputs a value "0" or "1" to the sparse matrix buffer 205 according to the control signal input from the determination circuit 202. For example, the selector 203 may output "0" to the sparse matrix buffer 205 when the control signal indicating that the variable X is zero is input thereto, and may output "1" when the control signal indicating that the variable X is zero is not input thereto. Note that the determination circuit 202 may be configured to output a control signal indicating that the variable X is non-zero to the selector 203, and the selector 203 may receive the control signal and output "1" to the sparse matrix buffer 205.

A product-sum end notification is input to the sparse matrix buffer 205 via the delay circuit 204 for matching the timing. The sparse matrix buffer 205 sequentially holds the values "0" or "1" input from the selector 203 according to the level transition of the product-sum end notification. Thus, a zero variable position table Q52 is constructed in the sparse matrix buffer 205 as a product-sum operation result. Thereafter, for example, when a map end notification is input from the decoding unit 101 or the like, the zero variable position table Q52 held in the sparse matrix buffer 205 is written into the memory 51/71 of the pooling processing unit 22/24 at the next stage, and the zero variable position table Q52 in the sparse matrix buffer 205 is cleared. Note that the map may refer to all of data to be subjected to one-time convolution processing.

As described above, the variable X output from the buffer circuit 201 and the control signal output from the determination circuit 202 are input to the write buffer 206. A head address of a memory region into which non-zero variables X are to be written is also input into the write buffer 206. When a control signal indicating that the variable X is non-zero is input into the write buffer 206 from the determination circuit 202, the write buffer 206 temporarily holds the variable X input from the buffer circuit 201. Then, for example, at a time point when the compression-encoding processing is completed for on one map, a matrix of variables X held, that is, a non-zero variable table Q53, is stored into the memory 51/71 of the pooling processing unit 22/24 at the next stage in order from the head address, for example, according to FIFO control. Thus, the non-zero variable table Q53 is stored in the memory 51/71 as a product-sum operation result. Note that the write buffer 206 may hold an address at which each non-zero variable X is written in synchronization with a value of the non-zero variable X, and then write the non-zero variable X into the memory 51/71 according to the address.

### 5.3 Action and Effect

By arranging the encoding unit 200 as described above at the output stage of each convolution processing unit 21/23/25, it is possible to compression-encode a product-sum result obtained as a convolution processing result, that is, the variable matrix Q14, by sparse expression and write the compression-encoded variable matrix Q14 into the memory. As a result, an amount of data on the memory 51/71 can be reduced.

Other configurations, operations, and effects may be similar to those of the above-described embodiment, and thus, the detailed description thereof will be omitted here.

### 6. Sixth Embodiment

In the fifth embodiment described above, when the variables X are written into the memory 51/71 in a sparsely represented manner, positions of zero coefficients among coefficients W for convolution processing in the next convolution processing unit 23/25 (hereinafter simply referred to as a next layer) are taken into consideration, so that the memory capacity can be further reduced. This is based on the idea that "arithmetic processing on a variable X at a position where a coefficient W is known to be zero in advance from the zero coefficient position table for the next layer can be omitted in the product-sum processing in the next layer, and thus, it is not necessary to write such a variable X into the memory in the current layer". This is also effective in the latter half of a full connection layer in a convolutional neural network (CNN) that refers to variables X in a shifting manner. Therefore, in the sixth embodiment, a configuration capable of omitting writing a variable X at a position where a coefficient W is known to be zero in advance from the zero coefficient position table for the next layer into the memory will be described with an example.

Note that a neural network processing apparatus according to the present embodiment may have a configuration similar to that of the neural network processing apparatus 11 described with reference to FIG. 7, etc. in the fifth embodiment, and thus, the detailed description thereof will be omitted here. Furthermore, in the following description, it is assumed that a variable matrix Q14 to be convolved has the same data length and the same data structure as the coefficient matrix Q11 to be used for convolution processing.

### 6.1 Encoding Unit

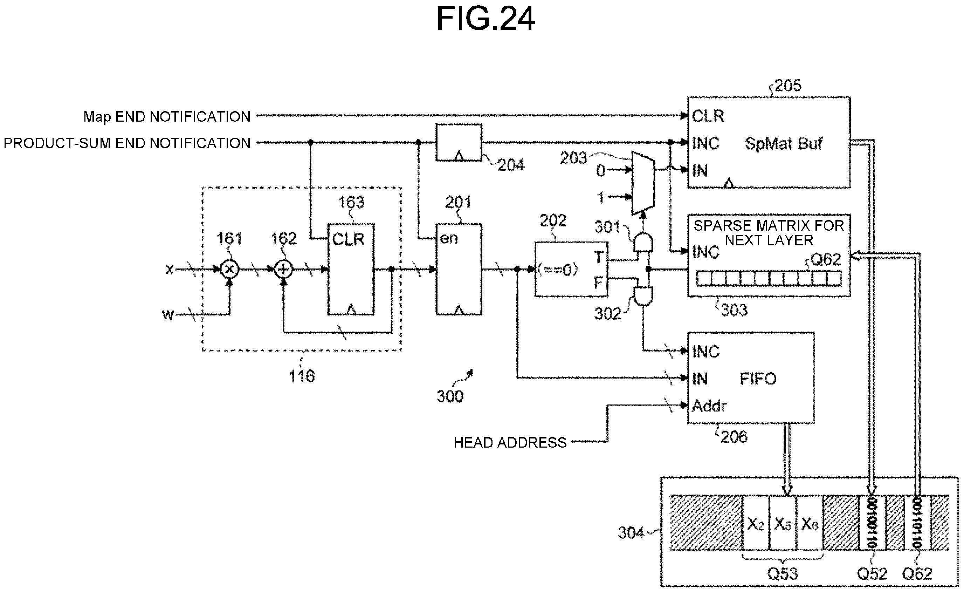

FIG. 24 is a circuit diagram illustrating a schematic configuration example of an encoding unit according to the present embodiment. As illustrated in FIG. 24, an encoding unit 300 according to the present embodiment has a configuration in which two AND circuits 301 and 302 and a register 303 are added to the configuration of the encoding unit 200 described with reference to FIG. 23 in the fifth embodiment. Note that, in order to simplify the description, FIG. 24 illustrates a case where the memories 102 in the convolution units 21, 23, and 25 and the memories 51 and 71 in the pooling processing units 22 and 24 are arranged on a continuous memory region 304.

The register 303 stores a zero coefficient position table Q62 for the next layer read in advance from the memory region 304 (the memory 102 for the next layer). The register 303 outputs the values "0" or "1" constituting the zero coefficient position table Q62 one by one to each of the two AND circuits 301 and 302 according to the transition of the product-sum end notification.

The AND circuit 301 performs a logical product of a control signal "1" indicating that a variable X output from the determination circuit 202 is a zero variable and a value ("0" or "1") indicating whether a coefficient W output from the register 303 is a zero coefficient or a non-zero coefficient, and inputs a result of the logical product to the control terminal of the selector 203.

Meanwhile, the selector 203 outputs "1" when the value input from the AND circuit 301 is "1", that is, when the variable X input from the buffer circuit 201 is a non-zero variable X and the corresponding coefficient W in the coefficient matrix for the next layer is a non-zero coefficient W, and outputs "0" when the value input from the AND circuit 301 is "1", that is, when a value of at least one of the variable X and the coefficient W in the next layer is 0. As a result, a zero variable position table Q52 indicating positions of non-zero variables X is constructed in the sparse matrix buffer (SpMat Buf) 205, the zero variable position table Q52 being effectively utilized in a product-sum operation of the next layer.

The AND circuit 302 performs a logical product of a control signal "1" indicating that a variable X output from the determination circuit 202 is a non-zero variable and a value ("0" or "1") indicating whether a coefficient W output from the register 303 is a zero coefficient or a non-zero coefficient, and inputs a result of the logical product to the write buffer 206.

Meanwhile, when the value input from the AND circuit 302 is "1", that is, when the variable X input from the buffer circuit 201 is a non-zero variable X and the corresponding coefficient W in the coefficient matrix for the next layer is a non-zero coefficient W, the write buffer 206 stores the variable X output from the buffer circuit 201. As a result, a non-zero variable table Q53 including non-zero variables X is constructed in the write buffer 206 or in a memory region 207 (the memory 51/71), the non-zero variable table Q53 being effectively utilized in a product-sum operation of the next layer.

### 6.2 Operation Example

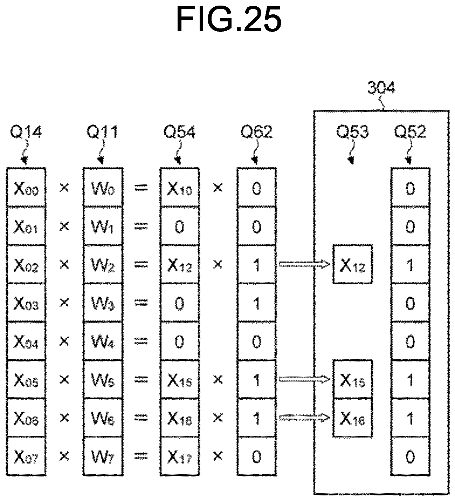

Next, an operation of the encoding unit 300 illustrated in FIG. 24 will be described. FIG. 25 is a diagram for explaining an operation example of the encoding unit illustrated in FIG. 24. Note that, in FIG. 25, for convenience of explanation, a variable X of a currently processed layer (hereinafter referred to as a current layer) is denoted by X₀ₙ (n is a natural number), and a variable X of a next layer is denoted by X₁ₙ. Furthermore, in order to simplify the description, a case where a matrix indicating non-zero positions with respect to a matrix obtained by performing logical products of non-zero values in the zero coefficient position table Q12 of the variable matrix Q14 and the zero variable position table of the coefficient matrix Q11 in the current layer, that is, the variable matrix Q54, is "10100111", while the variable matrix Q14 is not sparsely represented will be exemplified. However, the present disclosure is not limited thereto, and the variable matrix Q14 may be compression-encoded by sparse representation.

As illustrated in FIG. 25, the variable matrix Q54 obtained by multiplying the variable matrix Q14 by the coefficient matrix Q11 in the current layer is output from the product-sum circuit 116. The write buffer 206 illustrated in FIG. 24 writes variables X₁ₙ effective in the next layer into the memory region 304 based on results of logical products of the variables X₁ₙ and corresponding values in the zero coefficient position table Q62 for the next layer output from the AND circuit 302. In addition, the zero variable position table Q52 held in the sparse matrix buffer 205 is also stored in the memory region 304.

### 6.3 Action and Effect

By arranging the encoding unit 300 as described above at the output stage of each convolution processing unit 21/23/25, it is possible to further reduce the data amount of the variable matrix to be written in the memory 51/71.

Other configurations, operations, and effects may be similar to those of the above-described embodiment, and thus, the detailed description thereof will be omitted here.

### 6.4 Modifications

Note that, in a case where there is a plurality of maps to be processed in the next layer, for example, in a case where there is a plurality of zero coefficient position tables Q62 of the next layer to be read, the following modifications can be adopted.

### 6.4.1 First Modification

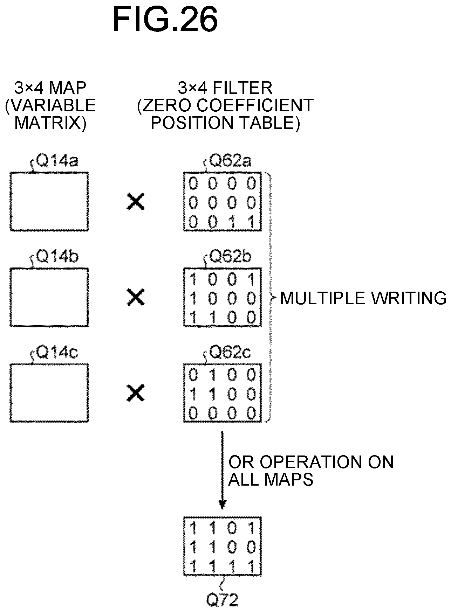

FIG. 26 is a schematic diagram for explaining a first modification. As illustrated in FIG. 26, in a case where data to be processed in each layer includes a plurality of maps (variable matrices Q14a to Q14c), and different filter coefficients (coefficient matrices) are set for the respective maps, it is also possible to use a zero coefficient position table Q72 obtained by calculating a logical sum of zero coefficient position tables Q62a to Q62c for all the maps in the next layer after being registered in the register 303 of FIG. 24.

### 6.4.2 Second Modification

In addition, in a case where data to be processed in each layer includes a plurality of maps (variable matrices Q14a to Q14c), and different filter coefficients (coefficient matrices) are set for the respective maps as in the first modification, it is also possible to register zero coefficient position tables Q62a to Q62c for the respective maps in the next layer in the register 303 of FIG. 24, thereby outputting product-sum operation results for the respective maps in a multiple manner.

### 6.4.3 Third Modification

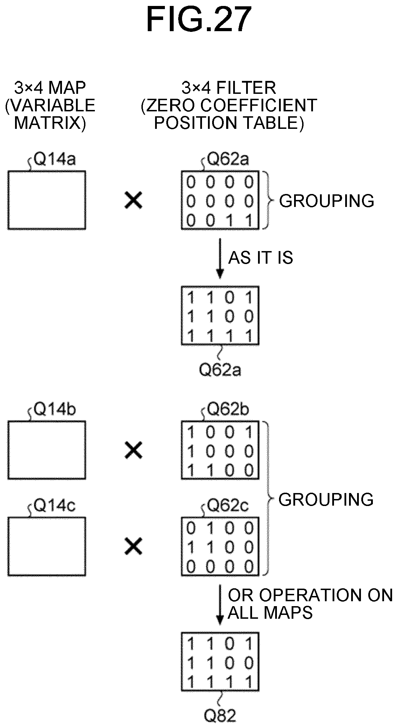

The above-described first and second modifications can be combined. FIG. 27 is a schematic diagram for explaining a third modification in which the first and second modifications are combined. As illustrated in FIG. 27, in the third modification, the plurality of filter coefficients (coefficient matrices) for the next layer are grouped into a plurality of groups, and a logical sum of zero coefficient position tables is calculated for each group. In the example illustrated in FIG. 27, a zero coefficient position table Q82b is generated by calculating a logical sum of the grouped coefficient matrices Q62b and Q62c, and is registered in the register 303. However, when there is only one zero coefficient position table Q62a in a group, the zero coefficient position table Q62a may be registered in the register 303 as it is.

### 7. Application Example of Present Technology

Next, the application of the neural network processing apparatus 11 according to the above-described embodiment will be described with some examples.

### 7.1 First Application Example

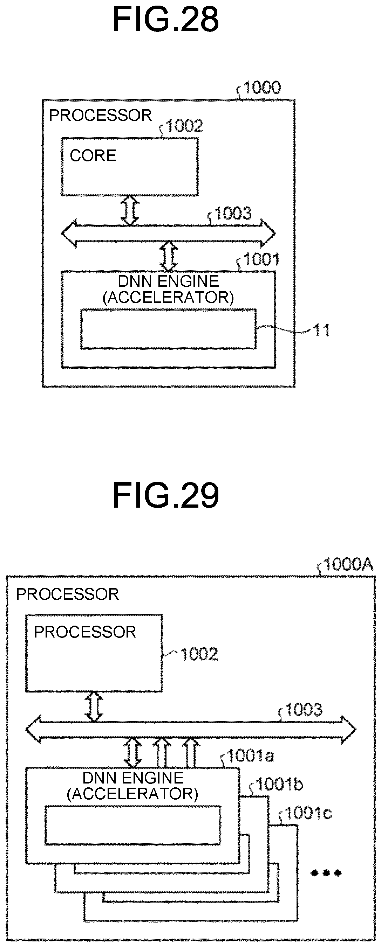

FIG. 28 is a diagram for explaining a first application example. As illustrated in FIG. 28, in the first application example, the neural network processing apparatus 11 is configured as a DNN engine (accelerator) 1001 incorporated in an information processing apparatus (also referred to as a processor) 1000. The DNN engine 1001 is connected to a processor core (also simply referred to as a core) 1002 via a bus 1003 in the information processing apparatus 1000. As a result, it is possible to implement processing in which the processor core 1002 and the DNN engine 1001 closely cooperate with each other.

Furthermore, as in an information processing apparatus 1000A illustrated in FIG. 29, a plurality of DNN engines 1001a, 1001b, 1001c, ... may be connected to one processor core 1002 via a bus 1003.

### 7.2 Second Application Example

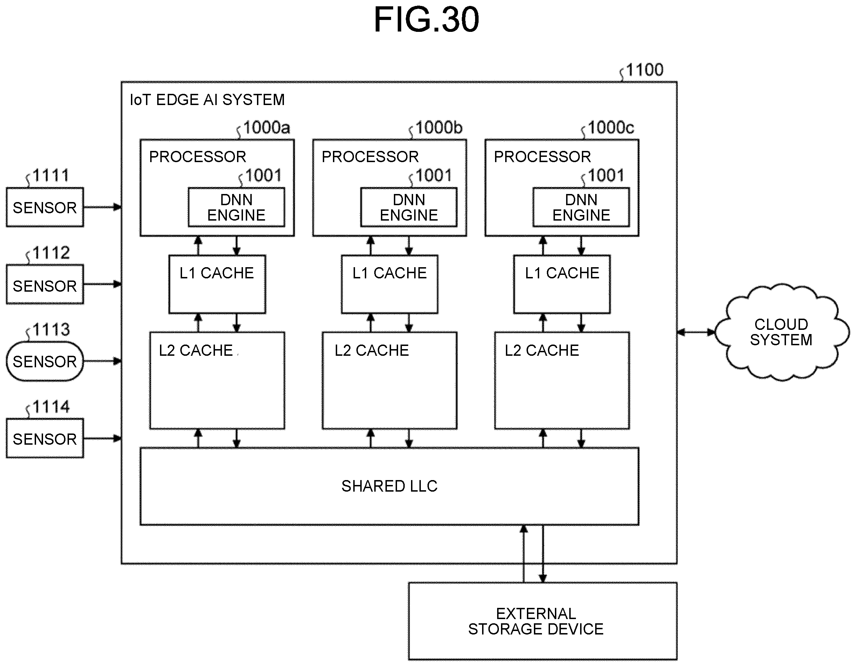

FIG. 30 is a block diagram illustrating a schematic configuration example of an Internet of Things (IoT) edge artificial intelligence (AI) system (also referred to as an information processing system) according to a second application example. As illustrated in FIG. 30, the information processing apparatuses 1000a to 1000c, each being equipped with the neural network processing apparatus 11 according to the first application example, may be incorporated in the IoT edge AI system 1100 connected to various sensors 1111 to 1114 mounted on various things in a wireless or wired manner.

### 7.3 Third Application Example

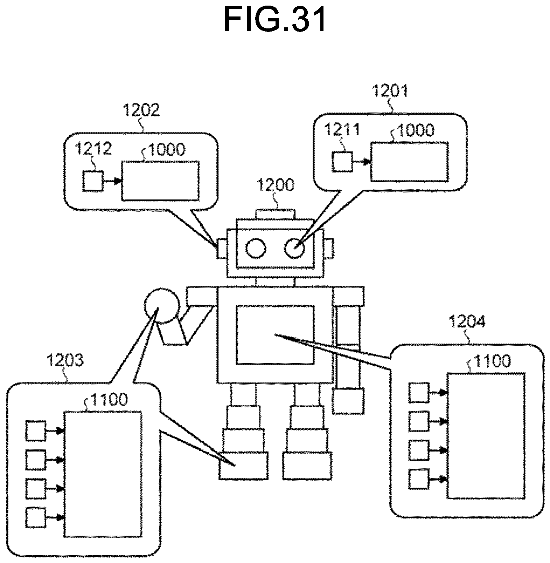

FIG. 31 is a schematic diagram illustrating a schematic configuration example of an autonomous robot as one of electronic devices according to a third application example. As illustrated in FIG. 31, the information processing apparatus 1000 according to the first application example can be applied to, for example, a processing unit 1201 that processes data acquired by an image sensor 1211 corresponding to an eye, and a processing unit 1202 that processes data acquired by a microphone 1212 corresponding to an ear in the autonomous robot 1200. Furthermore, the IoT edge AI system 1100 according to the second modification can be applied to a processing unit 1203 that processes information obtained by various sensors mounted on an arm and a leg of the autonomous robot 1200. Furthermore, the IoT edge AI system 1100 according to the second modification can also be applied to a control unit 1204 that controls the autonomous robot 1200 overall.

Note that, in a case where the information processing apparatus 1000 is applied to the processing unit 1201 that processes data acquired by the image sensor 1211, a chip of the image sensor 1211 and a chip of the information processing apparatus 1000 may be bonded to each other in a laminated structure.

### 7.4 Fourth Application Example

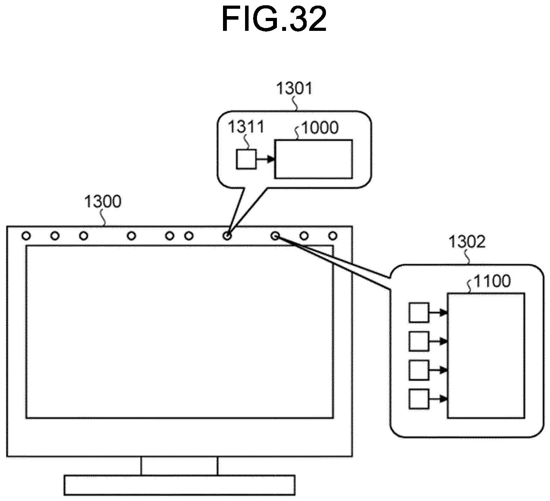

FIG. 32 is a schematic diagram illustrating a schematic configuration example of a television as one of electronic devices according to a fourth application example. As illustrated in FIG. 32, the information processing apparatus 1000 according to the first application example and the IoT edge AI system 1100 according to the second application example can be applied to a subsystem for recognizing environments in a space (a room or the like) where a television 1300 is installed.

The information processing apparatus 1000 according to the first application example can be applied to, for example, a processing unit 1301 that processes data acquired by an image sensor 1311 that captures an image around the television 1300, and a processing unit 1302 that processes data acquired by a sensor that acquires a situation around the television 1300, e.g., a time-of-flight (ToF) sensor, an ultrasonic sensor, a low-resolution camera, or a microphone array.

Note that, in a case where the information processing apparatus 1000 is applied to the processing unit 1301 that processes data acquired by the image sensor 1311, a chip of the image sensor 1211 and a chip of the information processing apparatus 1000 may be bonded to each other in a laminated structure.

### 8. Configuration Example of Computer

Meanwhile, a series of processes according to the above-described embodiments can be executed by hardware or by software. In a case where the series of processes are executed by software, a program configuring the software is installed in a computer. Here, the computer includes a computer incorporated in dedicated hardware, a computer capable of executing various functions by installing various programs therein, e.g., a general-purpose personal computer, or the like.

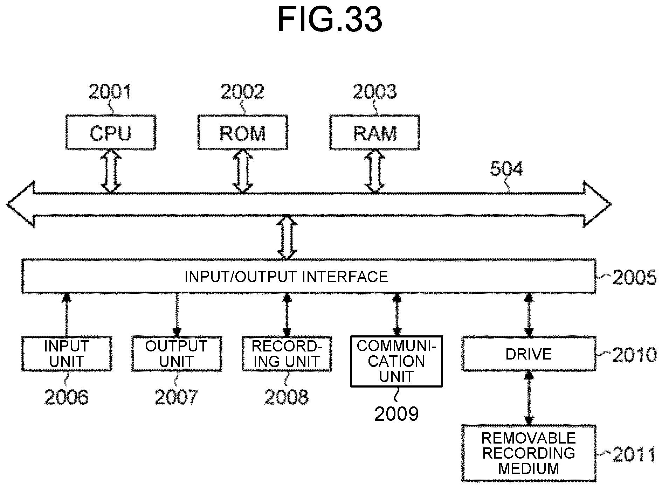

FIG. 33 is a block diagram illustrating a configuration example of hardware of a computer that executes the above-described series of processes using a program.

In the computer, a central processing unit (CPU) 2001, a read only memory (ROM) 2002, and a random access memory (RAM) 2003 are connected to each other by a bus 2004.

An input/output interface 2005 is further connected to the bus 2004. An input unit 2006, an output unit 2007, a recording unit 2008, a communication unit 2009, and a drive 2010 are connected to the input/output interface 2005.

The input unit 2006 includes a keyboard, a mouse, a microphone, an imaging element, and the like. The output unit 2007 includes a display, a speaker, and the like. The recording unit 2008 includes a hard disk, a nonvolatile memory, and the like. The communication unit 2009 includes a network interface and the like. The drive 2010 drives a removable recording medium 2011 such as a magnetic disk, an optical disk, a magneto-optical disk, or a semiconductor memory.

In the computer configured as described above, the CPU 2001 loads a program recorded, for example, in the recording unit 2008 into the RAM 2003 via the input/output interface 2005 and the bus 2004 and executes the program, so that the above-described series of processes are performed.

The program executed by the computer (the CPU 2001) can be provided after being recorded, for example, in the removable recording medium 2011 as a package medium or the like. Alternatively, the program can also be provided via a wired or wireless transmission medium such as a local area network, the Internet, or digital satellite broadcasting.

In the computer, the program can be installed in the recording unit 2008 via the input/output interface 2005 by attaching the removable recording medium 2011 to the drive 2010. Alternatively, the program can be received by the communication unit 2009 via the wired or wireless transmission medium and installed in the recording unit 2008. Alternatively, the program can be installed in the ROM 2002 or the recording unit 2008 in advance.

Note that the program executed by the computer may be a program enabling the processes to be performed in time series according to the order described in the present specification, or may be a program enabling the processes to be performed in parallel or at a necessary timing such as when a call is made.

Furthermore, the above-described embodiments are not limited to the above-described embodiments, and various modifications can be made without departing from the gist of the present technology.

For example, the present technology can have a cloud computing configuration in which one function is shared and processed by a plurality of devices in cooperation with each other via a network.

In addition, each of the steps described in the above-described flowcharts can be executed by one device, or can be shared and executed by a plurality of devices.

In a case where a plurality of processes is included in one step, the plurality of processes included in the one step can be executed by one device, or can be shared and executed by a plurality of devices.

Although the embodiments of the present disclosure have been described above, the technical scope of the present disclosure is not limited to each of the above-described embodiments as it is, and various modifications can be made without departing from the gist of the present disclosure. In addition, components in the different embodiments and modifications may be appropriately combined.

Furthermore, the effects of each of the embodiments described in the present specification are merely exemplary and are not restrictive, and each of the embodiments described in the present specification may have other effects.

In addition, the present technology can have the following configurations.
(1) A neural network processing apparatus including:
   a decoding unit that decodes a first coefficient matrix encoded into a first zero coefficient position table and a first non-zero coefficient table, the first zero coefficient position table indicating positions of first coefficients each having a zero value in the first coefficient matrix by a first value and indicating positions of second coefficients each having a non-zero value in the first coefficient matrix by a second value, the first non-zero coefficient table holding the second coefficients in the first coefficient matrix; and
   a product-sum circuit that performs convolution processing on the first coefficient matrix decoded by the decoding unit and a first variable matrix,
   wherein the decoding unit decodes the first coefficient matrix by storing the second coefficients stored in the first non-zero coefficient table at the positions on the first zero coefficient position table indicated by the second value.
(2) The neural network processing apparatus according to (1), wherein the decoding unit includes:
   a selector that outputs a zero when a value input to a control terminal is the first value, and outputs one of the second coefficients corresponding to one of the positions on the first zero coefficient position table indicated by the second value when a value input to the control terminal is the second value; and
   a product-sum device that restores the first coefficient matrix by arranging the zeros and the second coefficients input from the selector, and
   the decoding unit sequentially inputs values constituting the first zero coefficient position table to the selector.
(3) The neural network processing apparatus according to (2),
   wherein when sequentially inputting values constituting the first zero coefficient position table to the selector, the decoding unit acquires variables stored at positions on the first variable matrix corresponding to the positions of the values to be input to the selector on the first zero coefficient position table.
(4) The neural network processing apparatus according to (1),
   wherein the decoding unit acquires the second coefficients corresponding to the positions on the first zero coefficient position table indicated by the second value, acquires variables stored at positions on the first variable matrix corresponding to the positions on the first zero coefficient position table indicated by the second value, and inputs the acquired second coefficients and the acquired variables to the product-sum circuit, and
   the product-sum circuit performs the convolution processing on the first coefficient matrix and the first variable matrix by sequentially multiplying the second coefficients and the variables input from the decoding unit and adding up multiplication results.
(5) The neural network processing apparatus according to (4),
   wherein the decoding unit includes a priority encoder having a plurality of inputs for which priorities are set, respectively, and outputs a value set to an input having the highest priority among one or more inputs to which the second value is input, and
   the decoding unit inputs values constituting the first zero coefficient position table to the plurality of inputs in parallel, and acquires one of the second coefficients from the first non-zero coefficient table based on the value output from the priority encoder with respect to the plurality of inputs.
(6) The neural network processing apparatus according to (1),
   wherein the first variable matrix is encoded into a first zero variable position table and a non-zero variable table, the first zero variable position table indicating positions of first variables each having a zero value in the first variable matrix by the first value and indicating positions of second variables each having a non-zero value in the first variable matrix by the second value, the non-zero variable table holding the second variables in the first variable matrix, and
   the decoding unit performs logical operations on values constituting the first zero coefficient position table and values constituting the first zero variable position table, acquires the second coefficients and the second variables, which do not produce zero when multiplied based on results of the logical operations, from the first non-zero coefficient table and the non-zero variable table, respectively, and inputs the acquired second coefficients and the acquired second variables to the product-sum circuit.
(7) The neural network processing apparatus according to (6),
   wherein the decoding unit includes a priority encoder having a plurality of inputs for which priorities are set, respectively, and outputs a value set to an input having the highest priority among one or more inputs to which the second value is input,
   the decoding unit inputs values constituting the first zero coefficient position table to the plurality of inputs in parallel, and acquires one of the second coefficients from the first non-zero coefficient table based on the value output from the priority encoder with respect to the plurality of inputs, and
   the decoding unit inputs values constituting the first zero variable position table to the plurality of inputs in parallel, and acquires one of the second variables from the non-zero variable table based on the value output from the priority encoder with respect to the plurality of inputs.
(8) The neural network processing apparatus according to any one of (1) to (7), further including:
   an encoding unit that encodes a second variable matrix output from the product-sum circuit into a second zero variable position table and a second non-zero coefficient table, the second zero variable position table indicating positions of first variables each having a zero value in the second variable matrix by the first value and indicating positions of second variables each having a non-zero value in the second variable matrix by the second value, the second non-zero coefficient table holding the second coefficients in the second variable matrix.
(9) The neural network processing apparatus according to (8),
   wherein the encoding unit includes:
   a determination circuit that determines whether or not a value input thereto is zero;
   a first buffer that stores the first value when the determination circuit determines that the value is zero, and stores the second value when the determination circuit determines that the value is not zero; and
   a second buffer that stores the second variable when the determination circuit determines that the value is not zero, and
   the encoding unit sequentially inputs variables constituting the second variable matrix to the determination circuit.
(10) The neural network processing apparatus according to (9),
   wherein the encoding unit further includes a register that stores a second zero coefficient position table to be used for convolution processing in a next layer,
   when a value stored at a position on the second zero coefficient position table corresponding to a position on the second variable matrix of a variable determined to be non-zero by the determination circuit is the first value, the first buffer stores the first value instead of the second value, and
   when a value stored at a position on the second zero coefficient position table corresponding to a position on the second variable matrix of a variable determined to be non-zero by the determination circuit is the first value, the second buffer does not store the variable.
(11) The neural network processing apparatus according to (10), wherein the register stores a third zero coefficient position table obtained by calculating a logical sum of a plurality of second zero coefficient position tables to be used for the convolution processing in the next layer.
(12) The neural network processing apparatus according to (10),
   wherein the register stores the plurality of second zero coefficient position tables to be used for the convolution processing in the next layer.
(13) The neural network processing apparatus according to (10),
   wherein the plurality of second zero coefficient position tables to be used for the convolution processing in the next layer are grouped into one or more groups, and
   the register stores a third zero coefficient position table obtained by calculating a logical sum of the second zero coefficient position tables for each of the groups.
(14) An information processing apparatus including:
   the neural network processing apparatus according to any one of (1) to (13); and
   a processor core connected to the neural network processing apparatus via a bus.
(15) An information processing system including:
   the information processing apparatus according to claim 14; and
   one or more sensors connected to the information processing apparatus.
(16) An electronic device including the information processing apparatus according to (14).
(17) A neural network processing method including:
   decoding a coefficient matrix encoded into a zero coefficient position table and a non-zero coefficient table, the zero coefficient position table indicating positions of first coefficients each having a zero value in the coefficient matrix by a first value and indicating positions of second coefficients each having a non-zero value in the coefficient matrix by a second value, the non-zero coefficient table holding the second coefficients in the coefficient matrix; and
   performing convolution processing on the decoded coefficient matrix and a variable matrix,
   wherein the coefficient matrix is decoded by storing the second coefficients stored in the non-zero coefficient table at the positions on the zero coefficient position table indicated by the second value.
(18) A program for causing a computer to execute:
   decoding processing for decoding a coefficient matrix encoded into a zero coefficient position table and a non-zero coefficient table, the zero coefficient position table indicating positions of first coefficients each having a zero value in the coefficient matrix by a first value and indicating positions of second coefficients each having a non-zero value in the coefficient matrix by a second value, the non-zero coefficient table holding the second coefficients in the coefficient matrix; and
   product-sum processing for performing convolution processing on the coefficient matrix decoded by the decoding processing and a variable matrix,
   wherein, in the decoding processing, the coefficient matrix is decoded by storing the second coefficients stored in the non-zero coefficient table at the positions on the zero coefficient position table indicated by the second value.

### Reference Signs List

11 NEURAL NETWORK PROCESSING APPARATUS
21, 23, 25 CONVOLUTION PROCESSING UNIT
22, 24 POOLING PROCESSING UNIT
41, 61, 81, 101 DECODING UNIT
42, 51, 62, 71, 82, 102 MEMORY
43, 63, 83, 103 COEFFICIENT HOLDING UNIT
104 PRIORITY ENCODER
111, 111a, 111b ADDRESS GENERATION UNIT
112, 203 SELECTOR
113 PRODUCT-SUM DEVICE
114 COEFFICIENT BUFFER
115 VARIABLE BUFFER
116 PRODUCT-SUM CIRCUIT
200, 300 ENCODING UNIT
201 BUFFER CIRCUIT
202 DETERMINATION CIRCUIT
204 DELAY CIRCUIT
205 SPARSE MATRIX BUFFER
206 WRITE BUFFER
301, 302 AND CIRCUIT
303 REGISTER
304 MEMORY REGION
1000, 1000A, 1000a, 1000b, 1000c INFORMATION PROCESSING APPARATUS (PROCESSOR)
1001, 1001a, 1001b, 1001c DNN ENGINE (ACCELERATOR)
1002 PROCESSOR CORE
1003 BUS
1100 IOT EDGE AI SYSTEM
1111 to 1114 SENSOR
1200 AUTONOMOUS ROBOT
1211 IMAGE SENSOR
1212 MICROPHONE
1201, 1202, 1203, 1301, 1302 PROCESSING UNIT
1204 CONTROL UNIT
1300 TELEVISION

## Claims

1. A neural network processing apparatus including:
a decoding unit that decodes a first coefficient matrix encoded into a first zero coefficient position table and a first non-zero coefficient table, the first zero coefficient position table indicating positions of first coefficients each having a zero value in the first coefficient matrix by a first value and indicating positions of second coefficients each having a non-zero value in the first coefficient matrix by a second value, the first non-zero coefficient table holding the second coefficients in the first coefficient matrix; and
a product-sum circuit that performs convolution processing on the first coefficient matrix decoded by the decoding unit and a first variable matrix,
wherein the decoding unit decodes the first coefficient matrix by storing the second coefficients stored in the first non-zero coefficient table at the positions on the first zero coefficient position table indicated by the second value.

2. The neural network processing apparatus according to claim 1,
wherein the decoding unit includes:
a selector that outputs a zero when a value input to a control terminal is the first value, and outputs one of the second coefficients corresponding to one of the positions on the first zero coefficient position table indicated by the second value when a value input to the control terminal is the second value; and
a product-sum device that restores the first coefficient matrix by arranging the zeros and the second coefficients input from the selector, and
the decoding unit sequentially inputs values constituting the first zero coefficient position table to the selector.

3. The neural network processing apparatus according to claim 2,
wherein when sequentially inputting values constituting the first zero coefficient position table to the selector, the decoding unit acquires variables stored at positions on the first variable matrix corresponding to the positions of the values to be input to the selector on the first zero coefficient position table.

4. The neural network processing apparatus according to claim 1,
wherein the decoding unit acquires the second coefficients corresponding to the positions on the first zero coefficient position table indicated by the second value, acquires variables stored at positions on the first variable matrix corresponding to the positions on the first zero coefficient position table indicated by the second value, and inputs the acquired second coefficients and the acquired variables to the product-sum circuit, and
the product-sum circuit performs the convolution processing on the first coefficient matrix and the first variable matrix by sequentially multiplying the second coefficients and the variables input from the decoding unit and adding up multiplication results.

5. The neural network processing apparatus according to claim 4,
wherein the decoding unit includes a priority encoder having a plurality of inputs for which priorities are set, respectively, and outputs a value set to an input having the highest priority among one or more inputs to which the second value is input, and
the decoding unit inputs values constituting the first zero coefficient position table to the plurality of inputs in parallel, and acquires one of the second coefficients from the first non-zero coefficient table based on the value output from the priority encoder with respect to the plurality of inputs.

6. The neural network processing apparatus according to claim 1,
wherein the first variable matrix is encoded into a first zero variable position table and a non-zero variable table, the first zero variable position table indicating positions of first variables each having a zero value in the first variable matrix by the first value and indicating positions of second variables each having a non-zero value in the first variable matrix by the second value, the non-zero variable table holding the second variables in the first variable matrix, and
the decoding unit performs logical operations on values constituting the first zero coefficient position table and values constituting the first zero variable position table, acquires the second coefficients and the second variables, which do not produce zero when multiplied based on results of the logical operations, from the first non-zero coefficient table and the non-zero variable table, respectively, and inputs the acquired second coefficients and the acquired second variables to the product-sum circuit.

7. The neural network processing apparatus according to claim 6,
wherein the decoding unit includes a priority encoder having a plurality of inputs for which priorities are set, respectively, and outputs a value set to an input having the highest priority among one or more inputs to which the second value is input,
the decoding unit inputs values constituting the first zero coefficient position table to the plurality of inputs in parallel, and acquires one of the second coefficients from the first non-zero coefficient table based on the value output from the priority encoder with respect to the plurality of inputs, and
the decoding unit inputs values constituting the first zero variable position table to the plurality of inputs in parallel, and acquires one of the second variables from the non-zero variable table based on the value output from the priority encoder with respect to the plurality of inputs.

8. The neural network processing apparatus according to claim 1, further including:
an encoding unit that encodes a second variable matrix output from the product-sum circuit into a second zero variable position table and a second non-zero coefficient table, the second zero variable position table indicating positions of first variables each having a zero value in the second variable matrix by the first value and indicating positions of second variables each having a non-zero value in the second variable matrix by the second value, the second non-zero coefficient table holding the second coefficients in the second variable matrix.

9. The neural network processing apparatus according to claim 8,
wherein the encoding unit includes:
a determination circuit that determines whether or not a value input thereto is zero;
a first buffer that stores the first value when the determination circuit determines that the value is zero, and stores the second value when the determination circuit determines that the value is not zero; and
a second buffer that stores the second variable when the determination circuit determines that the value is not zero, and
the encoding unit sequentially inputs variables constituting the second variable matrix to the determination circuit.

10. The neural network processing apparatus according to claim 9,
wherein the encoding unit further includes a register that stores a second zero coefficient position table to be used for convolution processing in a next layer,
when a value stored at a position on the second zero coefficient position table corresponding to a position on the second variable matrix of a variable determined to be non-zero by the determination circuit is the first value, the first buffer stores the first value instead of the second value, and
when a value stored at a position on the second zero coefficient position table corresponding to a position on the second variable matrix of a variable determined to be non-zero by the determination circuit is the first value, the second buffer does not store the variable.

11. The neural network processing apparatus according to claim 10,
wherein the register stores a third zero coefficient position table obtained by calculating a logical sum of a plurality of second zero coefficient position tables to be used for the convolution processing in the next layer.

12. The neural network processing apparatus according to claim 10,
wherein the register stores the plurality of second zero coefficient position tables to be used for the convolution processing in the next layer.

13. The neural network processing apparatus according to claim 10,
wherein the plurality of second zero coefficient position tables to be used for the convolution processing in the next layer are grouped into one or more groups, and
the register stores a third zero coefficient position table obtained by calculating a logical sum of the second zero coefficient position tables for each of the groups.

14. An information processing apparatus including:
the neural network processing apparatus according to claim 1; and
a processor core connected to the neural network processing apparatus via a bus.

15. An information processing system including:
the information processing apparatus according to claim 14; and
one or more sensors connected to the information processing apparatus.

16. An electronic device including the information processing apparatus according to claim 14.

17. A neural network processing method including:
decoding a coefficient matrix encoded into a zero coefficient position table and a non-zero coefficient table, the zero coefficient position table indicating positions of first coefficients each having a zero value in the coefficient matrix by a first value and indicating positions of second coefficients each having a non-zero value in the coefficient matrix by a second value, the non-zero coefficient table holding the second coefficients in the coefficient matrix; and
performing convolution processing on the decoded coefficient matrix and a variable matrix,
wherein the coefficient matrix is decoded by storing the second coefficients stored in the non-zero coefficient table at the positions on the zero coefficient position table indicated by the second value.

18. A program for causing a computer to execute:
decoding processing for decoding a coefficient matrix encoded into a zero coefficient position table and a non-zero coefficient table, the zero coefficient position table indicating positions of first coefficients each having a zero value in the coefficient matrix by a first value and indicating positions of second coefficients each having a non-zero value in the coefficient matrix by a second value, the non-zero coefficient table holding the second coefficients in the coefficient matrix; and
product-sum processing for performing convolution processing on the coefficient matrix decoded by the decoding processing and a variable matrix,
wherein, in the decoding processing, the coefficient matrix is decoded by storing the second coefficients stored in the non-zero coefficient table at the positions on the zero coefficient position table indicated by the second value.
